# EUROPEAN PATENT APPLICATION

(11) **EP 2 523 191 A2**
(43) Date of publication of application: **14.11.2012**
(21) Application number: 12005642.9
(22) Date of filing: 20.07.2010
(51) Int. Cl.: G11B 7/007, G11B 7/24

(54) **nfomation recording medium, recording/reproducing device, recording/reproducing device control method, recording/reproducing device control program, and computer readable recording medium**

(30) Priority: 17.07.2009 JP 2009169579; 25.09.2009 JP 2009221459; 20.07.2010 JP 2010163334; 20.07.2010 JP 2010163335
(62) Divisional of application: 10799948.4
(71) Applicant: Sharp Kabushiki Kaisha, Osaka-shi, Osaka 545-8522 (JP)
(72) Inventor: Arimoto, Takashi, Abeno-ku Osaka-shi, Osaka 545-8522 (JP); Mori, Go, Abeno-ku Osaka-shi, Osaka 545-8522 (JP); Nakajima, Junsaku, Abeno-ku Osaka-shi, Osaka 545-8522 (JP); Maeda, Shigemi, Abeno-ku Osaka-shi, Osaka 545-8522 (JP)
(74) Representative: Müller - Hoffmann & Partner

(57) **Abstract**

Disclosed is an information recording medium which, when inserted into a recording/reproducing device, can be run in an updated state intended by a disc supplier since a recordable layer can be specified as a layer to be run first. For example, in an optical disc including an L1 layer which is a read-only recording layer and an L0 layer which is a recordable layer, layer specifying information for specifying the L0 layer in priority to the L1 layer is recorded as an information recording layer to be run first when the optical disc is inserted into the optical disc device which carries out recording or reproduction of information with respect to the optical disc.

## Description

### Technical Field

The present invention relates to, for example, a recording/reproducing device (an information recording/reproducing device) which carries out recording and/or reproduction of information with respect to a multilayer information recording medium having a plurality of information recording layers that are different in recording characteristic. The present invention also relates to, for example, an information recording medium which (i) has a plurality of information recording layers that are different in recording characteristic and (ii) allows the information recording medium to be run in an updated state intended by a disc supplier.

### Background Art

An information recording medium has recently been required to have a larger storage capacity so as to process a huge amount of information such as an image.

A method for increasing a storage capacity of an information recording medium may be exemplified by multilayering of information recording layers of the information recording medium. For example, multilayer information recording media such as a DVD (Digital Versatile Disc) and a BD (Blu-ray Disc: Registered Trademark) each having up to two information recording layers have been standardized and sold.

Alternatively, there exists a multilayer information recording medium in which information recording layers that are different in format (standard) (e.g., an information recording layer that complies with a DVD standard and an information layer that complies with an HD DVD standard) are contained in one (1) disc by, for example, changing depths of the information recording layers. For example, Patent Literature 4 discloses such a multilayer information recording medium.

Specifically, a recording/reproducing device of Patent Literature 4 is arranged to change, in accordance with a format of an information recording layer, a boot sequence for reading out information from a multilayer information recording medium (a hybrid disc) having a plurality of information recording layers that comply with different formats. According to the arrangement, for example, a user can set a default format layer so as to reproduce content recorded in the hybrid disc. This can reduce time required to access a different format layer.

In order to enhance security of an OS (Operating System), an application, and the like and/or to upgrade these to easier-to-use ones, there have recently been more opportunities to frequently install updated information and the like by use of the Internet or the like.

Further, an optical information recording medium such as an optical disc recently has a larger storage capacity. For example, video/voice data of approximately 200 minutes can be recorded in one (1) DVD-ROM (Digital Versatile Disc - Read Only Memory). An optical disc is expected to have an increasingly larger storage capacity along with the appearance of a Blu-ray Disc (Registered Trademark) and the like and to allow video/voice data of as long as several tens of hours to be recorded in one (1) optical disc.

Against a backdrop of this, a technique has been developed for recording updated information in an optical information recording medium such as an optical disc which has a larger storage capacity, so as to constantly update the optical information recording medium to the latest version. For example, Patent Literatures 1 and 2 disclose such techniques.

Specifically, a recording medium system (a DVD system) of Patent Literature 1 includes a read-only region (hereinafter also referred to as a "ROM region") and a recordable region (hereinafter also referred to as an "RE region" for description). The recording medium system records basic data in the ROM region and writes, in the RE region, added/updated/deleted information received via a network. The DVD system reads out data recorded in the ROM region and the RE region and causes the data to be associated and synchronize with each other, so that the ROM region and the RE region can be read out as in the case of readout of the latest version of a DVD disc. This allows a DVD disc to be constantly used as its latest version.

According to a method disclosed in Patent Literature 2 for accessing electronic content on a network, a user access a database of a content supplier on the network by use of an authentication hybrid optical disc provided with an identification signature or encrypted information, so that obtained content is stored in an RE region of the optical disc. This makes it possible to access information on a network with safety and convenience and store obtained latest information in the RE region.

Alternatively, Patent Literature 3 discloses a method for managing obtained updated information and the like. Specifically, a disc recording device of Patent Literature 3 provides an RE region with a file management region while being formatted, transfers file management information recorded in a ROM region to the RE region, and updates the file management information every time the file management information is recorded in the RE region. According to this, data files recorded in the ROM region and the RE region are integratedly managed, which facilitates management of obtained information.

### Citation List

### Patent Literatures

Patent Literature 1
   Japanese Patent Application Publication, Tokukaihei, No. 11-144322 A (Publication Date: May 28, 1999)
Patent Literature 2
   Japanese Patent Application Publication, Tokukai, No. 2003-100013 A (Publication Date: April 4, 2003)
Patent Literature 3
   Japanese Patent Application Publication, Tokukaihei, No. 7-182218 A (Publication Date: July 21, 1995)
Patent Literature 4
   Japanese Patent Application Publication, Tokukai, No. 2008-293592 A (Publication Date: December 4, 2008)

### Summary of Invention

### Technical Problem

However, though the technique of Patent Literature 4 is used to determine with which format an information recording layer of information recording layers that are different in format complies, the technique of Patent Literature 4 gives no consideration to a boot sequence of an information recording medium of a single format (e.g., a BD). Namely, according to the technique of Patent Literature 4, it is impossible to selectively specify which of information recording layers in the specified format to be run first.

Therefore, according to the technique of Patent Literature 4, even if an information recording medium of a single format is inserted into a recording/reproducing device, it may be impossible to (i) access an information recording layer which a disc supplier (a manufacturer) or a user desires to run first and (ii) run a desired application when the information recording medium is inserted into the recording/ reproducing device.

The present invention has been made in view of the problems, and an object of the present invention is to provide an information recording medium in which an information recording layer that a disc supplier or a user desires to run can be run when the information recording medium is inserted into a recording/ reproducing device since a layer to be run first can be specified when the information recording medium is inserted into the recording/reproducing device, a recording/reproducing device, a recording/reproducing device control method, a recording/reproducing device control program, and a computer-readable recording medium.

The technique of Patent Literature 2 is based on the assumption that a network connection is made for authentication and content browse and display. In addition, according to the technique of Patent Literature 2, since a ROM region is run first, signals frequently come and go between the ROM region and the RE region. Further, since the disc is used for authentication and content itself are not recorded in a medium, it takes much time to download content. This is inconvenient for the user.

According to Patent Literatures 1 and 3, the ROM region and the RE region are provided in an identical layer, and data files recorded therein are integratedly managed. Therefore, according to Patent Literatures 1 and 3, in a case where information recording layers are multilayered and the ROM region and the RE region are provided in different layers, it is difficult to integratedly manage data file recorded in the different layers.

Note that a Patent Literature concerning an optical recording medium in which information recording layers are multilayered is exemplified by Patent Literature 4. Patent Literature 4 discloses the arrangement such that in accordance with a format of an information recording layer, a boot sequence is changed for reading out information from a multilayer information recording medium (a hybrid disc) having a plurality of information recording layers that comply with different formats. According to the arrangement, for example, a user can set a default format layer so as to reproduce content recorded in the hybrid disc. This can reduce time required to access a different format layer.

Note that multilayering of information recording layers of an information recording medium has been designed as a method for increasing a storage capacity of the information recording medium. For example, multilayer information recording media such as a DVD (Digital Versatile Disc) and a BD (Blu-ray Disc: Registered Trademark) each having up to two information recording layers have been standardized and sold. Alternatively, there exists a multilayer information recording medium in which information recording layers that are different in format (standard) (e.g., an information recording layer that complies with a DVD standard and an information layer that complies with an HD DVD standard) are contained in one (1) disc by, for example, changing depths of the information recording layers.

However, though the technique of Patent Literature 4 is used to determine with which format an information recording layer of information recording layers that are different in format complies, the technique of Patent Literature 4 gives no consideration to a boot sequence of an information recording medium of a single format (e.g., a BD). Namely, according to the technique of Patent Literature 4, it is impossible to selectively specify which of information recording layers in the specified format to be run first.

Therefore, according to the technique of Patent Literature 4, even if an information recording medium of a single format is inserted into a recording/reproducing device, it may be impossible to (i) access an information recording layer which a disc supplier (a manufacturer) or a user desires to run first and (ii) run a desired application when the information recording medium is inserted into the recording/reproducing device.

The present invention has been made in view of the problems, and an object of the present invention is to provide an information recording medium which, when inserted into a recording/ reproducing device, can be run in an updated state intended by a disc supplier since in priority to an information recording layer which allows only readout of information therefrom, an information recording layer which allows additional recording of information therein or rewriting of information thereto is specified as an information recording layer to be run first, a recording/reproducing device, a recording/reproducing device control method, a recording/reproducing device control program, and a computer-readable recording medium.

### Solution to Problem

In order to attain the object, an information recording medium in accordance with the present invention has a plurality of information recording layers, layer specifying information being recorded in the information recording medium, the layer specifying information being information for specifying an information recording layer to be run first when the information recording medium is inserted into a recording/reproducing device which carries out recording or reproduction of information with respect to the information recording medium.

The arrangement makes it possible to preliminarily record, in the information recording medium, information for specifying which of the plurality of information recording layers of the information recording medium is an information recording layer (a running layer) to be run first when the information recording medium is inserted into the recording/reproducing device. Further, since the disc supplier can record the layer specifying information for each information recording medium, an information recording layer intended by the disc supplier can be run first when the information recording medium is inserted into the recording/reproducing device. This means that it is possible for the disc supplier to cause a function desired by the disc supplier to operate earlier.

In addition, for example, in a case where the layer specifying information in accordance with an instruction from the user is recorded, an information recording layer which the user desires to run first can be specified. Namely, in this case, an information recording layer intended by the user can be run first. This means that it is possible for the user to cause a function desired by the user to operate earlier.

According to this, when the information recording medium is inserted into the recording/reproducing device, the information recording medium allows specification of the information recording layer to be run first. Therefore, the information recording layer that the disc supplier or the user desires to run can be run when the information recording medium is inserted into the recording/reproducing device.

Therefore, according to the information recording medium in accordance with the present invention, an information recording layer intended by at least the disc supplier can be run when the information recording medium is inserted into the recording/reproducing device. This means that it is possible for at least the disc supplier to cause a function desired by at least the disc supplier to operate earlier.

Note that according to the technique of Patent Literature 4, the user changes setting of the default format layer. However, Patent Literature 4 discloses no arrangement such that information for specifying the default format layer is recorded in the multilayer information recording medium. Namely, according to the technique of Patent Literature 4, differently from the present invention, no layer specifying information is recorded in the information recording medium. This prevents the recording/reproducing device from recognizing the running layer by use of the layer specifying information when the information recording medium is inserted into the recording/reproducing device.

The information recording medium in accordance with the present invention is preferably arranged such that: the plurality of information recording layers include (i) a first information recording layer which allows additional recording of information therein or rewriting of information thereto and (ii) a second information recording layer which allows only readout of information therefrom; and layer specifying information is recorded for specifying the first information recording layer in priority to the second information recording layer as the information recording layer to be run first when the information recording medium is inserted into the recording/ reproducing device which carries out recording or reproduction of information with respect to the information recording medium.

In other words, in order to attain the object, the information recording medium in accordance with the present invention includes (i) a first information recording layer which allows additional recording of information therein or rewriting of information thereto and (ii) a second information recording layer which allows only readout of information therefrom, layer specifying information being recorded for specifying the first information recording layer in priority to the second information recording layer as the information recording layer to be run first when the information recording medium is inserted into the recording/reproducing device which carries out recording or reproduction of information with respect to the information recording medium.

According to the arrangement, in the information recording medium in accordance with the present invention, layer specifying information is recorded for specifying the first information recording layer in priority to the second information recording layer as the information recording layer to be run first. The first information recording layer allows additional recording of information therein or rewriting of information thereto.

Note here that in a case where updated (the latest) information is obtained so as to enhance security of an OS, an application, and the like and/or to upgrade these to easier-to-use ones and the updated information is recorded in the information recording medium, the updated information is recorded in the first information recording layer which is a recordable information recording layer. The disc supplier desires the user to use, as much as possible, the updated information, which is obtained to, for example, enhance security of the OS, the application, and the like, and/or cause the OS, the application, and the like to be contents which are suitable for occasions. Therefore, the first information recording layer in which the updated information is recorded is run in priority to the second information recording layer when the information recording medium in accordance with the present invention is inserted into the recording/reproducing device. This yields an effect such that the information recording layer to be run first can be run in an updated state intended by the disc supplier.

This means that, in a case where a content view menu such as a bookmark, a favorite scene, a digest reproduction, or a questionnaire survey is recorded in the first information recording layer, since the first information recording layer is run first by inserting the information recording medium into the recording/reproducing device, the content view menu can be promptly expressed in quick response to a state of use.

In addition, according to the information recording medium in accordance with the present invention, the updated information is recorded only in the first information recording layer, and the first information recording layer and the second information recording layer are managed separately from each other. Accordingly, as compared to the technique disclosed in Patent Literature 3 for integratedly managing, in the RE region, data files including a file recorded in the ROM region, the information recording medium in accordance with the present invention is arranged such that simpler file management is carried out in the first information recording layer and the second information recording layer. Therefore, it is unnecessary to dramatically change conventional file management of an RE disc. Furthermore, the information recording medium in accordance with the present invention is applicable to copyright protection for information recorded in the second information recording layer without the need of dramatically changing a conventional technique for copyright protection of content recorded in a read-only disc.

The technique disclosed in Patent Literature 1 requires a mechanism for causing information recorded in the ROM region to be associated and synchronize, in the RE region, with information recorded, so as to virtually recognize, in the system, a DVD as its latest version (which can be read as one (1) DVD). In contrast, according to the information recording medium in accordance with the present invention, the first information recording layer and the second information recording layer are managed separately from each other. Therefore, it is unnecessary to create such a new mechanism as described in Patent Literature 1. Hence, a conventional system does not need to be dramatically changed.

As described earlier, according to the arrangement, it is possible to provide the user with a highly convenient information recording medium.

In order to attain the object, a recording/reproducing device in accordance with the present invention which carries out recording or reproduction of information with respect to an information recording medium having a plurality of information recording layers, the recording/reproducing device includes: obtaining means for obtaining layer specifying information when the information recording medium is inserted into the recording/reproducing device, the layer specifying information being information for specifying an information recording layer to be run first; and recognizing means for recognizing, as a running layer, the information recording layer indicated by the layer specifying information obtained by the obtaining means.

In order to attain the object, a method for controlling a recording/reproducing device in accordance with the present invention which carries out recording or reproduction of information with respect to an information recording medium having a plurality of information recording layers, the method includes the steps of: (a) obtaining layer specifying information when the information recording medium is inserted into the recording/reproducing device, the layer specifying information being information for specifying an information recording layer to be run first; and (b) recognizing, as a running layer, the information recording layer indicated by the layer specifying information obtained in the step (a).

According to the arrangement, when the information recording medium is inserted into the recording/reproducing device, the layer specifying information is obtained by the obtaining means (in the obtaining step) and the information recording layer indicated by the layer specifying information thus obtained is recognized as the running layer by the recognizing means (in the recognizing step).

According to this, when the information recording medium is inserted into the recording/reproducing device, the recording/reproducing device (the method for controlling the recording/reproducing device) allows specification of the information recording layer to be run first. Therefore, the information recording layer that the disc supplier or the user desires to run can be run when the information recording medium is inserted into the recording/reproducing device.

In order to attain the object, a recording/reproducing device in accordance with the present invention which carries out recording or reproduction of information with respect to an information recording medium including (i) a first information recording layer which allows additional recording of information therein or rewriting of information thereto and (ii) a second information recording layer which allows only readout of information therefrom, the recording/reproducing device includes: obtaining means for obtaining layer specifying information when the information recording medium is inserted into the recording/reproducing device, the layer specifying information being information for specifying the first information recording layer in priority to the second information recording layer as an information recording layer to be run first; and recognizing means for recognizing, as a running layer, the first information recording layer indicated by the layer specifying information obtained by the obtaining means.

A method for controlling a recording/reproducing device in accordance with the present invention which carries out recording or reproduction of information with respect to an information recording medium including (i) a first information recording layer which allows additional recording of information therein or rewriting of information thereto and (ii) a second information recording layer which allows only readout of information therefrom, the method includes the steps of: (a) obtaining layer specifying information when the information recording medium is inserted into the recording/reproducing device, the layer specifying information being information for specifying the first information recording layer in priority to the second information recording layer as an information recording layer to be run first; and (b) recognizing, as a running layer, the first information recording layer indicated by the layer specifying information obtained in the step (a).

According to the arrangement, when the information recording medium is inserted into the recording/reproducing device, the layer specifying information is obtained by the obtaining means (in the obtaining step) and in priority to the second information recording layer, the first information recording layer which is an information recording layer indicated by the layer specifying information thus obtained is recognized as the running layer by the recognizing means (in the recognizing step).

According to this, when the information recording medium is inserted into the recording/reproducing device, the recording/ reproducing device (and the method for controlling the recording/reproducing device) allow specification of the first information recording layer which is the information recording layer to be run first. Therefore, the first information recording layer that the disc supplier or the user desires to run can be run when the information recording medium is inserted into the recording/reproducing device.

### Advantageous Effects of Invention

As described earlier, the information recording medium in accordance with the present invention is arranged such that layer specifying information is recorded in the information recording medium, the layer specifying information being information for specifying an information recording layer to be run first when the information recording medium is inserted into a recording/reproducing device which carries out recording or reproduction of information with respect to the information recording medium.

Therefore, an information recording layer intended by at least the disc supplier can be run first when the information recording medium is inserted into the recording/reproducing device.

As described earlier, the recording/reproducing device in accordance with the present invention is arranged to include: obtaining means for obtaining layer specifying information when the information recording medium is inserted into the recording/reproducing device, the layer specifying information being information for specifying an information recording layer to be run first; and recognizing means for recognizing, as a running layer, the information recording layer indicated by the layer specifying information obtained by the obtaining means.

As described earlier, the method for controlling a recording/reproducing device in accordance with the present invention includes the steps of: (a) obtaining layer specifying information when the information recording medium is inserted into the recording/reproducing device, the layer specifying information being information for specifying an information recording layer to be run first; and (b) recognizing, as a running layer, the information recording layer indicated by the layer specifying information obtained in the step (a).

This yields an effect such that an information recording layer that the disc supplier or the user desires to run can be run when the information recording medium is inserted into the recording/ reproducing device since the information recording layer to be run first can be specified when the information recording medium is inserted into the recording/reproducing device.

As described earlier, the information recording medium in accordance with the present invention is arranged such that layer specifying information is recorded for specifying the first information recording layer in priority to the second information recording layer as the information recording layer to be run first when the information recording medium is inserted into the recording/reproducing device which carries out recording or reproduction of information with respect to the information recording medium.

As described earlier, the recording/reproducing device in accordance with the present invention is arranged to include: obtaining means for obtaining layer specifying information when the information recording medium is inserted into the recording/reproducing device, the layer specifying information being information for specifying the first information recording layer in priority to the second information recording layer as an information recording layer to be run first; and recognizing means for recognizing, as a running layer, the first information recording layer indicated by the layer specifying information obtained by the obtaining means.

As described earlier, the method for controlling a recording/reproducing device in accordance with the present invention is arranged to include the steps of: (a) obtaining layer specifying information when the information recording medium is inserted into the recording/reproducing device, the layer specifying information being information for specifying the first information recording layer in priority to the second information recording layer as an information recording layer to be run first; and (b) recognizing, as a running layer, the first information recording layer indicated by the layer specifying information obtained in the step (a).

This yields an effect such that, when inserted into the recording/reproducing device, the information recording medium can be run in an updated state intended by the disc supplier since in priority to the information recording layer which allows only readout of information therefrom, the information recording layer which allows additional recording of information therein or rewriting of information thereto is specified as the information recording layer to be run first.

Brief Description of Drawings
Fig. 1

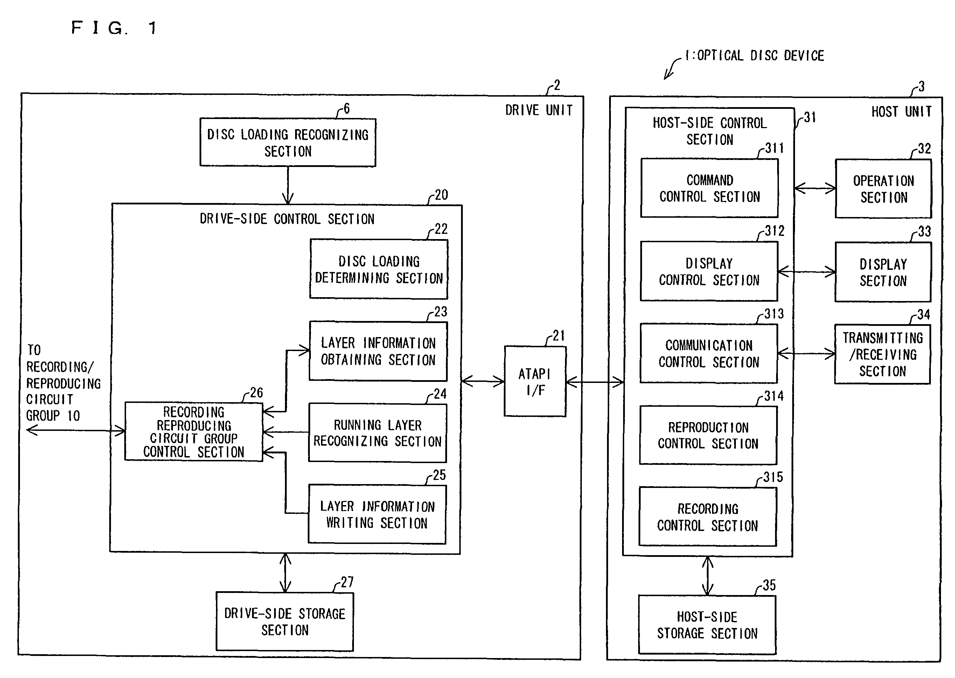

   Fig. 1 is a block diagram illustrating an arrangement of a relevant part of an optical disc device in accordance with a first embodiment of the present invention.
Fig. 2

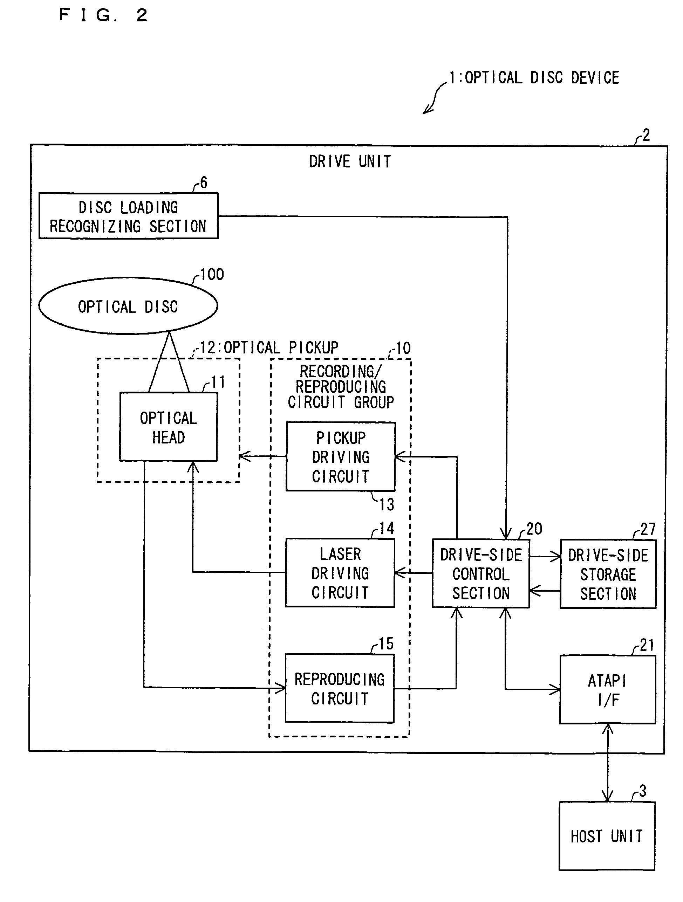

   Fig. 2 is a block diagram illustrating a schematic arrangement of the entire optical disc device in accordance with the first embodiment of the present invention.
Fig. 3

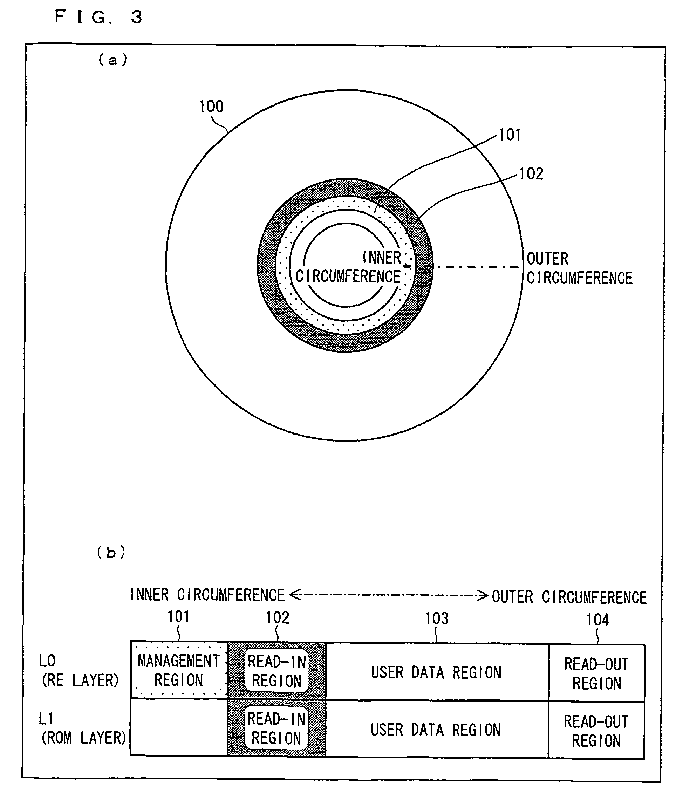

   Fig. 3 illustrates a schematic arrangement of an optical disc in accordance with the first embodiment of the present invention. (a) of Fig. 3 illustrates the optical disc seen from the reproduced light entrance side. (b) of Fig. 3 shows an arrangement example of each recording layer of the optical disc.
Fig. 4

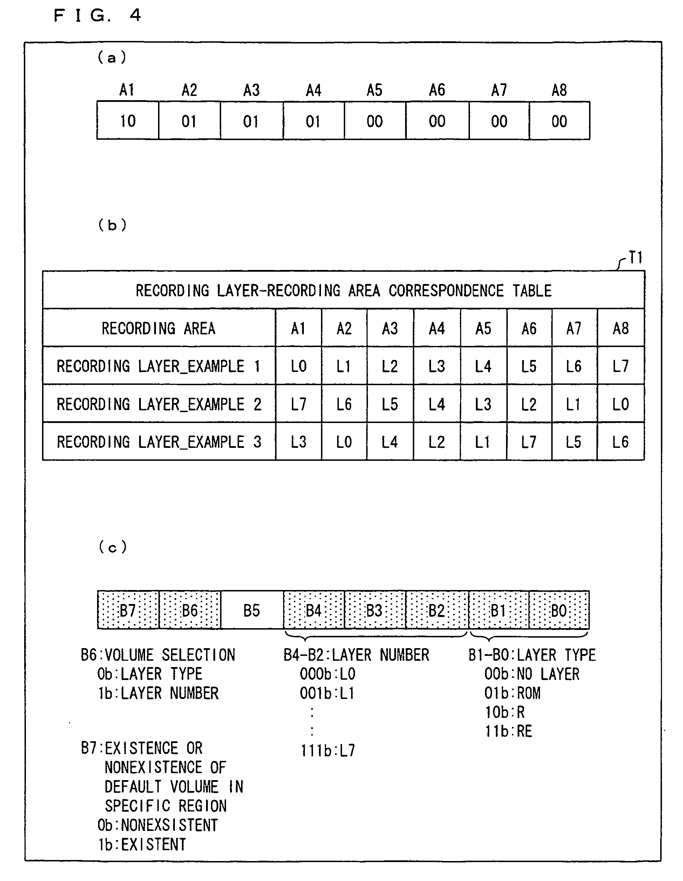

   Fig. 4 shows various pieces of information which are stored in the optical disc device or the optical disc in accordance with the first embodiment of the present invention. (a) of Fig. 4 shows an example of layer type information recorded in a recording area. (b) of Fig. 4 shows an example of a recording layer-recording area correspondence table stored in a drive-side storage section. (c) of Fig. 4 shows an example of a structure of layer specifying information (Default Volume specifying information).
Fig. 5

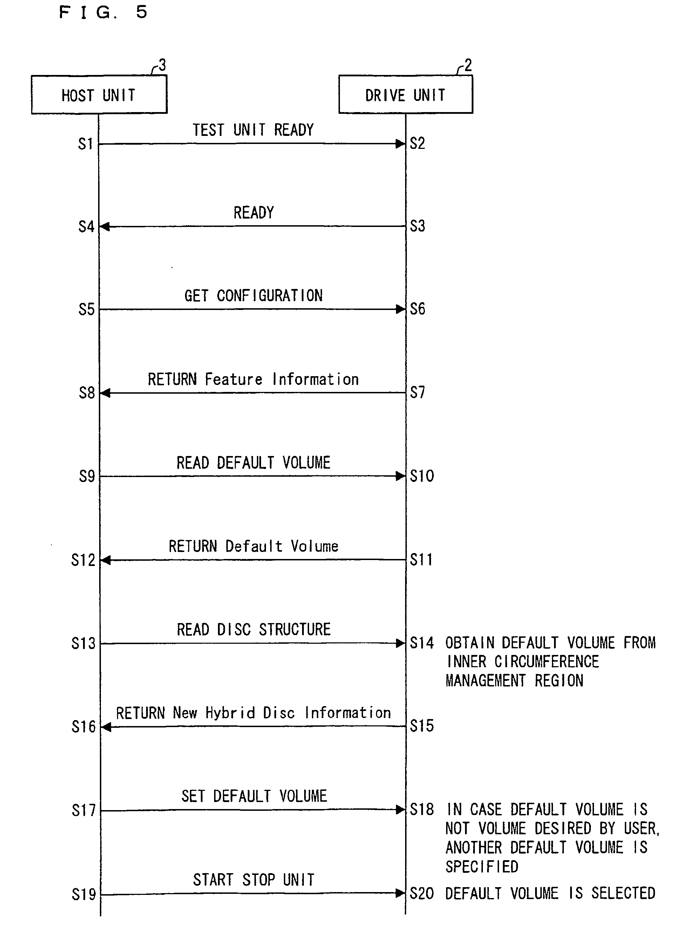

   Fig. 5, which shows an example illustrating how the optical disc device in accordance with the first embodiment of the present invention carries out processes, is a timing chart showing how commands are exchanged between a drive unit and a host unit during a running process carried out in response to insertion of the optical disc into the optical disc device.
Fig. 6

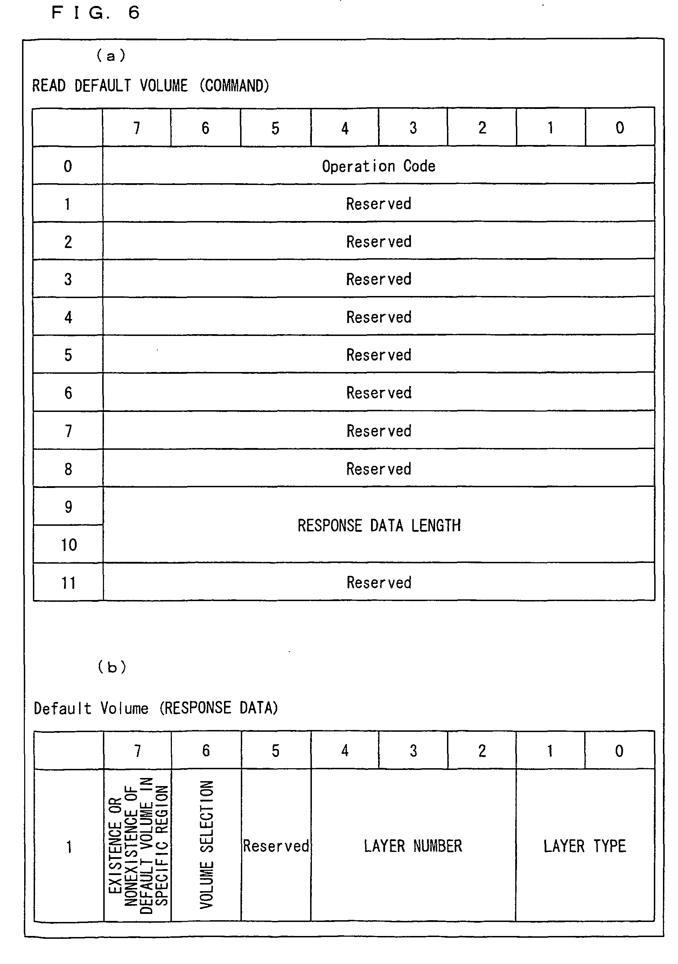

   Fig. 6 shows an example of a "READ DEFAULT VOLUME" command used in the optical disc device in accordance with the first embodiment of the present invention. (a) of Fig. 6 shows an example of the "READ DEFAULT VOLUME" command to be transmitted from the host unit. (b) of Fig. 6 illustrates Default Volume information (response data) to be returned from the drive unit.
Fig. 7

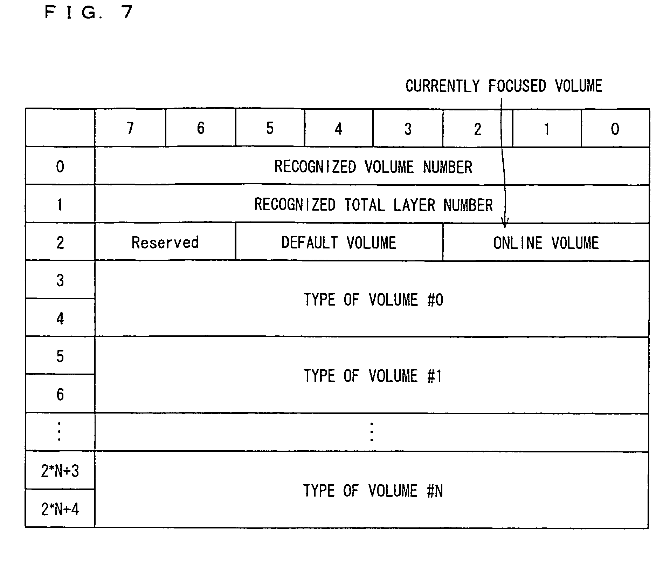

   Fig. 7 shows an example of New Hybrid Disc Information to be returned by a "READ DISC STRUCTURE" command used in the optical disc device in accordance with the first embodiment of the present invention.
Fig. 8

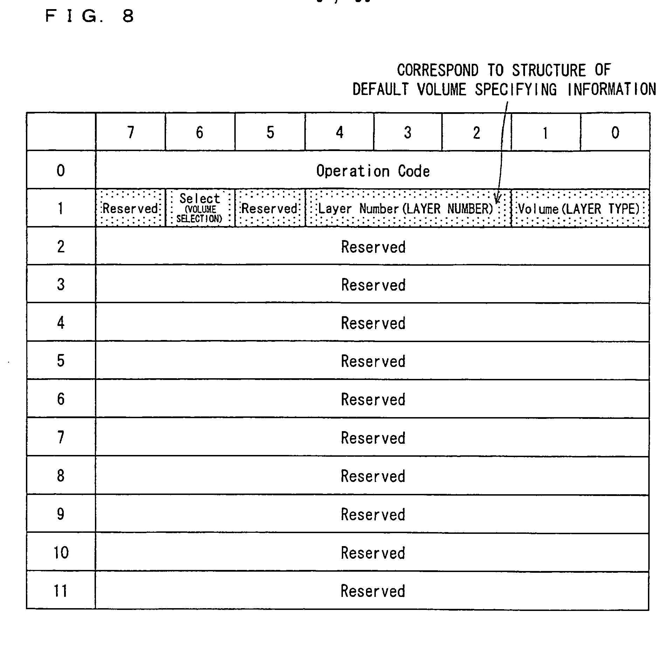

   Fig. 8 shows an example of a "SET DEFAULT VOLUME" command used in the optical disc device in accordance with the first embodiment of the present invention.
Fig. 9

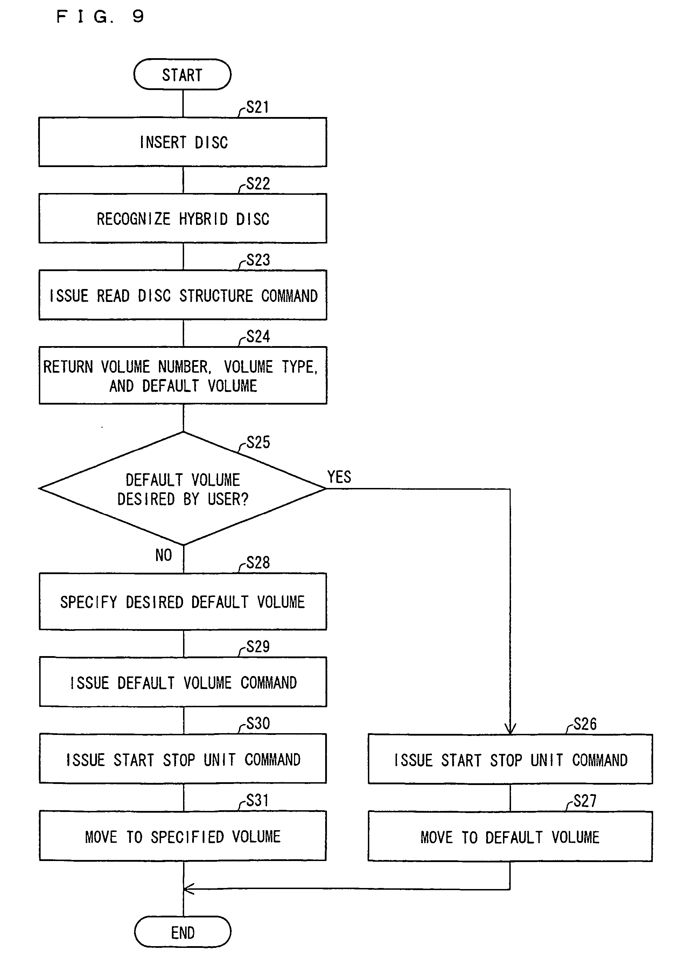

   Fig. 9 is a flowchart illustrating how the optical disc device in accordance with the first embodiment of the present invention carries out processes.
Fig. 10

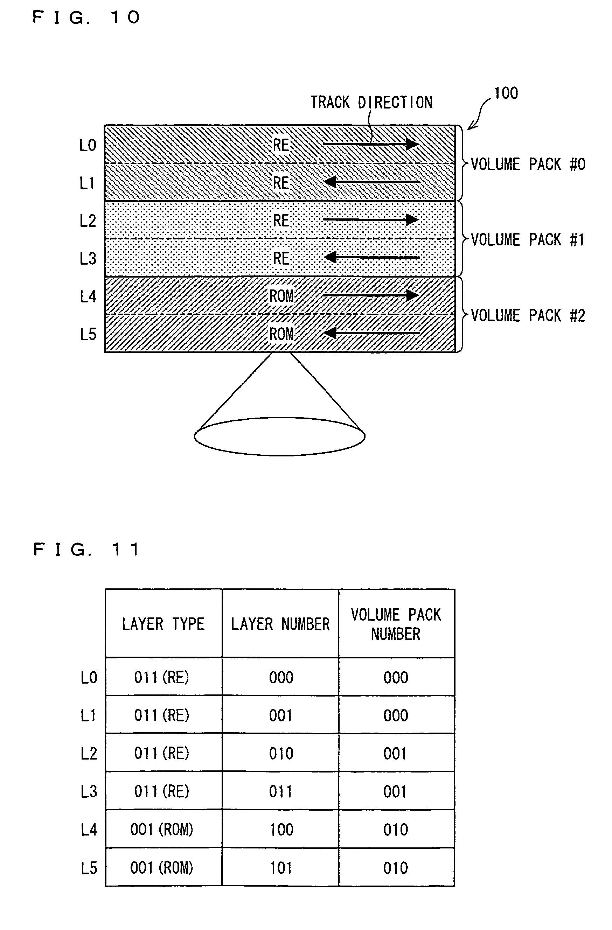

   Fig. 10 shows an example of a layer structure of an optical disc in accordance with a second embodiment of the present invention.
Fig. 11
   Fig. 11 shows an example of a layer number and a volume pack number which are recorded in each layer of the optical disc in accordance with the second embodiment of the present invention.
Fig. 12

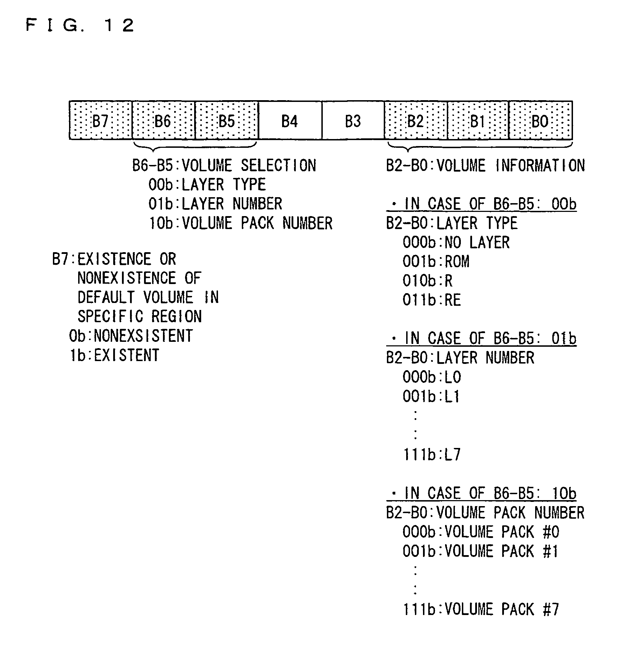

   Fig. 12 shows an example of a structure of layer specifying information of the optical disc in accordance with the second embodiment of the present invention.
Fig. 13

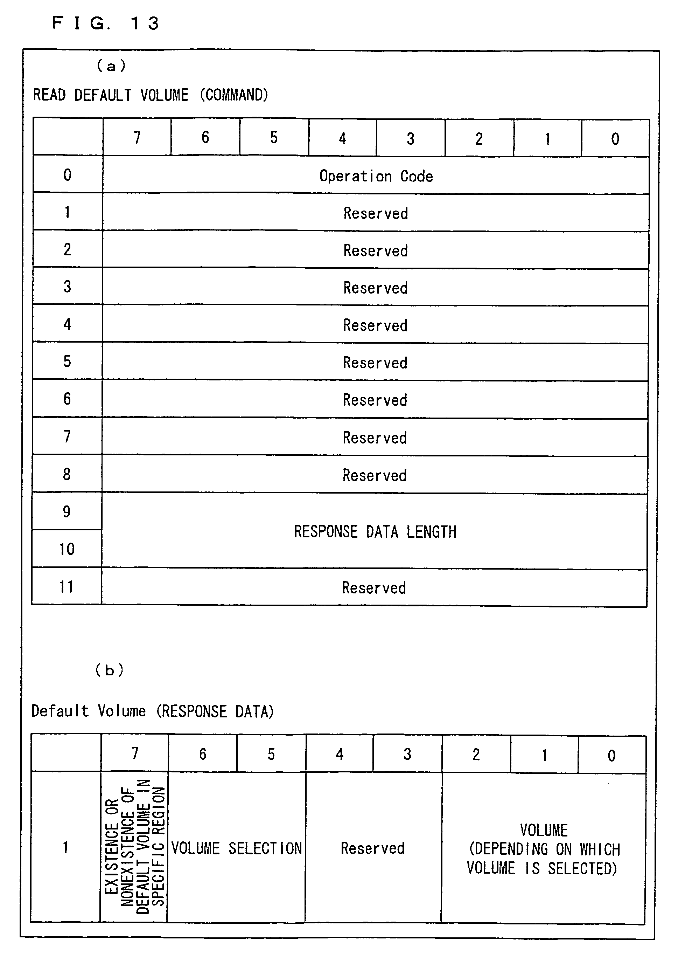

   Fig. 13 shows an example of a command used in an optical disc device in accordance with the second embodiment of the present invention. (a) of Fig. 13 shows an example of the "READ DEFAULT VOLUME" command to be transmitted from the host unit in the process at S10 illustrated in Fig. 5. (b) of Fig. 13 illustrates Default Volume information (response data) to be returned from the drive unit.
Fig. 14

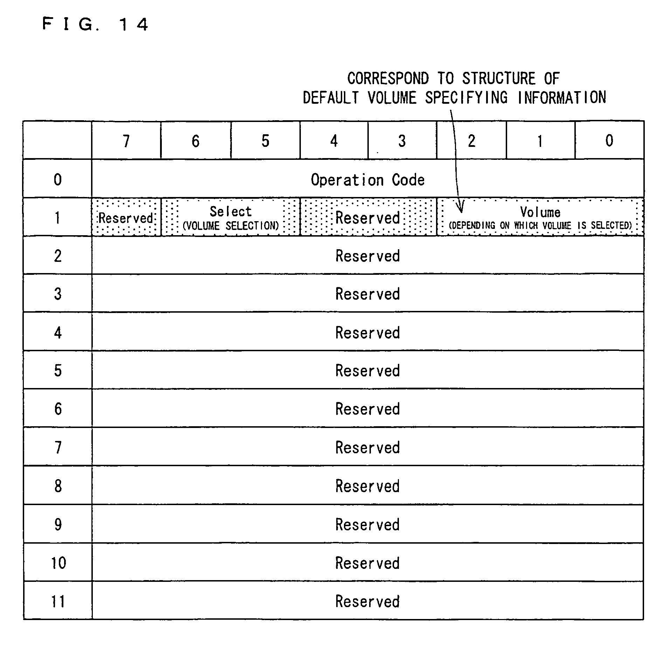

   Fig. 14 shows an example of the "SET DEFAULT VOLUME" command which is used in the optical disc device in accordance with the second embodiment of the present invention and transmitted from the host unit in the process at S17 illustrated in Fig. 5.
Fig. 15

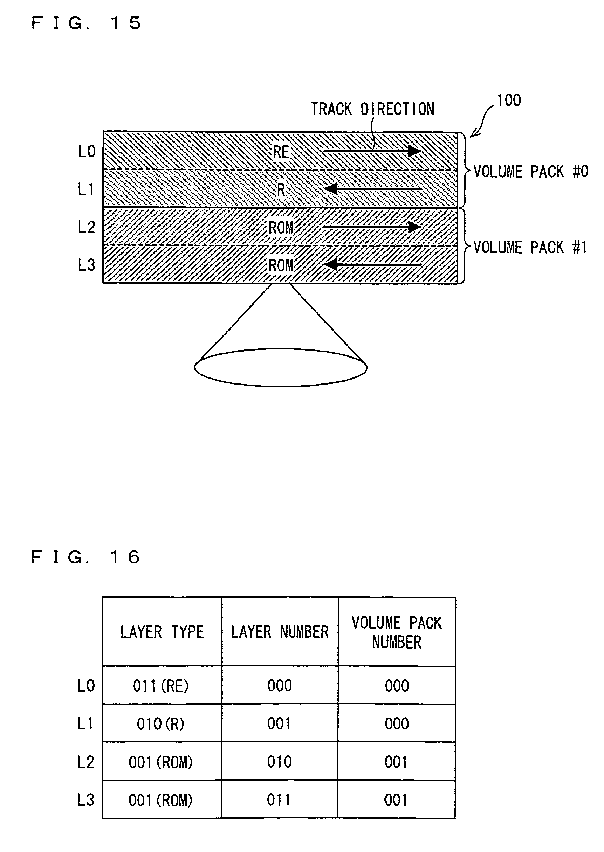

   Fig. 15, which illustrates a modification of the optical disc device in accordance with the second embodiment of the present invention, shows an example of a layer structure of the modification.
Fig. 16
   Fig. 16 shows an example of a layer number and a volume pack number which are recorded in each layer of the optical disc illustrated in Fig. 15.
Fig. 17

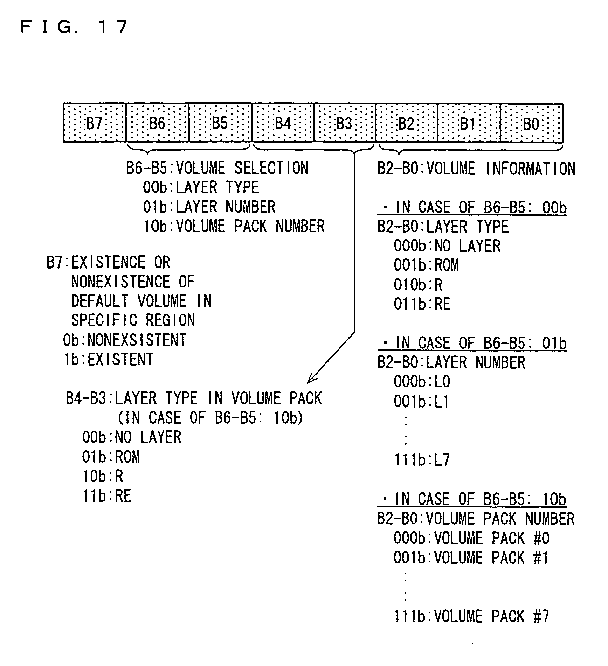

   Fig. 17 shows an example of a structure of a recording area of the optical disc illustrated in Fig. 15 (a structure of layer specifying information).
Fig. 18

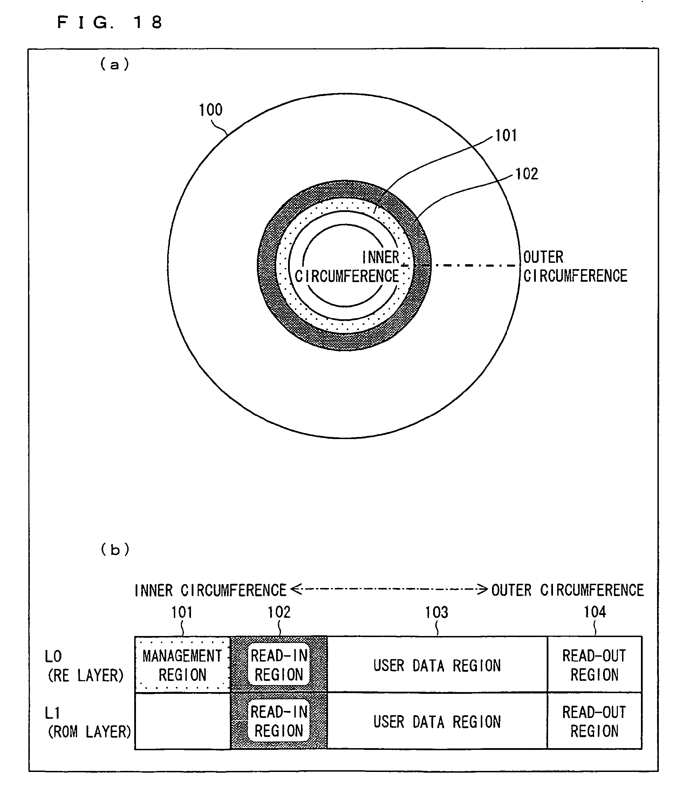

   Fig. 18 illustrates a schematic arrangement of an optical disc in accordance with a third embodiment of the present invention. (a) of Fig. 18 illustrates the optical disc seen from the reproduced light entrance side. (b) of Fig. 18 shows an arrangement example of each recording layer of the optical disc.
Fig. 19

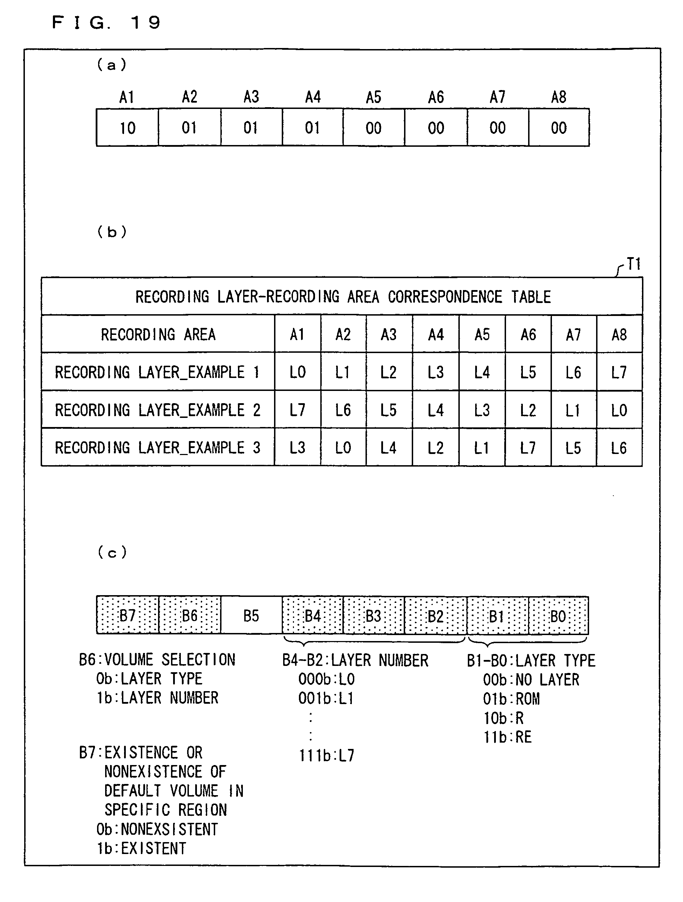

   Fig. 19 shows various pieces of information which are stored in an optical disc device or the optical disc in accordance with the third embodiment of the present invention. (a) of Fig. 19 shows an example of layer type information recorded in a recording area. (b) of Fig. 19 shows an example of a recording layer-recording area correspondence table stored in a drive-side storage section. (c) of Fig. 19 shows an example of a structure of layer specifying information (Default Volume specifying information).
Fig. 20

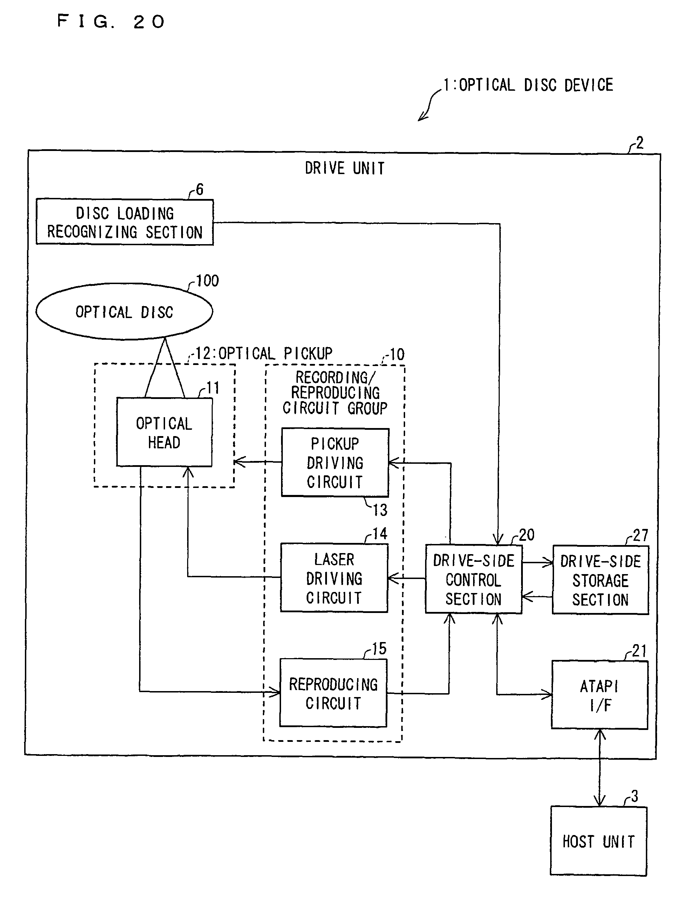

   Fig. 20 is a block diagram illustrating a schematic arrangement of the entire optical disc device in accordance with the third embodiment of the present invention.
Fig. 21

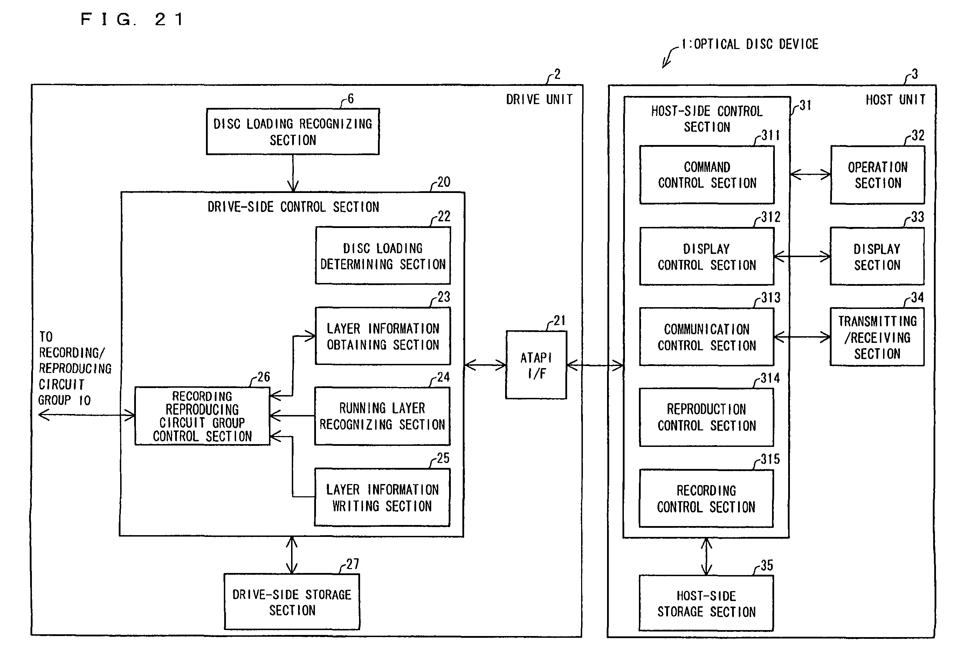

   Fig. 21 is a block diagram illustrating an arrangement of a relevant part of the optical disc device in accordance with the third embodiment of the present invention.
Fig. 22

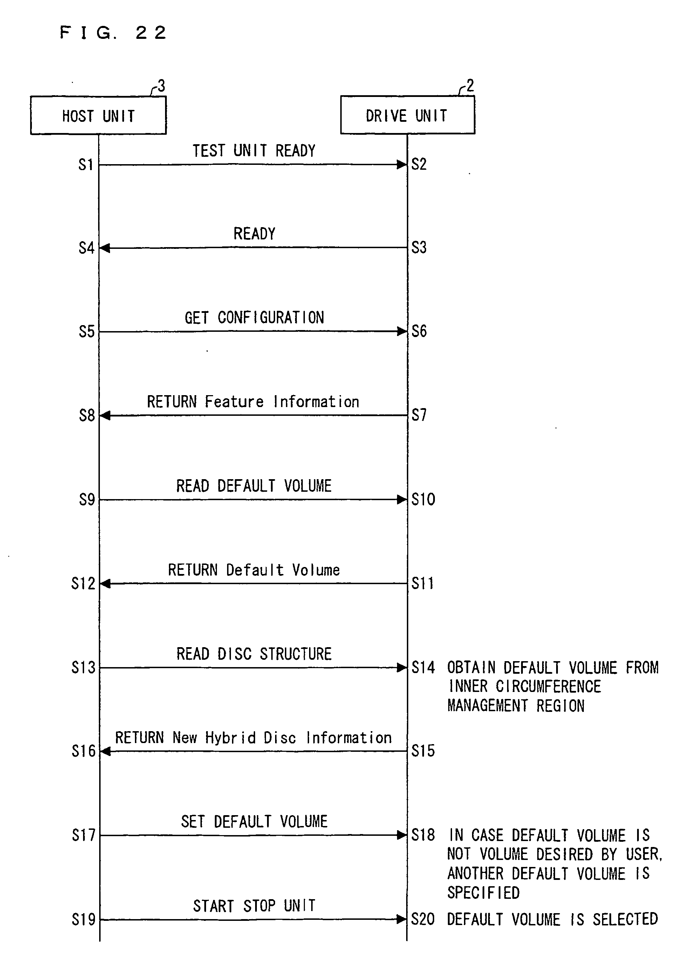

   Fig. 22, which shows an example illustrating how the optical disc device in accordance with the third embodiment of the present invention carries out processes, is a timing chart showing how commands are exchanged between a drive unit and a host unit during a running process carried out in response to insertion of the optical disc into the optical disc device.
Fig. 23

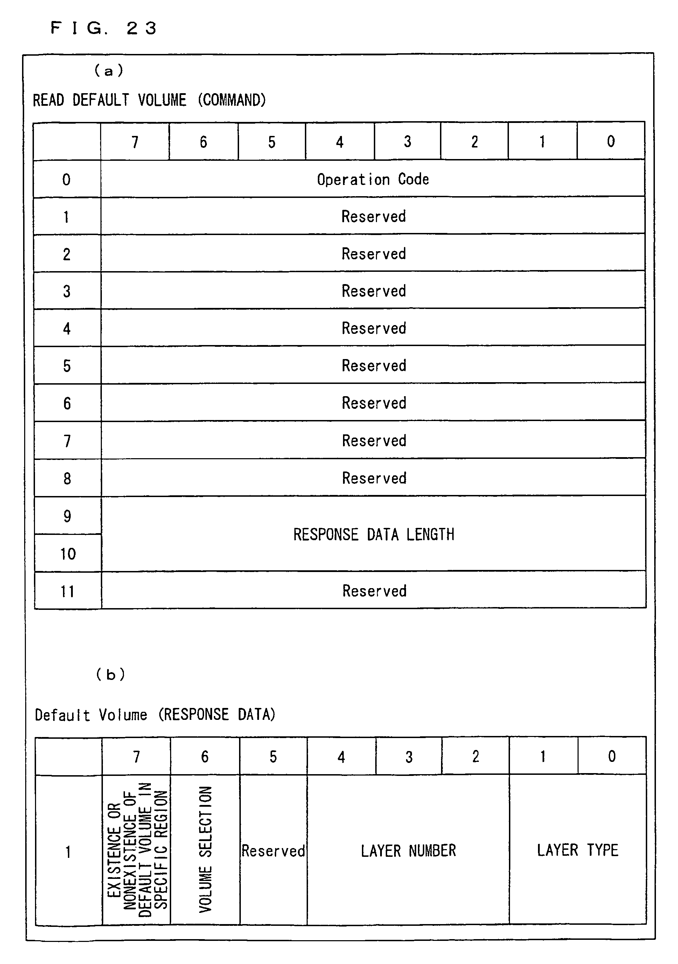

   Fig. 23 shows an example of a "READ DEFAULT VOLUME" command used in the optical disc device in accordance with the third embodiment of the present invention. (a) of Fig. 23 shows an example of the "READ DEFAULT VOLUME" command to be transmitted from the host unit. (b) of Fig. 23 illustrates Default Volume information (response data) to be returned from the drive unit.
Fig. 24

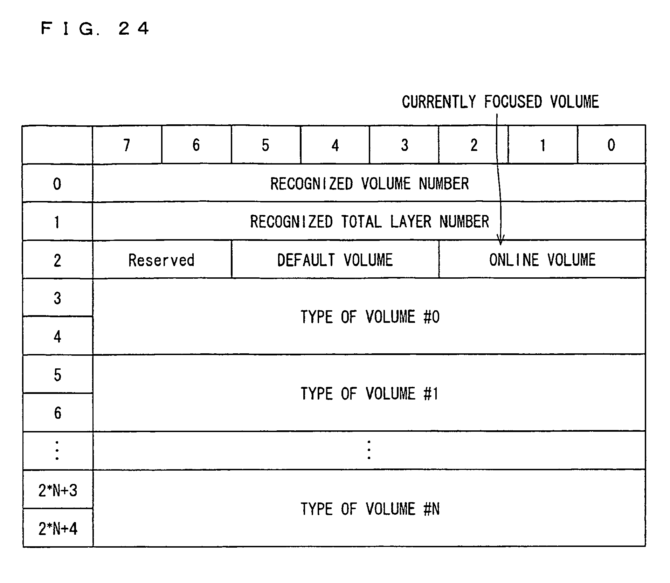

   Fig. 24 shows an example of New Hybrid Disc Information to be returned by a "READ DISC STRUCTURE" command used in the optical disc device in accordance with the third embodiment of the present invention.
Fig. 25

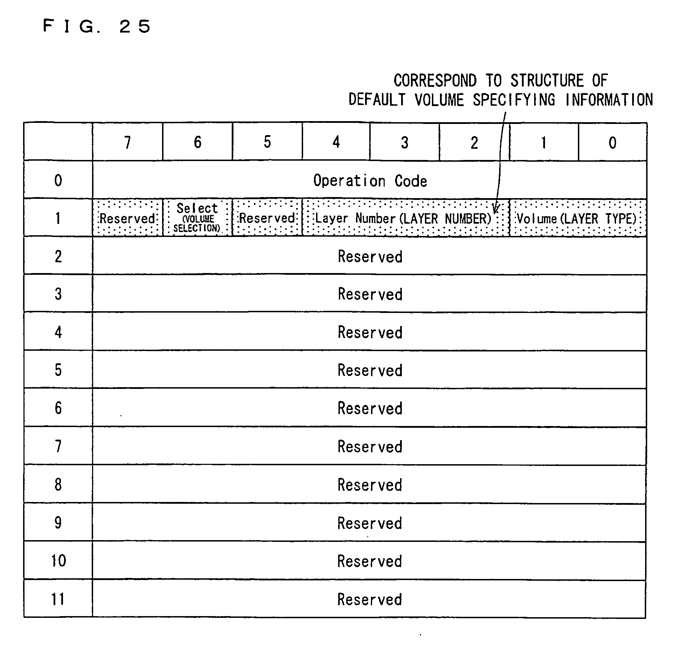

   Fig. 25 shows an example of a "SET DEFAULT VOLUME" command used in the optical disc device in accordance with the third embodiment of the present invention.
Fig. 26

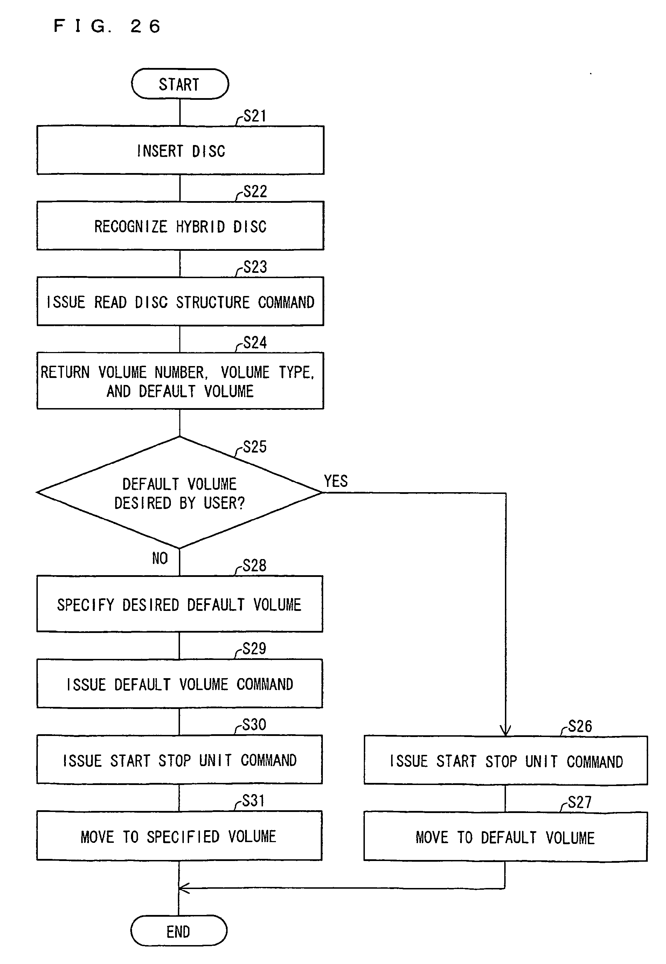

   Fig. 26 is a flowchart illustrating how the optical disc device in accordance with the third embodiment of the present invention carries out processes.
Fig. 27

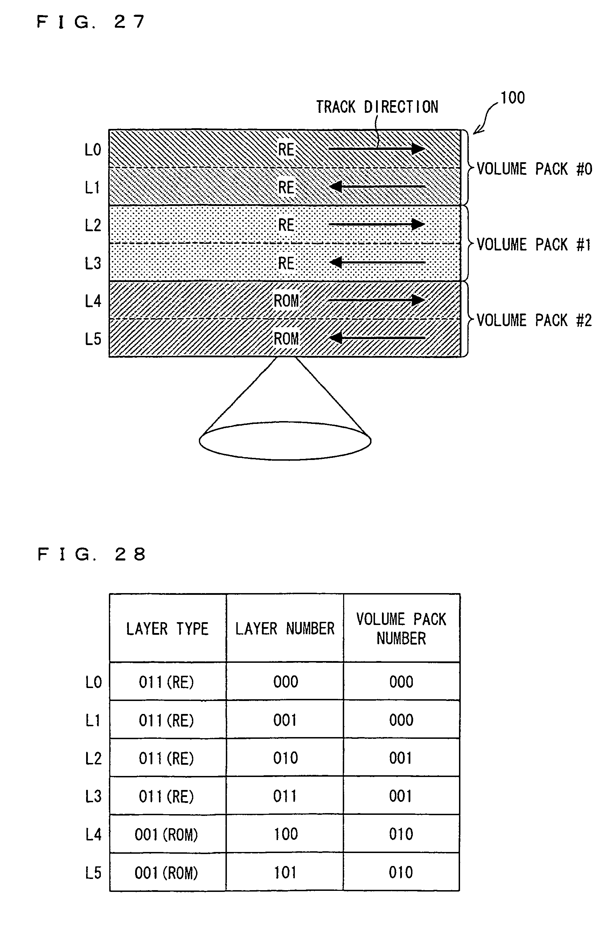

   Fig. 27 shows an example of a layer structure of an optical disc in accordance with a fourth embodiment of the present invention.
Fig. 28
   Fig. 28 shows an example of a layer number and a volume pack number which are recorded in each layer of the optical disc in accordance with the fourth embodiment of the present invention.
Fig. 29

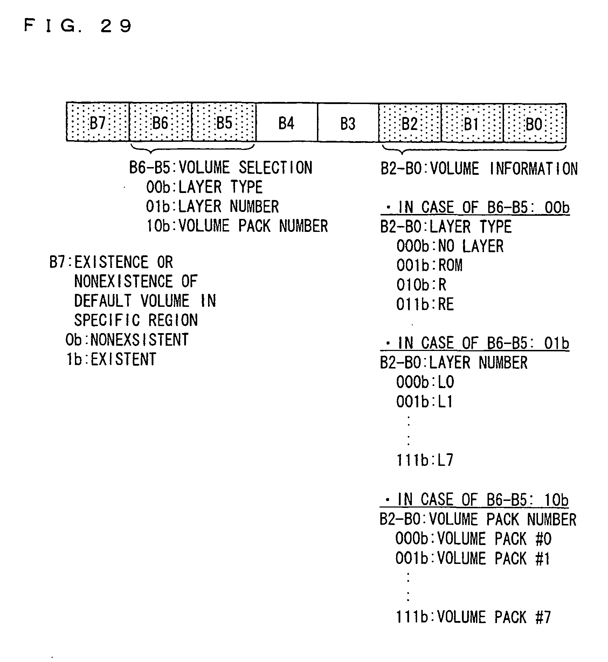

   Fig. 29 shows an example of a structure of layer specifying information of the optical disc in accordance with the fourth embodiment of the present invention.
Fig. 30

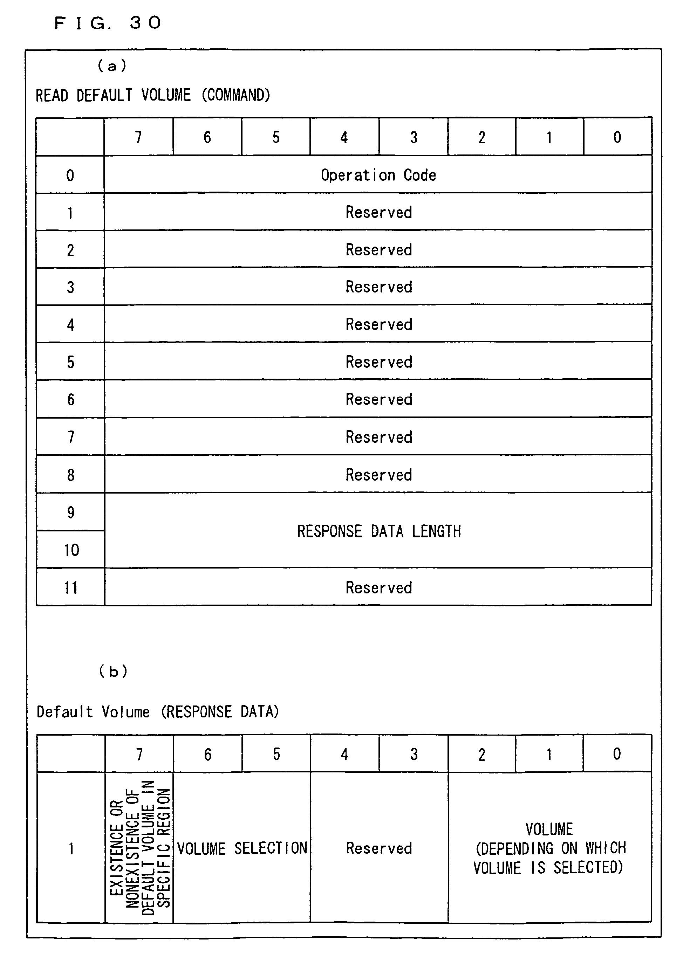

   Fig. 30 shows an example of a command used in an optical disc device in accordance with the fourth embodiment of the present invention. (a) of Fig. 30 shows an example of the "READ DEFAULT VOLUME" command to be transmitted from the host unit in the process at S10 illustrated in Fig. 22. (b) of Fig. 30 illustrates Default Volume information (response data) to be returned from the drive unit.
Fig. 31

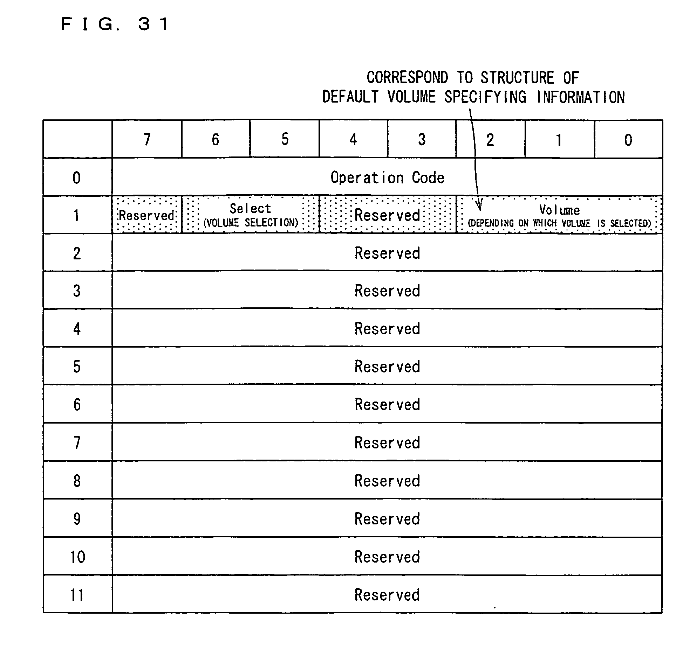

   Fig. 31 shows an example of the "SET DEFAULT VOLUME" command which is used in the optical disc device in accordance with the fourth embodiment of the present invention and transmitted from the host unit in the process at S 17 illustrated in Fig. 22.
Fig. 32

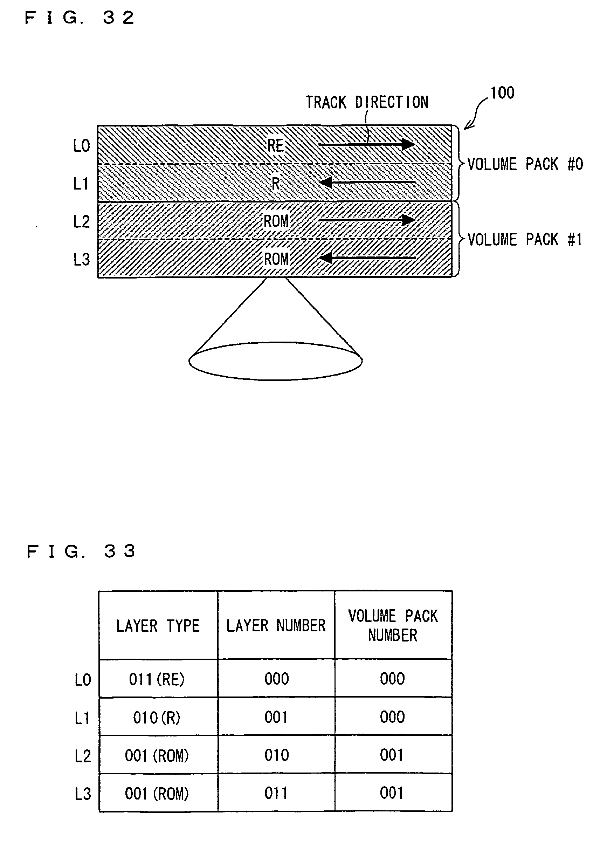

   Fig. 32, which illustrates a modification of the optical disc device in accordance with the fourth embodiment of the present invention, shows an example of a layer structure of the modification.
Fig. 33
   Fig. 33 shows an example of a layer number and a volume pack number which are recorded in each layer of the optical disc illustrated in Fig. 32.
Fig. 34

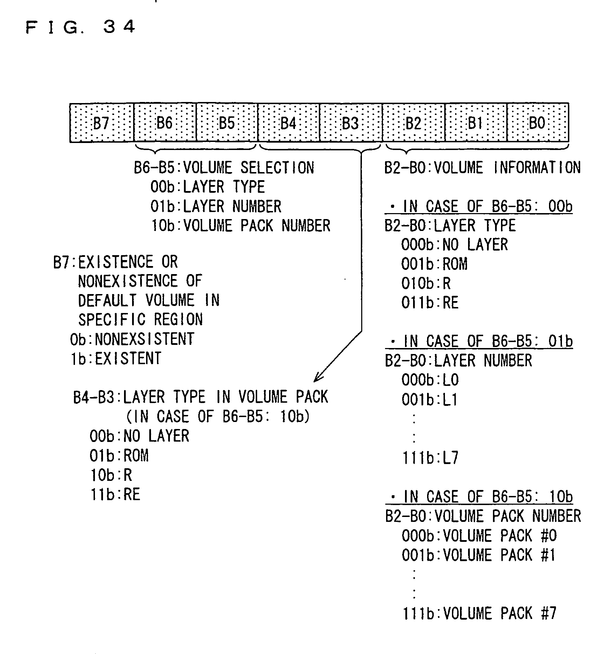

   Fig. 34 shows an example of a structure of a recording area of the optical disc illustrated in Fig. 32 (a structure of layer specifying information).

### Description of Embodiments

### [First Embodiment]

A first embodiment of the present invention is described below with reference to the drawings. For convenience, members having functions identical to those of the respective members described in the drawings are given respective identical reference numerals, and a description of those members is omitted here.

Note that for layers of an optical disc 100 (an information recording medium), the following description refers to a rewritable recording layer as an RE (RE-writable) layer, refers to a read-only recording layer as a ROM (Read Only Memory) layer, and refers to an additionally-recordable recording layer as an R (Recordable) layer.

A unit in which logical management is carried out in an information recording medium (a storage medium) is referred to as a "volume". A single-layer optical disc is commonly managed as one (1) volume. A two-layer optical disc in which data of two layers are integratedly managed as in the case of a conventional two-layer DVD is also managed as one (1) volume. A two-layer optical disc in which data of respective layers are independently managed is managed as two volumes.

A "recording layer (information recording layer)" may also be described as a "layer" from a physical viewpoint. An information recording medium may have a plurality of "recording layers", i.e., "layers". An RE layer and an R layer may also be generically described as "recordable recording layers". Note that the "recording layer" may also be described as a "volume".

### [Schematic Arrangement of Optical Disc Device 1]

First, the following description discusses, with reference to Fig. 2, a schematic arrangement of the entire optical disc device (recording/reproducing device) 1 in accordance with the first embodiment of the present invention. Fig. 2 is a block diagram illustrating the schematic arrangement of the entire optical disc device 1.

The optical disc device 1 carries out recording or reproduction of information with respect to the optical disc 100 such as a DVD or a BD, and includes a drive unit 2 and a host unit 3 (see Fig. 2).

The drive unit 2 reads out information recorded in the optical disc 100 or records information in the optical disc 100. The host unit 3 mainly causes an ATAPI I/F 21 included in the drive unit 2 to instruct the drive unit 2 to, for example, carry out reproduction control and recording control with respect to the optical disc 100.

The drive unit 2 mainly includes a disc loading recognizing section 6, an optical pickup 12, a drive-side control section 20, the ATAPI I/F 21, and a drive-side storage section 27 (storage section). A recording/reproducing circuit group 10 mainly includes a pickup driving circuit 13, a laser driving circuit 14, and a reproducing circuit 15.

According to the drive unit 2, the drive-side control section 20 causes the pickup driving circuit 13 to move the optical pickup 12 to a rotating track (not illustrated) of the optical disc 100.

The optical pickup 12 includes an optical head 11. The drive-side control section 20 causes the laser driving circuit 14 to set a recording requirement and causes a recording laser beam to be emitted from the optical head 11 to a recording part of the optical disc 100, so that information is recorded in the track of the optical disc 100.

According to the optical disc device 1, the drive-side control section 20 causes the pickup driving circuit 13 to move the optical pickup 12 to the recording part of the optical disc 100. The drive-side control section 20 causes the laser driving circuit 14 to set a reproduction requirement and causes a reproduction laser beam to be emitted from the optical head 11 to the optical disc 100.

The drive-side control section 20 receives reflected light which has been detected by the optical head 11 and then converted to a reproduction signal by the reproducing circuit 15. This allows the optical disc device 1 to reproduce information recorded in the track (constituted by a plurality of sectors) of the optical disc 100.

The optical disc device 1 includes the disc loading recognizing section 6. The disc loading recognizing section 6 detects loading of the optical disc 100. The disc loading recognizing section 6 is exemplified by various sensors, and any sensor may be used provided that the sensor detects loading of the optical disc 100. The disc loading recognizing section 6 also supplies, to the drive-side control section 20, a result of the detection as a detection signal.

The ATAPI I/F 21 reproduces content recorded in the optical disc 100 which is in conformity with an ATAPI (Attachment Packet Interface). The ATAPI I/F 21 is used for data transfer (information exchange) between the drive unit 2 and the host unit 3. The following description discusses the ATAPI I/F 21 assuming that the drive unit 2 includes the ATAPI I/F 21. However, an arrangement of the ATAPI I/F 21 is not limited to this. The ATAPI I/F 21 may also be included in the optical disc device 1 separately from the drive unit 2 and the host unit 3.

Note that a specific arrangement of the drive-side control section 20 and the drive-side storage section 27 are described later.

### [More Specific Arrangement of the Optical Disc Device 1]

Next, the following description discusses, with reference to Fig. 1, an arrangement of a relevant part of the optical disc device 1, i.e., a specific arrangement of the drive unit 2 and the host unit 3. Fig. 1 is a block diagram illustrating the arrangement of the relevant part of the optical disc device 1 in accordance with the first embodiment of the present invention. Note that, since the disc loading recognizing section 6 is described above, a description thereof is omitted here.

The drive-side control section 20 of the drive unit 2 mainly includes a disc loading determining section 22, a layer information obtaining section 23 (obtaining means), a running layer recognizing section 24 (recognizing means), a layer information writing section 25 (writing means), and a recording/reproducing circuit group control section 26 (see Fig. 1). The drive-side control section 20 controls members constituting the drive unit 2 by, for example, executing a control program. The drive-side control section 20 reads out, to a first memory section (not illustrated) constituted by a RAM (Random Access Memory) or the like, a program stored in the drive-side storage section 27 included in the drive unit 2 and causes the first memory section to execute the program, so as to carry out various processes such as focus control and tracking control with respect to the optical disc 100.

The disc loading determining section 22 determines, in accordance with whether or not the detection signal has been received from the disc loading recognizing section 6, whether or not the optical disc has been inserted into the optical disc device 1.

The layer information obtaining section 23 mainly obtains various pieces of information from a management region or a read-in region of the optical disc. For example, the layer information obtaining section 23 obtains disc information from the management region, so as to determine whether or not the optical disc is a hybrid disc. This allows the optical disc device 1 to determine whether or not the optical disc 100 which is a hybrid disc has been loaded in the optical disc device 1.

The layer information obtaining section 23 also obtains layer specifying information for specifying a recording layer to be run first when the optical disc 100 is inserted into the optical disc device 1.

For example, in a case where the optical disc is a hybrid disc, the layer information obtaining section 23 determines whether or not the layer specifying information exists in a specific region (a writable region) of a read-in region 102. In other words, it can be said that the layer information obtaining section 23 obtains the layer specifying information from the rewritable recording layer (RE layer). According to this, in a case where the layer information obtaining section 23 has obtained the layer specifying information that was written before in accordance with an instruction from a user, it is possible to run a recording layer indicated by the layer specifying information. Therefore, it is possible to preferentially run a recording layer which was desired by the user when the optical disc was inserted into the optical disc device 1 last time.

The layer information obtaining section 23 also reads out information (e.g., the layer specifying information) recorded in a management region 101. In other words, the layer information obtaining section 23 obtains the layer specifying information from the management region 101 in which identification information indicative of a structure of the optical disc 100 is recorded. According to this, since the layer information obtaining section 23 can read out the layer specifying information which is preliminarily recorded in the management region 101, a recording layer which a disc supplier desires to run can be run first.

The layer information obtaining section 23 may also obtain the layer specifying information from a host-side storage section 35 (or the drive-side storage section 27) of the optical disc device 1. For example, the layer information obtaining section 23 which has determined that no layer specifying information is preliminarily set for the management region 101 causes a host-side control section 31 to read out the layer specifying information which is preliminarily stored in the host-side storage section 35, so as to obtain the layer specifying information. In a case where the layer information writing section 25 writes, on a specific region of the optical disc 100, the layer specifying information obtained by the layer information obtaining section 23, it is possible to specify a recording layer to be run first next time the optical disc 100 is inserted into the optical disc device 1.

The running layer recognizing section 24 recognizes, as a running layer to be run first, a recording layer indicated by the layer specifying information obtained by the layer information obtaining section 23. According to this, since the optical disc device 1 can specify the running layer to be run first when an information recording medium is inserted thereinto, the optical disc device 1 can run a recording layer which the disc supplier or the user desires to run.

When the layer information obtaining section 23 obtains the layer specifying information transmitted from the host unit 3, the layer information writing section 25 writes (or rewrites) the layer specifying information on the specific region. In other words, the layer information writing section 25 writes, on the recordable recording layer (RE layer or R layer), the layer specifying information set in accordance with an instruction from the user. According to this, for example, in a case where the layer information writing section 25 writes the layer specifying information in accordance with an instruction from the user, it is possible to specify a recording layer which the user desires to run first. Alternatively, as described earlier, also in a case where no layer specifying information is preliminarily recorded in the optical disc 100, a recording layer specified by the optical disc device 1 can be run first next time the optical disc 100 is inserted into the optical disc device 1.

Note that it can also be said that the layer information writing section 25 rewrites the layer specifying information recorded in the rewritable recording layer (RE layer). Namely, in a case where no layer specifying information is recorded in the optical disc 100, the layer information writing section 25 writes the layer specifying information which is in accordance with an instruction from the user or is preliminarily stored in the drive-side storage section 27. In contrast, in a case where the layer specifying information is already written in the RE layer (specific region), the layer information writing section 25 rewrites this layer specifying information to the layer specifying information which is in accordance with the instruction from the user or is preliminarily stored in the drive-side storage section 27.

The recording/reproducing circuit group control section 26 drives the recording/reproducing circuit group 10 in response to instructions from the layer information obtaining section 23, the running layer recognizing section 24, and the layer information writing section 25.

The drive-side storage section 27 records (1) a control program of each section, (2) an OS program, and (3) an application program which are executed by the drive-side control section 20, and (4) various sets of data to be read out to execute these programs. The drive-side storage section 27 is constituted by a non-volatile storage device such as a ROM (Read Only Memory) flash memory. Note that the first memory section described above is constituted by a volatile storage device such as a RAM. However, the present embodiment may be described assuming that the drive-side storage section 27 also has a function of the first memory section. The drive-side storage section 27 stores a recording layer-recording area correspondence table T1, the layer specifying information, and the like.

The host unit 3 mainly includes the host-side control section 31, an operation section 32, a display section 33, a transmitting/receiving section 34, and the host-side storage section 35 (storage section).

The host-side control section 31 mainly includes a command control section 311, a display control section 312, a communication control section 313, a reproduction control section 314, and a recording control section 315. The host-side control section 31 controls members constituting the host unit 3 by, for example, executing a control program and causes the ATAPI I/F 21 to give an instruction to the drive unit 2. The host-side control section 31 reads out, to the first memory section (not illustrated) constituted by a RAM (Random Access Memory) or the like, a program stored in the host-side storage section 35 included in the host unit 3 and causes the first memory section to execute the program, so as to carry out various processes such as a process in response to the user's operation inputted to the operation section 32, a process related to a display in the display section 33, and a process which is carried out during information exchange between the transmitting/receiving section 34 and a network.

The command control section 311 issues an ATAPI command, so as to give an instruction to each section of the drive unit 2. The command control section 311 also analyzes the ATAPI command returned from the drive unit 2, so as to instruct each section of the drive unit 2 or the host unit 3 to carry out a subsequent process.

The display control section 312 controls the display section 33. For example, the display control section 312 prepares an image for the user to determine whether or not the layer specifying information read out from the optical disc 100 indicates a recording layer which the user desires to run first.

The communication control section 313 communicates with an external network via the transmitting/receiving section 34. For example, the communication control section 313 obtains, from a network via the transmitting/receiving section 34, version upgrade information on an application recorded in the ROM layer of the optical disc 100.

The reproduction control section 314 reads out information recorded in the optical disc 100, so as to control reproduction of the information. In this case, the reproduction control section 314 instructs the command control section 311 to issue the ATAPI command which is necessary for reproduction of the information, so as to control the drive unit 2.

The recording control section 315 mainly controls the command control section 311 so as to record information in the RE layer (or R layer) of the optical disc 100. For example, the recording control section 315 controls the command control section 311 when the command control section 311 records the layer specifying information or the version upgrade information in the optical disc 100. The following description is given assuming that the command control section 311 independently issues the ATAPI command for recording the layer specifying information or the version upgrade information on the optical disc 100.

Note that the host-side control section 31 (rewriting means) may rewrite the layer specifying information stored in the drive-side storage section 27 of the optical disc device 1. For example, in a case where the host-side control section 31 rewrites, in accordance with an instruction from the user, the layer specifying information read from the optical disc 100 or the layer specifying information preliminarily stored in the drive-side storage section 27, the host-side control section 31 can rewrite this layer specifying information to the layer specifying information desired by the user. Accordingly, next time the optical disc 100 is inserted into the optical disc device 1, the optical disc device 1 can specify a recording layer desired by the user as the running layer by referring to the rewritten layer specifying information without the need of obtaining the layer specifying information from the optical disc 100 (even if the optical disc device 1 fails to obtain the layer specifying information from the optical disc 100).

The operation section 32 is used for the user to supply various operation commands to the optical disc device 1. The operation section 32 is exemplified by an operation button and its interface.

The display section 33 is controlled by the display control section 312, so as to display information necessary for control of the optical disc device 1, e.g., to display an image by which the user can select which of the recording layers of the optical disc 100 inserted into the optical disc device 1 to be run. The display section 33 is constituted by, for example, a liquid crystal panel. Alternatively, the display section 33 may be constituted by an organic EL (Electro Luminescence) panel.

The transmitting/receiving section 34 is controlled by the communication control section 313, so as to transmit, to the communication control section 313, information obtained from an external network. The transmitting/receiving section 34 is a physical medium which can use a communication medium for establishing a communication with an external device, the communication medium being exemplified by infrared communication, ZigBee (Registered Trademark), a UWB (ultra wide band), Bluetooth (Registered Trademark), a LAN (local area network), and Wibree.

The host-side storage section 35 records (1) a control program of each section, (2) an OS program, and (3) an application program which are executed by the host-side control section 31, and (4) various sets of data to be read out to execute these programs. The host-side storage section 35 is constituted by a non-volatile storage device such as a ROM (Read Only Memory) flash memory. Note that the first memory section described above is constituted by a volatile storage device such as a RAM. However, the present embodiment may be described assuming that the host-side storage section 35 also has a function of the first memory section. The host-side storage section 35 stores layer type information, the layer specifying information, and the like.

Note that the host-side storage section 35 (or the drive-side storage section 27) may store the layer specifying information so that the layer specifying information corresponds to each optical disc 100. In this case, if disc information obtained when the optical disc 100 is inserted into the optical disc device 1 and the layer specifying information are managed so that the disc information and the layer specifying information correspond to each other, a recording layer indicated by the layer specifying information stored in the host-side storage section 35 can be run, for example, at the time of readout of the disc information next time the same optical disc 100 is inserted into the optical disc device 1. In a case where the optical disc device 1 is arranged to carry out such a process, it is possible to reduce a running process time from when the optical disc 100 is inserted into the optical disc device 1.

### [Schematic Arrangement of Optical Disc 100]

Next, the following description discusses, with reference to Fig. 3, a schematic arrangement of the optical disc 100 which is the first embodiment of the present invention. Fig. 3 illustrates the schematic arrangement of the optical disc 100 which is the first embodiment of the present invention. (a) of Fig. 3 illustrates the optical disc 100 seen from the reproduced light entrance side. (b) of Fig. 3 shows an arrangement example of each recording layer of the optical disc 100.

The optical disc 100 includes the management region 101 and the read-in region 102 on its inner circumference (see (a) of Fig. 3).

The management region 101 is provided in a recording layer (the RE layer) which is on the most inner circumference of the optical disc 100 and is the farthest from the reproduced light entrance side. The management region 101 is a region which does not need to be subjected to tracking control or a bar-code recording region (a management region recording region) which is accessible only by focus control. The optical disc device 1 is designed to first read information recorded in the management region 101 when the optical disc 100 is inserted thereinto. The management region 101 is also a region which allows writing of information therein only during production (i.e., a non-rewritable region). The management region 101 refers to a BCA (Burst Cutting Area) in the present embodiment.

In the management region 101, identification information indicative of a structure of an optical information recording medium is mainly recorded. The identification information is specifically exemplified by a type (a read-only type, a recordable type, a rewritable type) of a recording layer of the optical disc 100, a size of the optical disc 100, a version (related to a speed, etc.) of the optical disc 100, a polarity of a servo, a polarity of a recording mark, and a number unique to the optical disc 100. Pieces of the identification information may be recorded in any order (or arranged by any method) in the management region 101. Note that an order in which these pieces of the identification information are recorded is determined by a common standard or the like.

The read-in region 102 is provided for each recording layer of the optical disc 100 on an outer circumference of the management region 101. The read-in region 102 is a recording region to which reproduced light is emitted first (a region from which information is read out first) while the optical disc device 1 is carrying out a process with respect to each layer. The read-in region 102 is provided with a region which allows writing of information therein only during production (i.e., a non-rewritable region) and a region which allows rewriting of information thereinafter the optical disc 100 has been inserted into the optical disc device 1. For example, a standard requirement of recording/reproduction on the optical disc 100, information indicative of approval/disapproval of access (control of access) by the optical disc device 1 to the each layer, information indicative of locations of a defect produced during production and a defect produced during use, and the like are recorded in the read-in region 102. Note that the information indicative of the locations of the defects is recorded in a defect management region of each of the read-in region 102 and a read-out region 104.

The management region 101 or the non-rewritable region of the read-in region 102 is provided with recording areas A1 through A8 (see (a) of Fig. 4), and the layer type information is recorded in each of the recording areas A1 through A8. In a case where the layer type information is recorded in the management region 101 or the read-in region 102, which is provided on the most inner circumference of the disc, the optical disc device 1 can easily and collectively obtain the layer type information.

The management region 101 or the non-rewritable region of the read-in region 102 is further provided with recording areas B0 through B7 (see (c) of Fig. 4), and the layer specifying information for specifying a recording layer to be run first when the optical disc 100 is inserted into the optical disc device 1 is recorded in each of the recording areas B0 through B7. Namely, the layer specifying information may be recorded in the management region 101 or the non-rewritable region of the read-in region 102. Note that the recording areas B0 through B7 may be provided in each of the management region 101 and the read-in region 102.

Next, (b) of Fig. 3 illustrates an arrangement of the optical disc 100 in a case where recording layers are referred to as recording layers L0, L1, ... from the recording layer which is the farthest from the reproduced light entrance side and the recording layer L0 is the RE layer and the recording layer L1 is the ROM layer. The recording layer L0 (RE layer) is provided with the management region 101, the read-in region 102, a user data region 103, and the read-out region 104 (see (b) of Fig. 3). Note that, since the management region 101 and the read-in region 102 are described above, a description thereof is omitted here.

In the user data region 103, various pieces of information including an application such as an OS (Operating System) and content is recorded (or can be recorded). For example, in the user data region 103 of the ROM layer, an application prepared by the disc supplier and content is preliminarily recorded. In the user data region 103 of the RE layer, information which is recorded by the optical disc device 1 such as content recorded by the user and application version upgrade information are recorded.

In the read-out region 104, which is normally provided on the most outer circumference of each layer of the optical disc 100, information indicative of the locations of the defects (described earlier) and the like is recorded.

Note that (b) of Fig. 3 illustrates only the recording layers L0 and L1. Alternatively, a recording layer may be further provided on the reproduced light entrance side. According to the present embodiment, the optical disc 100 may have up to eight recording layers since the recording areas A1 through A8 in each of which the layer type information is recorded are prepared.

As described earlier, according to the optical disc 100, the layer specifying information is recorded for specifying a recording layer to be run first when the optical disc 100 is inserted into the optical disc device 1 which carries out recording or reproduction of information with respect to the optical disc 100. Alternatively, the optical disc 100 may be arranged such that the layer specifying information for specifying a recording layer to be run first when the optical disc 100 is inserted into the optical disc device 1 is recorded in the management region 101 in which the identification information indicative of the structure of the optical disc 100 is recorded or the rewritable recording layer (RE layer).

This makes it possible to preliminarily record, in the optical disc 100, information for specifying which of a plurality of recording layers of the optical disc 100 is the running layer when the optical disc 100 is inserted into the optical disc device 1. Further, since the disc supplier can record the layer specifying information for each optical disc 100, a recording layer intended by the disc supplier can be run first when the optical disc 100 is inserted into the optical disc device 1. This means that it is possible for the disc supplier to cause a function desired by the disc supplier to operate earlier.

In addition, for example, in a case where the layer specifying information in accordance with an instruction from the user is recorded, a recording layer which the user desires to run first can be specified. Namely, in this case, a recording layer intended by the user can be run first. This means that it is possible for the user to cause a function desired by the user to operate earlier.

In short, according to the optical disc 100, a recording layer intended by at least the disc supplier can be run first when the optical disc 100 is inserted into the optical disc device 1. This means that it is possible for at least the disc supplier to cause a function desired by at least the disc supplier to operate earlier.

### [Layer Type Information and Layer Specifying Information]

Next, the following description discusses, with reference to (a) of Fig. 4 through (c) of Fig. 4, (i) the layer type information and the layer specifying information each of which is recorded in the optical disc 100 and (ii) the recording layer-recording area correspondence table T1 which is recorded in the optical disc device 1. Fig. 4 shows various pieces of information which are stored in the optical disc device or the optical disc in accordance with the first embodiment of the present invention. Note that the optical disc 100 which has eight recording layers L0 through L7 is described here.
(a) of Fig. 4 shows an example of the layer type information recorded in each of the recording areas A1 through A8. The present embodiment describes the layer type information assuming that "01" indicates the ROM layer, "10" indicates the RE layer, and "11" indicates the R layer. Alternatively, it is possible to cause two-bit information and a layer type to freely correspond to each other. Note that "00" indicates no layer, i.e., that there exists no recording layer.
   In (a) of Fig. 4, the recording area A1 indicated by "10" shows that a recording type corresponding to the recording area A1 is the RE layer. Similarly, the recording areas A2 through A4 each indicated by "01" show that a recording type corresponding to each of the recording areas A2 through A4 is the ROM layer. The recording areas A5 through A8 each indicated by "00" show that there exists no recording layer that corresponds to each of the recording areas A5 through A8.
   In short, in a case where the optical disc device 1 accesses the recording areas A1 through A8 so as to read the layer type information, the optical disc device 1 finds that the number of recording layers of the optical disc 100 (see (a) of Fig. 4) is four.
(b) of Fig. 4 shows an example of the recording layer-recording area correspondence table T1 stored in the drive-side storage section 27.
   In (b) of Fig. 4, "Recording layer-Example 1" shows that the recording areas A1 through A8 correspond to the respective recording layers L0 through L7. "Recording layer-Example 2" shows that the recording areas A1 through A8 correspond to the respective recording layers L7 through L0. "Recording layer-Example 3" shows a case where the recording areas A1 through A8 and the recording layers L0 through L7 randomly correspond to each other.
   In short, when obtaining the layer type information from the optical disc 100, the optical disc device 1 can determine, with reference to the recording layer-recording area correspondence table T1, which recording layer is of which layer type (e.g., the ROM layer or the RE layer).
(c) of Fig. 4 shows an example of a structure of the layer specifying information (Default Volume specifying information). In a case where the layer specifying information is recorded in the optical disc 100, the recording areas B0 through B7 are provided in a region (the management region 101 or the read-in region 102) that is different from a region in which the recording areas A1 through A8 are provided. One-bit information is recorded in each of the recording areas B0 through B7.
   In each of the recording areas B0 and B1, information (a "layer type") for specifying a type of a recording layer (running layer) to be run first when the optical disc 100 is inserted into the optical disc device 1 is recorded. For example, in a case where the layer type of the ROM layer is specified, "1" is recorded in the recording area B0 and "0" is recorded in the recording area B1.

In each of the recording areas B2 through B4, information (a "layer number") for specifying the number of the running layer is recorded. The layer number indicates which number the running layer is from the substrate side (a side opposite from the reproduced light entrance side, a substrate is not illustrated). For example, in a case where the layer number of the recording layer L1 is specified, "1" is recorded in the recording area B2, "0" is recorded in the recording area B3, and "0" is recorded in the recording area B4.

In the recording area B6, information (a "volume selection") indicative of which of the information for specifying the layer type and the information for specifying the layer number to use to specify the running layer is recorded. For example, in a case where the information for specifying the layer type is used, "0" is recorded in the recording area B6.

In the recording area B7, information indicative of whether or not the layer specifying information is recorded in the specific region of the read-in region 102 ("existence or nonexistence of a default volume in the specific region") is recorded. For example, in a case where the layer specifying information is recorded in the specific region, "1" is recorded in the recording area B7. Note that "Reserved" is recorded in the recording area B5. This shows that the recording area B5 contains no bit information.

In short, the optical disc device 1 which has obtained the layer specifying information from the optical disc 100 can determine which layer of the optical disc 100 to run. Note that, since the layer specifying information recorded in the optical disc 100 is in conformity with the ATAPI command, the optical disc device 1 which has obtained the layer specifying information can read the "layer type", the "layer number" and the "volume selection" each of which is the layer specifying information. Namely, a structure in which the layer specifying information is exchanged as the ATAPI command between the drive unit 2 and the host unit 3 corresponds to the recording areas B0 through B7. Note that the ATAPI command is described later.

Namely, the layer specifying information is information for specifying the layer type of the running layer recognized by the running layer recognizing section 24 as a recording layer to be run first. In this case, the optical disc device 1 can access the running layer by use of the layer type. For example, in a case where the optical disc 100 has a two-layer structure of one (1) ROM layer and one (1) RE layer, it is possible to securely (uniquely) specify the running layer.

Assume here that the optical disc 100 has recording layers of identical types (e.g., a four-layer structure of two ROM layers and two RE layers) (i.e., has volumes of identical types). In a case where the layer specifying information indicates the ROM layer, the optical disc device 1 accesses the ROM layer which is close to the recording layer L0. In a case where the layer specifying information indicates the RE layer, the optical disc device 1 accesses the RE layer which (i) is close to the recording layer L0 and (ii) is a region which allows recording of information therein. Accordingly, the layer type also allows unique determination of a recording layer which is desired to be run first.

In contrast, in the case of the optical disc 100 described above (a multilayer medium having identical volumes), in order to make it possible to more securely (uniquely) specify a recording layer to be run first, the present embodiment may be arranged such that information for specifying the layer number of the running layer recognized by the running layer recognizing section 24 as a recording layer to be run first is specified as the layer specifying information. Especially in a case where each recording layer has a different application, it can be securely specified which application to be run first. Namely, it is unnecessary to reproduce applications in an order which is normally set in a recording/reproducing device (e.g., in an order from a recording layer which is close to the recording layer L0). This makes it possible to first run an application which the disc supplier or the user desires to run when the optical disc 100 is inserted into the optical disc device 1. Note that the layer specifying information to be rewritten by the layer information writing section 25 is also information for specifying the layer type of the running layer or information for specifying the layer number of the running layer.

### [How Running Process is Carried Out by the Optical Disc Device 1 (How Commands are Exchanged)]

The following description discusses, with reference to Figs. 5 through 9, an example of how commands are exchanged between the drive unit 2 and the host unit 3 from when the optical disc 100 is inserted into the optical disc device 1 to when information recorded in the optical disc 100 is run. Fig. 5 is a timing chart showing how the commands are exchanged between the drive unit 2 and the host unit 3 during a running process carried out in response to insertion of the optical disc 100 into the optical disc device 1. Fig. 9 is a flowchart illustrating how the optical disc device 1 carries out processes.

In the host unit 3, in order to determine whether or not an optical disc has been loaded in the optical disc device 1, the command control section 311 of the host-side control section 31 transmits a "TEST UNIT READY" command to the drive unit 2 at a given timing (S1) (see Fig. 5). In the drive unit 2, in a case where the disc loading determining section 22 of the drive-side control section 20 receives the detection signal from the disc loading recognizing section 6 when receiving the "TEST UNIT READY" command (S2), the disc loading determining section 22 determines that the optical disc has been loaded in the optical disc device 1 and returns a "READY" command to the host unit 3 (S3). In contrast, in a case where the disc loading determining section 22 does not determine that the optical disc has been loaded in the optical disc device 1, the disc loading determining section 22 returns a "NOT READY" command to the host unit 3. In this case, the host unit 3 transmits the "TEST UNIT READY" command until the "READY" command returns thereto.

Next, in the host unit 3, when the "READY" command returns from the drive unit 2 (S4), the command control section 311 of the host-side control section 31 transmits, to the drive unit 2, a "GET CONFIGURATION" command as a command for inquiring whether the optical disc has a feature of a hybrid disc (S5).

Namely, the optical disc device 1 determines, at the stage of S4, that the optical disc has been inserted thereinto (S21 in Fig. 9).

In the drive unit 2, when receiving the "GET CONFIGURATION" command (S6), the layer information obtaining section 23 of the drive-side control section 20 carries out a process for, for example, obtaining feature information of the "GET CONFIGURATION" command, so as to determine whether or not the optical disc is a hybrid disc. Specifically, the layer information obtaining section 23 notifies the recording/reproducing circuit group control section 26 to access the management region located on the most inner circumference of the recording layer L0. The recording/reproducing circuit group control section 26 which has received the notification drives the recording/reproducing circuit group 10 to access the management region, so as to obtain, from the reproducing circuit 15, information (disc information) read from the management region. Then, the recording/reproducing circuit group control section 26 transmits, to the layer information obtaining section 23, the disc information obtained from the reproducing circuit 15. Note that, in a case where there is no disc information in the management region, the layer information obtaining section 23 may notify the recording/reproducing circuit group control section 26 to access the non-rewritable region of the read-in region. Namely, in this case, the disc information is recorded in the non-rewritable region of the read-in region.

The layer information obtaining section 23 which has received the disc information analyzes the disc information, so as to determine whether or not the inserted optical disc is a hybrid disc and to return, to the host unit 3, a result of the determination as the feature information (S7).

In the host unit 3, when receiving, as the feature information, the result showing that the optical disc is a hybrid disc (i.e., the optical disc 100) (S8), the command control section 311 of the host-side control section 31 carries out a process for reading out the layer specifying information on the optical disc 100. First, in order to inquire whether or not the layer specifying information exists in the specific region of the read-in region 102, the command control section 311 transmits, to the drive unit 2, a "READ DEFAULT VOLUME" command for carrying out the inquiry (S9).

Namely, the optical disc device 1 recognizes, at the stage of S8, that the inserted optical disc is a hybrid disc (the optical disc 100) (S22 in Fig. 9).

In the drive unit 2, when receiving the "READ DEFAULT VOLUME" command (S10), the layer information obtaining section 23 of the drive-side control section 20 carries out a process for, for example, obtaining Default Volume of the "READ DEFAULT VOLUME" command (a new Vendor unique command), so as to determine whether or not the layer specifying information exists in the specific region.

Specifically, the layer information obtaining section 23 notifies the recording/reproducing circuit group control section 26 to access the specific region. The recording/reproducing circuit group control section 26 which has received the notification drives the recording/reproducing circuit group 10 to access the specific region, so as to obtain, from the reproducing circuit 15, information read from the specific region. Then, the recording/reproducing circuit group control section 26 transmits, to the layer information obtaining section 23, the information obtained from the reproducing circuit 15.

The layer information obtaining section 23 determines whether or not the layer specifying information exists in the information, received from the recording/reproducing circuit group control section 26 (i.e., whether or not the layer specifying information exists in the specific region of the read-in region 102), so as to return, to the host unit 3, a result of the determination as Default Volume information (S11). Note that Fig. 6 shows an example of the "READ DEFAULT VOLUME" command. (a) of Fig. 6 shows an example of the "READ DEFAULT VOLUME" command to be transmitted from the host unit 3. (b) of Fig. 6 illustrates the Default Volume information (response data) to be returned from the drive unit 2. A bit arrangement (see Fig. 6) is merely an example and can be appropriately modified.

In the host unit 3, when receiving the result as the Default Volume information (S 12), the command control section 311 of the host-side control section 31 analyzes the result, so as to determine whether or not the layer specifying information which has been updated by the user is recorded in the optical disc 100. The command control section 311 which has determined that the updated layer specifying information is recorded in the optical disc 100 stores the updated layer specifying information in the host-side storage section 35.

Next, the command control section 311 transmits a "READ DISC STRUCTURE" command to the drive unit 2 (S13). Namely, the command control section 311 issues the "READ DISC STRUCTURE" command (S23 in Fig. 9). The "READ DISC STRUCTURE" command, which indicates an instruction to read information recorded in the management region 101 (an inner circumference management region), is a command for inquiring the number of volumes (information indicative of the number of layers), a volume type (the layer type information), and a default volume (the layer specifying information).

In the drive unit 2, when receiving the "READ DISC STRUCTURE" command (S14), the layer information obtaining section 23 of the drive-side control section 20 carries out a process for, for example, obtaining New Hybrid Disc Information of the "READ DISC STRUCTURE" command, so as to obtain, from the optical disc 100, the pieces of information described above. Note that Fig. 7 shows an example of the New Hybrid Disc Information to be returned by the "READ DISC STRUCTURE" command. A bit arrangement (see Fig. 7) is merely an example and can be appropriately modified.

Specifically, the layer information obtaining section 23 notifies the recording/reproducing circuit group control section 26 to access the management region 101. The recording/reproducing circuit group control section 26 which has received the notification drives the recording/reproducing circuit group 10 to access the management region 101, so as to obtain, from the reproducing circuit 15, information (the layer type information and the layer specifying information) read from the management region 101. Then, the recording/reproducing circuit group control section 26 transmits, to the layer information obtaining section 23, the layer type information and the layer specifying information each obtained from the reproducing circuit 15.

The layer information obtaining section 23 returns, to the host unit 3, as the New Hybrid Disc Information, the layer type information and the layer specifying information each received from the recording/reproducing circuit group control section 26 (S15). Note that, in a case where no layer specifying information is recorded in the management region 101, the layer information obtaining section 23 obtains only the layer type information, so as to return to the host unit 3, as the New Hybrid Disc Information, the fact that no layer specifying information is recorded in the management region 101.

Namely, the drive unit 2 returns the number of volumes, a volume type, and a default volume to the host unit 3 at the stage of S15 (S24 in Fig. 9).

In the host unit 3, when receiving the New Hybrid Disc Information (S16), the command control section 311 of the host-side control section 31 stores, in the host-side storage section 35, the received layer type information and the received layer specifying information. In this case, the command control section 311 transmits, to the display control section 312, an instruction to inquire of the user whether or not the received layer specifying information is desired layer specifying information. The display control section 312 which has received the instruction causes the display section 33 to display (i) layer types of recording layers of the optical disc 100 and (ii) an image representing information such as which recording layer is the running layer, whether or not to run the running layer, and which another recording layer to specify as the running layer in a case where that recording layer is not run. Note that the command control section 311 which has obtained the layer specifying information from the specific region inquires of the user whether or not to specify, as the running layer, a recording layer indicated by the layer specifying information obtained from the specific region.

In short, in a case where the layer information obtaining section 23 obtains the layer specifying information from each of the management region 101 and the specific region and receives no instruction from the user to change the layer specifying information, the command control section 311 carries out a process so that the running layer recognizing section 24 can recognize, as the running layer, the recording layer indicated by the layer specifying information obtained from the specific region. This is because it can be said that the layer specifying information recorded in the specific region has been rewritten in accordance with, for example, an instruction from the user while being used by the optical disc 100 in the optical disc device 1.

Namely, at the stage of S16, the optical disc device 1 makes an inquiry to the user so as to determine whether or not the default volume recorded in the optical disc 100 is a default volume desired by the user (S25 in Fig. 9).

The host-side control section 31 causes the operation section 32 to obtain an input from the user, so as to determine which recording layer is the running layer desired by the user. The host-side control section 31 which has determined that the user does not desire to run a recording layer indicated by the layer specifying information stored in the host-side storage section 35 (NO at S25 in Fig. 9) rewrites the layer specifying information stored in the host-side storage section 35 to the layer specifying information indicative of a recording layer which the user desires to run. Namely, the host-side control section 31 determines that a change has occurred in the layer specifying information recorded in the optical disc 100.

In response to the determination by the host-side control section 31 of the change in the layer specifying information, the command control section 311 reads out the layer specifying information (the changed layer specifying information) stored in the host-side storage section 35, so as to transmit the layer specifying information as a "SET DEFAULT VOLUME" command (a new Vender unique command) to the drive unit 2 (S17). Note that Fig. 8 shows an example of the "SET DEFAULT VOLUME" command. A bit arrangement (see Fig. 8) is merely an example and can be appropriately modified.

Namely, in the host unit 3, the command control section 311 of the host-side control section 31 specifies a default volume desired by the user as the "SET DEFAULT VOLUME" command at the stage of S17 (S28 in Fig. 9), so as to issue the "SET DEFAULT VOLUME" command (S29 in Fig. 9).

In the drive unit 2, when receiving the "SET DEFAULT VOLUME" command (S18), the layer information writing section 25 of the drive-side control section 20 rewrites the layer specifying information stored in the specific region to the layer specifying information described in the "SET DEFAULT VOLUME" command. In contrast, in a case where no layer specifying information is stored in the specific region, the layer information writing section 25 newly writes the layer specifying information described in the "SET DEFAULT VOLUME" command. Therefore, the layer information writing section 25 instructs the recording/reproducing circuit group control section 26 to rewrite (write) the layer specifying information described in the "SET DEFAULT VOLUME" command. Note that in this case, the layer information writing section 25 stores, in the drive-side storage section 27, the layer specifying information to be rewritten (written).

Note that it is normally preferable for the layer information writing section 25 to write the layer specifying information in the specific region of the read-in region 102 of the recording layer L0. This is because, since the read-in region 102 is adjacent to the management region 101, it is unnecessary to cause the recording/reproducing circuit group 10 to carry out focus control during the movement between the management region 101 and the read-in region 102.

Next, in the host unit 3, for example, after a given time has passed from the process at S17, the command control section 311 of the host-side control section 31 transmits, to the drive unit 2, a "START STOP UNIT" command for instructing the running layer indicated by the layer specifying information to be subjected to focus control (S19). Namely, the command control section 311 issues the "START STOP UNIT" command (S30 in Fig. 9). Note that a new command which complies with the optical disc 100 of the present embodiment may be prepared as the "START STOP UNIT" command.

In the drive unit 2, when receiving the "START STOP UNIT" command (S20), the running layer recognizing section 24 of the drive-side control section 20 reads out the layer specifying information stored in the drive-side storage section 27, so as to recognize a recording layer indicated by the layer specifying information as the running layer. Then, the running layer recognizing section 24 instructs the recording/reproducing circuit group control section 26 to run information recorded in the running layer. This allows the drive unit 2 to carry out focus control with respect to the running layer indicated by the layer specifying information and run the information recorded in the running layer.

Namely, at the stage of S20, the drive unit 2 moves a focus position to a volume changed (specified) by the user (S31 in Fig. 9).

Note that, in a case where during the process at S16, the host-side control section 31 determines that the running layer desired by the user by the input from the user to the operation section 32 is the recording layer indicated by the layer specifying information (the layer specifying information recorded in the specific region) recorded in the optical disc 100 (YES at S25 in Fig. 9), it is only necessary that the host-side control section 31 carry out the process at S 19 without carrying out the process at S 17. Namely, the command control section 311 issues the "START STOP UNIT" command (S26 in Fig. 9). The drive unit 2 which has received the "START STOP UNIT" command moves the focus position to the default volume indicated by the layer specifying information recorded in the optical disc 100 (S27 in Fig. 9).

As described earlier, according to the optical disc device 1 (and a method for controlling the optical disc device 1), when the optical disc 100 is inserted into the optical disc device 1, the layer information obtaining section 23 (the obtaining step) obtains the layer specifying information and the running layer recognizing section 24 (the recognizing step) recognizes, as the running layer, a recording layer indicated by the obtained layer specifying information.

According to this, a recording layer to be run first can be specified when the optical disc 100 is inserted into the optical disc device 1. Consequently, a recording layer which the disc supplier or the user desires to run can be run when the optical disc 100 is inserted into the optical disc device 1.

In a case where an application recorded in the ROM layer is an OS, it is possible to specify the layer specifying information so as to cause the ROM layer to be the running layer. Therefore, for example, also in a case where the optical disc device 1 is provided in a PC (Personal Computer) having no OS, it is possible to boot the OS.

### [Version Upgrade]

Next, the following description discusses a process to be carried out in a case where a version upgrade is carried out with respect to the application (OS) recorded in the ROM layer of the optical disc 100.

In the host unit 3, when receiving, via the transmitting/receiving section 34, version upgrade information for carrying out the version upgrade, the communication control section 313 of the host-side control section 31 notifies the command control section 311 that the communication control section 313 has received the version upgrade information. The command control section 311 transmits the version upgrade information as the ATAPI command to the layer information writing section 25.

The layer information writing section 25 which has received the version upgrade information instructs the recording/reproducing circuit group control section 26 to write the version upgrade information in the RE layer (or the R layer) of the optical disc 100. In this case, a recording layer in which the layer information writing section 25 writes the version upgrade information is preliminarily set in the drive unit 2. For example, the recording layer may be set as a region of the recording layer L0 (RE layer) of the inserted optical disc 100 in which region the version upgrade information can be recorded (no information has been recorded).

The layer information writing section 25 which has given the instruction transmits, to the host unit 3, as the ATAPI command, the recording layer in which the version upgrade information has been written. In the host unit 3, in order to cause the recording layer to be run first next time the optical disc 100 is inserted into the optical disc device 1, the command control section 311 of the host-side control section 31 rewrites the layer specifying information stored in the host-side storage section 35. Then, in order to write the rewritten layer specifying information in the optical disc 100, the command control section 311 transmits the rewritten layer specifying information as the "SET DEFAULT VOLUME" command to the drive unit 2. As in the case of S 18 in Fig. 5, the drive unit 2 which has received the "SET DEFAULT VOLUME" command rewrites the layer specifying information recorded in the specific region to the received layer specifying information (newly writes the received layer specifying information).

According to this, the optical disc device 1 can cause the recording layer in which the version upgrade information has been recorded to be run first next time the optical disc 100 is inserted thereinto. This makes it possible to run an application which has been subjected to the version upgrade. Therefore, the optical disc device 1 can enhance convenience for the user, e.g., can reduce the running process time, can simplify the processes carried out by the optical disc device 1 to run the application, and can save the user time as compared to an arrangement such that the application which has been subjected to the version upgrade cannot be run first.

In a case where an application recorded in the ROM layer is an OS, it is possible to specify the layer specifying information so as to cause the RE layer (or R layer) in which the version upgrade information is recorded to be the running layer. Therefore, for example, also in a case where the optical disc device 1 is provided in a PC (Personal Computer) having no OS, it is possible to boot the OS which has been subjected to the version upgrade.

### [Second Embodiment]

A second embodiment of the present invention is described below with reference to Figs. 10 through 17. Note that members which are similar to those of the respective members described in First Embodiment are given respective identical reference numerals, and a description of those members is omitted here.

### [Volume Pack]

According to the present embodiment, the information for specifying a recording layer (running layer) to be run first when the optical disc 100 is inserted into the optical disc device 1 further includes a "volume pack number" in addition to the "layer type" and the "layer number".

In other words, information (the "volume pack number") for specifying a volume pack of the running layer is recorded in the optical disc 100 as the layer specifying information. The layer specifying information which is written by the layer information writing section 25 of the optical disc device 1 includes the information for specifying a volume pack of the running layer. Note here that the following description takes the volume pack number as an example of the information for specifying a volume pack. Alternatively, a sign which can specify each volume pack may be used as the information for specifying a volume pack.

According to the arrangement, it is possible to recognize the running layer by use of the volume pack number. That is, in a case where one (1) volume pack is specified by use of the volume pack number in the optical disc 100 having a plurality of volume packs which are logical management units, the optical disc device 1 can specify a recording layer group (in a case where one (1) volume pack is constituted by a single-layer recording layer, the single-layer recording layer is specified as the recording layer group) which is a management unit that can be controlled by the optical disc device 1. Therefore, for example, a function which the user desires to use can be run earlier.

Note here that the "volume pack", which is a logical management unit which can be recognized by the optical disc device 1, refers to one (1) management unit (one (1) recording region) including at least one recording layer. The volume pack includes at least one layer type which has logical sector numbers that are continuously arranged with respect to user data throughout the entire cluster and is constituted by a recording layer included in a separate volume.

In a case where the volume pack is used, the optical disc device 1 can handle, as one (1) management unit (like one (1) auxiliary storage device), each of volume packs to which respective volume pack numbers are assigned. According to the present embodiment, since a management unit which can be controlled (recognized) by the optical disc device 1 is the volume pack, the optical disc device 1 can control only one volume pack at one time and cannot control another volume pack. That is, the "volume pack" is a "management unit which can be controlled (recognized) by the optical disc device 1 at one time".

Normally, since a function (an application) loaded in each volume pack differs in many cases, specification of the function by the volume pack is effective in increasing a read-out speed for each function, i.e., enhancing convenience.

For example, in a case where the optical disc device 1 preliminarily determines which recording layer in a volume pack to recognize as the running layer, it is only necessary that the optical disc device 1 grasp recording layers as much as the volume pack for the recognition without the need of grasping all the plurality of recording layers of the optical disc 100. Note that the optical disc device 1 normally needs to clearly grasp a disc structure of the optical disc 100 so as to read out information from a recording layer.

Therefore, the optical disc device 1 can recognize the running layer more easily and faster as compared to an arrangement such that the running layer is specified for each recording layer. The optical disc device 1 is useful especially in a case where the optical disc 100 is further multilayered.

A plurality of recording layers which are different in layer type may be specified as one (1) volume pack, and a recording layer of an identical layer type may exist in another volume pack. This allows the disc supplier to set the layer specifying information more freely. In this respect, the volume pack can be said to be different from the layer type, which is simple.

Note that the present embodiment describes above the example such that the optical disc device 1 can control only one volume pack at one time. However, an actual arrangement of the optical disc device 1 is not limited to this. The optical disc device 1 may control a plurality of volume packs at one time. A technical idea of the present embodiment resides in that the optical disc device 1 can recognize the running layer more easily and faster by specifying the running layer by use of information for specifying a volume pack as compared to an arrangement such that the running layer is specified by use of the layer number. It does not matter to the technical idea of the present embodiment whether the optical disc device 1 can control one volume pack or a plurality of volume packs at one time.

### [Assignment of Volume Pack (Part 1)]

The following description more specifically discusses a volume pack with reference to the drawings. First, the following description discusses, with reference to Figs. 10 through 14, a case where recording layers of an identical layer type exist in a plurality of volume packs (each volume pack consists of recording layers of an identical layer type).

Fig. 10 shows an example of a layer structure of the optical disc 100. Fig. 10, which shows a case of a six-layer structure as an example of the layer structure, illustrates the optical disc 100 in which the recording layer L0 which is the farthest from the reproduced light entrance side through the recording layer L3 are the RE layers and the recording layers L4 and L5 are the ROM layers. For example, the RE layers which are the recording layers of an identical type are assigned a "volume pack #0" and a "volume pack # 1".

Volume pack numbers are set in the optical disc 100 as follows: The "volume pack #0" is set for each of the recording layers L0 and L1, the "volume pack #1" is set for each of the recording layers L2 and L3, and a "volume pack #2" is set for each of the recording layers L4 and L5.

Note that in this example, "#0" is assigned from the recording layer L0 side. Alternatively, provided that each volume pack can be specified, the volume pack numbers may be set freely, e.g., "#0" may be set from the recording layer which is the closest to the reproduced light entrance side. Note also that the volume pack numbers are set by the disc supplier during production, for example.

Note here that the optical disc device 1 is arranged to recognize, as the running layer, a recording layer which is the farthest from the reproduced light entrance side in one (1) volume pack which is set as the layer specifying information. According to the optical disc 100 (see Fig. 10), in a case where the "volume pack #0" is specified as the layer specifying information, the optical disc device 1 recognizes the recording layer L0 as the running layer, so as to access the recording layer L0. In a case where the "volume pack #1" is specified as the layer specifying information, the optical disc device 1 recognizes the recording layer L2 as the running layer, so as to access the recording layer L0. Accordingly, the volume pack can also be used to determine a recording layer to be run first.

Next, Fig. 11 shows an example of the layer number and the volume pack number which are recorded in each layer of the optical disc 100. The layer type information of the each layer, the layer number, and the volume pack number are recorded in the read-in region 102 of the each layer of the optical disc 100 so that each of the layer number and the volume pack number corresponds to the layer type information. According to the present embodiment, the optical disc device 1 reads out the layer type information, the layer number, and the volume pack number from the read-in region 102 of the each layer, so as to determine which recording layer is of which layer type and which volume pack is specified for which recording layer.

For example, in the case of the optical disc 100 (see Fig. 10), the layer type information "011", the layer number "000", and the volume pack number "000" are recorded in the read-in region 102 of the recording layer L0. The layer type information "001", the layer number "100", and the volume pack number "010" are recorded in the recording layer L4.

The present embodiment describes the layer type information assuming that "001" indicates the ROM layer, "010" indicates the R layer, and "011" indicates the RE layer. Alternatively, it is possible to cause three-bit information and a layer type to freely correspond to each other. Note that "000" indicates no layer, i.e., that there exists no recording layer.

According to the present embodiment, the volume pack numbers are assigned as three-bit information as follows: The "volume pack #0" is assigned as "000", the "volume pack #1" is assigned as "001", and the "volume pack #2" is assigned as "010". Alternatively, it is only necessary that the volume pack numbers be assigned as bit information which can discriminate all the volume packs.

Note that according to the present embodiment, the layer type information, the layer number, and the volume pack number are recorded in each layer of the optical disc 100 and the optical disc device 1 accesses the read-in region 102 of the each layer, so as to determine the layer type, the layer number, and the volume pack number of the each layer. Alternatively, for example, as in the case of First Embodiment, the present embodiment may be arranged such that the layer type information is recorded in each of the recording areas A1 through A8 (see (a) of Fig. 4) and the recording layer-recording area correspondence table T1 (see (b) of Fig. 4) is stored in the drive-side storage section 27 of the optical disc device 1.

In this case, three-bit information as the layer type information can be stored in each of the recording areas A1 through A8. Volume pack numbers (three-bit information) are stored in the management region 101 or the non-rewritable region of the read-in region 102 so as to correspond to the recording areas A1 through A8. Note that six-bit information indicative of the layer type information and the volume pack number may be stored in each of the recording areas A1 through A8. In this case, In this case, when the RE layer is "011" and the volume pack number is "001", "011001" is stored.

The optical disc device 1 reads out the layer type information, so as to determine, with reference to the recording layer-recording area correspondence table T1, which recording layer is of which layer type. Further, the optical disc device 1 reads out the volume pack number, so as to determine which volume pack is specified for which recording layer.

Next, the following description discusses, with reference to Fig. 12, an example of a structure of the recording areas B0 through B7 in accordance with the present embodiment (a structure of the layer specifying information). Fig. 12 illustrates the structure of the layer specifying information in accordance with the present embodiment. The structure of the layer specifying information makes it possible to use, as the layer specifying information, not only the layer type and the layer number but also the volume pack number.

In each of the recording areas B0 through B2, information (a "layer type") for specifying a type of a recording layer (running layer) to be run first when the optical disc 100 is inserted into the optical disc device 1, information (a "layer number") for specifying a layer number of the running layer, or information (a "volume pack number") for specifying a volume pack of the running layer is recorded in accordance with information to be recorded in each of the recording areas B5 and B6 (described later). Note that the information to be recorded in each of the recording areas B0 through B2 may be described as "volume information".

In each of the recording areas B5 and B6, information (a "volume selection") indicative of which of the information for specifying the layer type, the information for specifying the layer number, and the information for specifying the volume pack to use to specify the running layer is recorded.

In the recording area B7, information indicative of whether or not the layer specifying information is recorded in the specific region of the read-in region 102 ("existence or nonexistence of a default volume in the specific region") is recorded. For example, in a case where the layer specifying information is recorded in the specific region of the read-in region 102, "1" is recorded in the recording area B7.

For example, assume that the "volume pack # 1" is specified in the optical disc 100 (see Fig. 10). "0" is recorded in the recording area B5 and "1" is recorded in the recording area B6. "1" is recorded in the recording area B0, "0" is recorded in the recording area B1, and "0" is recorded in the recording area B2.

In short, the optical disc device 1 which has obtained the layer specifying information from the optical disc 100 can determine a recording layer of the optical disc 100 in which volume pack to run. Note that, since the layer specifying information recorded in the optical disc 100 is in conformity with the ATAPI command, the optical disc device 1 which has obtained the layer specifying information can read the "volume information" in accordance with the "volume selection". Namely, a structure in which the layer specifying information is exchanged as the ATAPI command between the drive unit 2 and the host unit 3 corresponds to the recording areas B0 through B7.

Next, the following description discusses, with reference to Figs. 13 and 14, an example of how commands are exchanged between the drive unit 2 and the host unit 3 in the present embodiment from when the optical disc 100 is inserted into the optical disc device 1 to when information recorded in the optical disc 100 is run. Since the commands are exchanged in accordance with the timing chart (see Fig. 5) (in which it is assumed that the "volume pack number" as well as the "layer number" and the "layer type" is used as the layer specifying information), a description of how the commands are exchanged is omitted here.
(a) of Fig. 13 shows an example of the "READ DEFAULT VOLUME" command to be transmitted from the host unit 3 in the process at S10 illustrated in Fig. 5. (b) of Fig. 13 illustrates the Default Volume information (response data) to be returned from the drive unit 2. A bit arrangement (see Fig. 13) is merely an example and can be appropriately modified.

The "READ DEFAULT VOLUME" command (see (a) of Fig. 13) is identical to the "READ DEFAULT VOLUME" command (see (a) of Fig. 6) used in First Embodiment, whereas the Default Volume information (see (b) of Fig. 13) is different from the Default Volume information used in First Embodiment and is arranged to correspond to the recording areas B0 through B7 of the present embodiment.

Fig. 14 shows an example of the "SET DEFAULT VOLUME" command to be transmitted from the host unit 3 in the process at S17 illustrated in Fig. 5. The "SET DEFAULT VOLUME" command (see Fig. 14) is also different from the "SET DEFAULT VOLUME" used in First Embodiment and is arranged to correspond to the recording areas B0 through B7 of the present embodiment.

### [Assignment of Volume Pack (Part 2)]

As another example of the optical disc 100 in accordance with the present embodiment, the following description discusses, with reference to Figs. 15 through 17, a case where each of different layer types is assigned one (1) volume pack.

Fig. 15 illustrates a modification of a layer structure of the optical disc 100 (see Fig. 10). Fig. 15, which shows a case of a four-layer structure as an example of the modification, illustrates the optical disc 100 in which the recording layer L0 which is the farthest from the reproduced light entrance side is the RE layer, the recording layer L1 is the R layer and the recording layers L2 and L3 are the ROM layers. In Fig. 15, each of the RE layer and the R layer which are different in layer type is assigned one (1) volume pack for which the "volume pack #0" is set.

Fig. 16 shows an example of the layer number and the volume pack number which are recorded in each layer of the optical disc 100 (see Fig. 15). As in the case of Fig. 11, the layer type information of the each layer, the layer number, and the volume pack number are recorded in the read-in region 102 of the each layer of the optical disc 100 so that each of the layer number and the volume pack number corresponds to the layer type information. According to this, also for the optical disc 100 (see Fig. 15), the optical disc device 1 can determine which volume pack is which type of layer and is specified for which recording layer. Note that the recording layer-recording area correspondence table T1 may be used to carry out the determination as described above.

For example, a function which the user desires to use can be run earlier as described above in a case where the information for specifying a volume pack of the running layer is recorded as the layer specifying information in the optical disc 100 (see Fig. 10 or Fig. 15) as described earlier. Further, since a volume pack which has a combination of various recording layers can be set in the optical disc 100 (see Fig. 10 or Fig. 15), the disc supplier can set the layer specifying information more freely.

Note that according to the present embodiment, the optical disc device 1 is arranged to recognize, as the running layer, a recording layer which is the farthest from the reproduced light entrance side in one (1) volume pack set as the layer specifying information. Therefore, in a case where the optical disc 100 (see Fig. 15) is inserted into the optical disc device 1 and the "volume pack #0" is set as the layer specifying information, the optical disc device 1 recognizes the recording layer L0 (RE layer) as the running layer and cannot recognize the recording layer L1 (R layer) as the running layer.

Not to mention, the optical disc device 1 which is arranged to recognize, as the running layer, a recording layer which is the closest to the reproduced light entrance side in one (1) volume pack set as the layer specifying information can recognize the recording layer L1 as the running layer. As described earlier, in a case where the optical disc device 1 preliminarily determines which recording layer in a volume pack to recognize as the running layer, the optical disc device 1 can run the running layer merely by recognizing the volume pack. This allows a quick access to the running layer. That is, it is possible for the disc supplier or the user to cause a function desired by the disc supplier or the user to operate earlier. Further, the optical disc device 1 allows simpler specification of the running layer without the need for the disc supplier or the user to be aware of a structure of all the recording layers as compared to an arrangement such that the layer number is used to recognize the running layer.

In order to recognize not only a volume pack but also the running layer without considering such an access speed, it is possible to use the layer specifying information (see Fig. 17), for example. Fig. 17 shows an example of a structure of the recording areas B0 through B7 of the optical disc 100 (see Fig. 15) (a structure of the layer specifying information).

Namely, the structure of the layer specifying information (see Fig. 17) is obtained by allowing the information ("layer type") for specifying the layer type of the running layer to be recorded in the recoding areas B3 and B4 in each of which "Reserved" is recorded in the structure of the layer specifying information (see Fig. 12). Note that, in a case where the volume pack number is selected as the layer specifying information (" 10" is recorded for the "volume selection"), the layer specifying information can be recorded in the recording areas B3 and B4 of Fig. 17.

### [Determination of Running Layer]

The above description of the present embodiment discusses a case where the optical disc device 1 preliminarily determines which recording layer (e.g., a recording layer which is the farthest from the reproduced light entrance side) in a volume pack the optical disc device 1 to recognize as the running layer. However, how the optical disc device 1 determines the running layer is not limited to this. Alternatively, provided that a volume pack is specified, the running layer may be logically selected by a file system stored in the host-side storage section 35. Namely, the optical disc device 1 may recognize, as the running layer, a recording layer logically selected by the file system in one (1) volume pack set as the layer specifying information.

According to the file system, in a case where the ROM layer, for example is selected, reproduction is carried out from the top of logical addresses (a corresponding layer number is recognized by the optical disc device 1). In a case where the RE layer is selected, recording is carried out from the top of free logical addresses (as described above, a corresponding layer number is recognized by the optical disc device 1). Use of operation of the file system allows the optical disc device 1 to determine the running layer without the need of preliminarily determining which recording layer in a volume pack to recognize as the running layer.

In a case where the optical disc device 1 determines the running layer by use of the file system, the optical disc device 1 does not need to grasp all the plurality of recording layers of the optical disc 100 and can run the running layer merely by recognizing a volume pack. This allows a quick access to the running layer. That is, it is possible for the disc supplier or the user to cause a function desired by the disc supplier or the user to operate earlier. Further, the optical disc device 1 allows simpler specification of the running layer without the need for the disc supplier or the user to be aware of a structure of all the recording layers as compared to an arrangement such that the layer number is used to recognize the running layer.

### [Another Expression of the Present Invention]

Note that the present invention can also be expressed as below.

A recording/ reproducing device in accordance with the present invention which reads and writes data by use of a recording medium having a plurality of layers, the recording/reproducing device includes: obtaining means for externally obtaining layer specifying information when the recording medium is inserted into the recording/reproducing device, the layer specifying information being information for specifying a layer to be run first; and recording layer recognizing means for causing the recording/reproducing device to recognize a running layer obtained by the obtaining means when the recording medium is inserted into the recording/reproducing device.

The recording/reproducing device in accordance with the present invention may be arranged such that the obtained layer specifying information is information for determining a layer type.

The recording/reproducing device in accordance with the present invention may be arranged such that the obtained layer specifying information is information for determining a layer number.

The recording/reproducing device in accordance with the present invention may be arranged such that the obtaining means uses layer specifying information contained in a bar-code management region in which disc information is recorded and which is located on the most inner circumference of a disc.

The recording/reproducing device in accordance with the present invention may be arranged such that the obtaining means is provided in a specific region of a rewritable layer.

A recording/reproducing device in accordance with the present invention which reads and writes data by use of a recording medium having a plurality of layers, the recording/reproducing device may be arranged to include: layer specifying information rewriting means for rewriting layer specifying information which is recorded in the recording medium so as to specify a layer that can be run first.

The recording/ reproducing device in accordance with the present invention may be arranged such that the layer specifying information rewriting means further has layer type determining information or layer number determining information.

A recording/reproducing device in accordance with the present invention which reads and writes data by use of a recording medium having a plurality of layers, the recording/reproducing device may be arranged to use layer specifying information contained in a memory of the recording/reproducing device in a case where the recording medium is inserted into the recording/reproducing device and the recording medium has no layer specifying information for specifying a layer to be run first.

The recording/reproducing device in accordance with the present invention may be arranged such that the layer specifying information is contained in the memory of the recording/reproducing device by recording medium type.

A method for controlling a recording/reproducing device in accordance with the present invention which reads and writes data by use of a recording medium having a plurality of layers, the method includes the steps of: (a) externally obtaining layer specifying information when the recording medium is inserted into the recording/ reproducing device, the layer specifying information being information for specifying a layer to be run first; and (b) causing the recording/reproducing device to recognize a running layer obtained by the obtaining means when the recording medium is inserted into the recording/reproducing device.

An information recording medium in accordance with the present invention which has a plurality of layers, the information recording medium includes: a bar-code management region which contains layer specifying information mentioned above and is located on the most inner circumference of a disc.

An information recording medium in accordance with the present invention which has a plurality of information recording layers, the information recording medium is arranged such that layer specifying information is recorded in (i) a management region in which identification information indicative of a structure of the information recording medium is recorded or (ii) a recordable information recording layer, the layer specifying information being information for specifying an information recording layer to be run first when the information recording medium is inserted into a recording/reproducing device which carries out recording or reproduction of information with respect to the information recording medium.

A recording/reproducing device is preferably arranged to include: writing means for writing, to a recordable information recording layer, layer specifying information in accordance with an instruction from a user.

### [Supplementation]

Finally, each block of the optical disc device 1, especially the drive-side control section 20 (the disc loading determining section 22, the layer information obtaining section 23, the running layer recognizing section 24, the layer information writing section 25, and the recording/reproducing circuit group control section 26) of the drive unit 2 and the host-side control section 31 (the command control section 311, the display control section 312, the communication control section 313, the reproduction control section 314, and the recording control section 315) of the host unit 3 can be implemented by a hardware logic or by software by use of a CPU as below.

Namely, the optical disc device 1 includes (i) a CPU which executes a command of a control program that implements each function of the optical disc device 1, (ii) a ROM (read only memory) in which the control program is stored, (iii) a RAM (random access memory) which extracts the control program, (iv) a storage device (a recording medium) such as a memory in which the control program and various sets of data are stored, and (v) the like. The object of the present invention is attainable by supplying, to the optical disc device 1, a recording medium in which program codes (an executable program, an intermediate code program, and a source program) of a control program of the optical disc device 1 which control program is software that implements the each function are computer-readably recorded and causing a computer (or a CPU or an MPU) of the optical disc device 1 to read and carry out the program codes recorded in the recording medium.

Examples of the recording medium include (i) tapes such as a magnetic tape and a cassette tape, (ii) disks including magnetic disks such as a floppy (Registered Trademark) disk and a hard disk, and optical disks such as a compact disc-ROM, an MO, an MD, a digital video disc, and a compact disc-R, (iii) cards such as an IC card (including a memory card) and an optical card, and (iv) semiconductor memories realized by a mask ROM, EPROM, EEPROM, a flash ROM, and the like.

The optical disc device 1 can be connected to a communication network, via which the program codes can be supplied to the optical disc device 1. Such a communication network is not particularly limited. Examples of the communication network includes the Internet, an intranet, an extranet, a LAN, ISDN, VAN, a CATV communications network, a virtual private network, a telephone network, a mobile telecommunications network, and a satellite communication network. A transmission medium of which a communication network is composed is not particularly limited. Examples of the transmission medium includes wired transmission media such as IEEE1394, a USB, a power-line carrier, a cable TV circuit, a telephone line, and ADSL and wireless transmission media such as infrared communication systems such as IrDA and a remote controller, Bluetooth (Registered Trademark), 802.11 wireless communication system, HDR, a mobile phone network, a satellite circuit, and a digital terrestrial network. Note that the present invention can also be realized in a form of a computer data signal in which the program codes are embodied by an electronic transmission and which is embedded in carrier waves.

The present invention is not limited to the description of the embodiments above, but may be altered by a skilled person within the scope of the claims. An embodiment based on a proper combination of technical means disclosed in different embodiments is encompassed in the technical scope of the present invention.

### [Third Embodiment]

A third embodiment of the present invention is described below with reference to the drawings. For convenience, members having functions identical to those of the respective members described in the drawings are given respective identical reference numerals, and a description of those members is omitted here.

Note that for layers of an optical disc (an information recording medium) 100, the following description refers to a rewritable recording layer as an RE (RE-writable) layer, refers to a read-only recording layer as a ROM (Read Only Memory) layer, and refers to an additionally-recordable recording layer as an R (Recordable) layer.

A unit in which logical management is carried out in an information recording medium (a storage medium) is referred to as a "volume". A single-layer optical disc is commonly managed as one (1) volume. A two-layer optical disc in which data of two layers are integratedly managed as in the case of a conventional two-layer DVD is also managed as one (1) volume. A two-layer optical disc in which data of respective layers are independently managed is managed as two volumes.

A "recording layer (information recording layer)" may also be described as a "layer" from a physical viewpoint. An information recording medium may have a plurality of "recording layers", i.e., "layers". An RE layer and an R layer may also be generically described as "recordable recording layers". Since the present invention mainly assumes a case where one (1) type of single-layer recording layer is managed as one (1) volume, the "volume" and the "layer" may be similarly handled. Further, since the R layer and the RE layer are similarly usable in the technical idea of the present invention, a recordable recording layer is hereinafter typified by the RE layer in the description of the present invention.

### [Schematic Arrangement of Optical Disc Device 1]

First, the following description discusses, with reference to Fig. 20, a schematic arrangement of the entire optical disc device (recording/reproducing device) 1 in accordance with the third embodiment of the present invention. Fig. 20 is a block diagram illustrating the schematic arrangement of the entire optical disc device 1.

The optical disc device 1 carries out recording or reproduction of information with respect to the optical disc 100 such as a DVD or a BD, and includes a drive unit 2 and a host unit 3 (see Fig. 20).

The drive unit 2 reads out information recorded in the optical disc 100 or records information in the optical disc 100. The host unit 3 mainly causes an ATAPI I/F 21 included in the drive unit 2 to instruct the drive unit 2 to, for example, carry out reproduction control and recording control with respect to the optical disc 100.

The drive unit 2 mainly includes a disc loading recognizing section 6, an optical pickup 12, a drive-side control section 20, the ATAPI I/F 21, and a drive-side storage section (storage section) 27. A recording/ reproducing circuit group 10 mainly includes a pickup driving circuit 13, a laser driving circuit 14, and a reproducing circuit 15.

According to the drive unit 2, the drive-side control section 20 causes the pickup driving circuit 13 to move the optical pickup 12 to a rotating track (not illustrated) of the optical disc 100.

The optical pickup 12 includes an optical head 11. The drive-side control section 20 causes the laser driving circuit 14 to set a recording requirement and causes a recording laser beam to be emitted from the optical head 11 to a recording part of the optical disc 100, so that information is recorded in the track of the optical disc 100.

According to the optical disc device 1, the drive-side control section 20 causes the pickup driving circuit 13 to move the optical pickup 12 to the recording part of the optical disc 100. The drive-side control section 20 causes the laser driving circuit 14 to set a reproduction requirement and causes a reproduction laser beam to be emitted from the optical head 11 to the optical disc 100.

The drive-side control section 20 receives reflected light which has been detected by the optical head 11 and then converted to a reproduction signal by the reproducing circuit 15. This allows the optical disc device 1 to reproduce information recorded in the track (constituted by a plurality of sectors) of the optical disc 100.

The optical disc device 1 includes the disc loading recognizing section 6. The disc loading recognizing section 6 detects loading of the optical disc 100. The disc loading recognizing section 6 is exemplified by various sensors, and any sensor may be used provided that the sensor detects loading of the optical disc 100. The disc loading recognizing section 6 also supplies, to the drive-side control section 20, a result of the detection as a detection signal.

The ATAPI I/F 21 reproduces content recorded in the optical disc 100 which is in conformity with an ATAPI (Attachment Packet Interface). The ATAPI I/F 21 is used for data transfer (information exchange) between the drive unit 2 and the host unit 3. The following description discusses the ATAPI I/F 21 assuming that the drive unit 2 includes the ATAPI I/F 21. However, an arrangement of the ATAPI I/F 21 is not limited to this. The ATAPI I/F 21 may also be included in the optical disc device 1 separately from the drive unit 2 and the host unit 3.

Note that a specific arrangement of the drive-side control section 20 and the drive-side storage section 27 are described later.

### [More Specific Arrangement of the Optical Disc Device 1]

Next, the following description discusses, with reference to Fig. 21, an arrangement of a relevant part of the optical disc device 1, i.e., a specific arrangement of the drive unit 2 and the host unit 3. Fig. 21 is a block diagram illustrating the arrangement of the relevant part of the optical disc device 1 in accordance with the third embodiment of the present invention. Note that, since the disc loading recognizing section 6 is described above, a description thereof is omitted here.

The drive-side control section 20 of the drive unit 2 mainly includes a disc loading determining section 22, a layer information obtaining section (obtaining means) 23, a running layer recognizing section (recognizing means) 24, a layer information writing section (writing means) 25, and a recording/reproducing circuit group control section 26 (see Fig. 21). The drive-side control section 20 controls members constituting the drive unit 2 by, for example, executing a control program. The drive-side control section 20 reads out, to a first memory section (not illustrated) constituted by a RAM (Random Access Memory) or the like, a program stored in the drive-side storage section 27 included in the drive unit 2 and causes the first memory section to execute the program, so as to carry out various processes such as focus control and tracking control with respect to the optical disc 100.

The disc loading determining section 22 determines, in accordance with whether or not the detection signal has been received from the disc loading recognizing section 6, whether or not the optical disc has been inserted into the optical disc device 1.

The layer information obtaining section 23 mainly obtains various pieces of information from a management region or a read-in region of the optical disc. For example, the layer information obtaining section 23 obtains disc information from the management region, so as to determine whether or not the optical disc is a hybrid disc. This allows the optical disc device 1 to determine whether or not the optical disc 100 which is a hybrid disc has been loaded in the optical disc device 1.

The layer information obtaining section 23 also obtains layer specifying information for specifying a recording layer to be run first when the optical disc 100 is inserted into the optical disc device 1.

For example, in a case where the optical disc is a hybrid disc, the layer information obtaining section 23 determines whether or not the layer specifying information exists in a specific region (a writable region) of a read-in region 102. In other words, it can be said that the layer information obtaining section 23 obtains the layer specifying information from the rewritable recording layer (RE layer). According to this, in a case where the layer information obtaining section 23 has obtained the layer specifying information that was written before in accordance with an instruction from a user, it is possible to run a recording layer indicated by the layer specifying information. Therefore, it is possible to preferentially run a recording layer which was desired by the user when the optical disc was inserted into the optical disc device 1 last time.

Note that the "running" described here refers to running of an OS for executing a disc management application which serves as a user interface. The running layer is specified and the specified running layer is reproduced, so that the OS is executed (run). It is common that the disc management application is automatically executed after the OS is run. The disc management application is exemplified by a content view menu called a route menu, a disc menu, or a title list. Note also that boot of an OS for controlling the optical disc device 1 is also encompassed in the "running".

The layer information obtaining section 23 also reads out information (e.g., the layer specifying information) recorded in a management region 101. In other words, the layer information obtaining section 23 obtains the layer specifying information from the management region 101 in which identification information indicative of a structure of the optical disc 100 is recorded. According to this, since the layer information obtaining section 23 can read out the layer specifying information which is preliminarily recorded in the management region 101, a recording layer which a disc supplier desires to run can be run first.

The layer information obtaining section 23 may also obtain the layer specifying information from a host-side storage section 35 (or the drive-side storage section 27) of the optical disc device 1. For example, the layer information obtaining section 23 which has determined that no layer specifying information is preliminarily set for the management region 101 causes a host-side control section 31 to read out the layer specifying information which is preliminarily stored in the host-side storage section 35, so as to obtain the layer specifying information. In a case where the layer information writing section 25 writes, on a specific region of the optical disc 100, the layer specifying information obtained by the layer information obtaining section 23, it is possible to specify a recording layer to be run first next time the optical disc 100 is inserted into the optical disc device 1.

The running layer recognizing section 24 recognizes, as a running layer to be run first, a recording layer indicated by the layer specifying information obtained by the layer information obtaining section 23. According to this, since the optical disc device 1 can specify the running layer to be run first when the optical disc 100 is inserted thereinto, the optical disc device 1 can run a recording layer which the disc supplier or the user desires to run.

When the layer information obtaining section 23 obtains the layer specifying information transmitted from the host unit 3, the layer information writing section 25 writes (or rewrites) the layer specifying information on the specific region. In other words, the layer information writing section 25 writes, on the recordable recording layer (RE layer or R layer), the layer specifying information set in accordance with an instruction from the user. According to this, for example, in a case where the layer information writing section 25 writes the layer specifying information in accordance with an instruction from the user, it is possible to specify a recording layer which the user desires to run first. Alternatively, as described earlier, also in a case where no layer specifying information is preliminarily recorded in the optical disc 100, a recording layer specified by the optical disc device 1 can be run first next time the optical disc 100 is inserted into the optical disc device 1.

Note that it can also be said that the layer information writing section 25 rewrites the layer specifying information recorded in the rewritable recording layer (RE layer). Namely, in a case where no layer specifying information is recorded in the optical disc 100, the layer information writing section 25 writes the layer specifying information which is in accordance with an instruction from the user or is preliminarily stored in the drive-side storage section 27. In contrast, in a case where the layer specifying information is already written in the RE layer (specific region), the layer information writing section 25 rewrites this layer specifying information to the layer specifying information which is in accordance with the instruction from the user or is preliminarily stored in the drive-side storage section 27.

The recording/reproducing circuit group control section 26 drives the recording/ reproducing circuit group 10 in response to instructions from the layer information obtaining section 23, the running layer recognizing section 24, and the layer information writing section 25.

The drive-side storage section 27 records (1) a control program of each section, (2) an OS program, and (3) an application program which are executed by the drive-side control section 20, and (4) various sets of data to be read out to execute these programs. The drive-side storage section 27 is constituted by a non-volatile storage device such as a ROM (Read Only Memory) flash memory. Note that the first memory section described above is constituted by a volatile storage device such as a RAM. However, the present embodiment may be described assuming that the drive-side storage section 27 also has a function of the first memory section. The drive-side storage section 27 stores a recording layer-recording area correspondence table T1, the layer specifying information, and the like.

The host unit 3 mainly includes the host-side control section 31, an operation section 32, a display section (display device) 33, a transmitting/receiving section 34, and the host-side storage section 35 (storage section).

The host-side control section 31 mainly includes a command control section 311, a display control section 312, a communication control section 313, a reproduction control section 314, and a recording control section 315. The host-side control section 31 controls members constituting the host unit 3 by, for example, executing a control program and causes the ATAPI I/F 21 to give an instruction to the drive unit 2. The host-side control section 31 reads out, to the first memory section (not illustrated) constituted by a RAM (Random Access Memory) or the like, a program stored in the host-side storage section 35 included in the host unit 3 and causes the first memory section to execute the program, so as to carry out various processes such as a process in response to the user's operation inputted to the operation section 32, a process related to a display in the display section 33, and a process which is carried out during information exchange between the transmitting/receiving section 34 and a network.

The command control section 311 issues an ATAPI command, so as to give an instruction to each section of the drive unit 2. The command control section 311 also analyzes the ATAPI command returned from the drive unit 2, so as to instruct each section of the drive unit 2 or the host unit 3 to carry out a subsequent process.

The display control section 312 controls the display section 33. For example, the display control section 312 prepares an image for the user to determine whether or not the layer specifying information read out from the optical disc 100 indicates a recording layer which the user desires to run first.

The communication control section 313 communicates with an external network via the transmitting/receiving section 34. For example, the communication control section 313 obtains, from a network via the transmitting/receiving section 34, version upgrade information on an application recorded in the ROM layer of the optical disc 100.

The reproduction control section 314 reads out information recorded in the optical disc 100, so as to control reproduction of the information. In this case, the reproduction control section 314 instructs the command control section 311 to issue the ATAPI command which is necessary for reproduction of the information, so as to control the drive unit 2.

The recording control section 315 mainly controls the command control section 311 so as to record information in the RE layer (or R layer) of the optical disc 100. For example, the recording control section 315 controls the command control section 311 when the command control section 311 records the layer specifying information or the version upgrade information in the optical disc 100. The following description is given assuming that the command control section 311 independently issues the ATAPI command for recording the layer specifying information or the version upgrade information on the optical disc 100.

Note that the host-side control section (rewriting means) 31 may rewrite the layer specifying information stored in the drive-side storage section 27 of the optical disc device 1. For example, in a case where the host-side control section 31 rewrites, in accordance with an instruction from the user, the layer specifying information read from the optical disc 100 or the layer specifying information preliminarily stored in the drive-side storage section 27, the host-side control section 31 can rewrite this layer specifying information to the layer specifying information desired by the user. Accordingly, next time the optical disc 100 is inserted into the optical disc device 1, the optical disc device 1 can specify a recording layer desired by the user as the running layer by referring to the rewritten layer specifying information without the need of obtaining the layer specifying information from the optical disc 100 (even if the optical disc device 1 fails to obtain the layer specifying information from the optical disc 100).

The operation section 32 is used for the user to supply various operation commands to the optical disc device 1. The operation section 32 is exemplified by an operation button and its interface.

The display section 33 is controlled by the display control section 312, so as to display information necessary for control of the optical disc device 1, e.g., to display an image by which the user can select which of the recording layers of the optical disc 100 inserted into the optical disc device 1 to be run. The display section 33 is constituted by, for example, a liquid crystal panel. Alternatively, the display section 33 may be constituted by an organic EL (Electro Luminescence) panel.

The transmitting/receiving section 34 is controlled by the communication control section 313, so as to transmit, to the communication control section 313, information obtained from an external network. The transmitting/receiving section 34 is a physical medium which can use a communication medium for establishing a communication with an external device, the communication medium being exemplified by infrared communication, ZigBee (Registered Trademark), a UWB (ultra wide band), Bluetooth (Registered Trademark), a LAN (local area network), and Wibree.

The host-side storage section 35 records (1) a control program of each section, (2) an OS program, and (3) an application program which are executed by the host-side control section 31, and (4) various sets of data to be read out to execute these programs. The host-side storage section 35 is constituted by a non-volatile storage device such as a ROM (Read Only Memory) flash memory. Note that the first memory section described above is constituted by a volatile storage device such as a RAM. However, the present embodiment may be described assuming that the host-side storage section 35 also has a function of the first memory section. The host-side storage section 35 stores layer type information, the layer specifying information, and the like.

Note that the host-side storage section 35 (or the drive-side storage section 27) may store the layer specifying information so that the layer specifying information corresponds to each optical disc 100. In this case, if disc information obtained when the optical disc 100 is inserted into the optical disc device 1 and the layer specifying information are managed so that the disc information and the layer specifying information correspond to each other, a recording layer indicated by the layer specifying information stored in the host-side storage section 35 can be run, for example, at the time of readout of the disc information next time the same optical disc 100 is inserted into the optical disc device 1. In a case where the optical disc device 1 is arranged to carry out such a process, it is possible to reduce a running process time from when the optical disc 100 is inserted into the optical disc device 1.

### [Schematic Arrangement of Optical Disc 100]

Next, the following description discusses, with reference to Fig. 18, a schematic arrangement of the optical disc 100 which is the third embodiment of the present invention. Fig. 18 illustrates the schematic arrangement of the optical disc 100 which is the third embodiment of the present invention. (a) of Fig. 18 illustrates the optical disc 100 seen from the reproduced light entrance side. (b) of Fig. 18 shows an arrangement example of each recording layer of the optical disc 100.

The optical disc 100 includes the management region 101 and the read-in region 102 on its inner circumference (see (a) of Fig. 18).

The management region 101 is provided in a recording layer (the RE layer) which is on the most inner circumference of the optical disc 100 and is the farthest from the reproduced light entrance side. The management region 101 is a region which does not need to be subjected to tracking control or a bar-code recording region (a management region recording region) which is accessible only by focus control. The optical disc device 1 is designed to first read information recorded in the management region 101 when the optical disc 100 is inserted thereinto. The management region 101 is also a region which allows writing of information therein only during production (i.e., a non-rewritable region). The management region 101 refers to a BCA (Burst Cutting Area) in the present embodiment.

In the management region 101, identification information indicative of a structure of an optical information recording medium is mainly recorded. The identification information is specifically exemplified by a type (a read-only type, a recordable (write-once) type, a rewritable type) of a recording layer of the optical disc 100, a size of the optical disc 100, a version (related to a speed, etc.) of the optical disc 100, a polarity of a servo, a polarity of a recording mark, and a number unique to the optical disc 100. Pieces of the identification information may be recorded in any order (or arranged by any method) in the management region 101. Note that an order in which these pieces of the identification information are recorded is determined by a common standard or the like.

The read-in region 102 is provided for each recording layer of the optical disc 100 on an outer circumference of the management region 101. The read-in region 102 is a recording region to which reproduced light is emitted first (from which information is read out first) while the optical disc device 1 is carrying out a process with respect to each layer. The read-in region 102 is provided with a region which allows writing of information therein only during production (i.e., a non-rewritable region) and a region which allows rewriting of information thereinafter the optical disc 100 has been inserted into the optical disc device 1. For example, a standard requirement of recording/reproduction on the optical disc 100, information indicative of approval/disapproval of access (control of access) by the optical disc device 1 to the each layer, information indicative of locations of a defect produced during production and a defect produced during use, and the like are recorded in the read-in region 102. Note that the information indicative of the locations of the defects is recorded in a defect management region of each of the read-in region 102 and a read-out region 104.

The management region 101 or the non-rewritable region of the read-in region 102 is provided with recording areas A1 through A8 (see (a) of Fig. 19), and the layer type information is recorded in each of the recording areas A1 through A8. In a case where the layer type information is recorded in the management region 101 or the read-in region 102, which is provided on the most inner circumference of the disc, the optical disc device 1 can easily and collectively obtain the layer type information.

The management region 101 or the non-rewritable region of the read-in region 102 is further provided with recording areas B0 through B7 (see (c) of Fig. 19), and the layer specifying information for specifying a recording layer to be run first when the optical disc 100 is inserted into the optical disc device 1 is recorded in each of the recording areas B0 through B7. Namely, the layer specifying information may be recorded in the management region 101 or the non-rewritable region of the read-in region 102. The recording areas A1 through A8 and the recording areas B0 through B7 are recorded in the non-rewritable region as a prepit, which can be mass produced. Therefore, the disc supplier can easily produce the optical disc 100 in which the recording areas A1 through A8 and the recording areas B0 through B7 are recorded.

Next, (b) of Fig. 18 illustrates an arrangement of the optical disc 100 in a case where recording layers are referred to as recording layers L0, L1, ... from the recording layer which is the farthest from the reproduced light entrance side and the recording layer L0 (a first information recording layer) is the RE layer and the recording layer L1 (a second information recording layer) is the ROM layer. The recording layer L0 (RE layer) is provided with the management region 101, the read-in region 102, a user data region 103, and the read-out region 104 (see (b) of Fig. 18). Note that, since the management region 101 and the read-in region 102 are described above, a description thereof is omitted here.

In the user data region 103, various pieces of information including an application such as an OS and content is recorded (or can be recorded). For example, in the user data region 103 of the ROM layer, an application prepared by the disc supplier and content is preliminarily recorded. In the user data region 103 of the RE layer, information which is recorded by the optical disc device 1 such as content recorded by the user and application version upgrade information are recorded.

In the read-out region 104, which is normally provided on the most outer circumference of each layer of the optical disc 100, information indicative of the locations of the defects (described earlier) and the like is recorded.

Note that (b) of Fig. 18 illustrates only the recording layers L0 and L1. Alternatively, a recording layer may be further provided on the reproduced light entrance side. According to the present embodiment, the optical disc 100 may have up to eight recording layers since the recording areas A1 through A8 in each of which the layer type information is recorded are prepared.

As described earlier, according to the optical disc 100, the layer specifying information is recorded for specifying a recording layer to be run first when the optical disc 100 is inserted into the optical disc device 1 which carries out recording or reproduction of information with respect to the optical disc 100. Alternatively, the optical disc 100 may be arranged such that the layer specifying information for specifying a recording layer to be run first when the optical disc 100 is inserted into the optical disc device 1 is recorded in the management region 101 in which the identification information indicative of the structure of the optical disc 100 is recorded or the rewritable recording layer (RE layer).

This makes it possible to preliminarily record, in the optical disc 100, information for specifying which of a plurality of recording layers of the optical disc 100 is the running layer when the optical disc 100 is inserted into the optical disc device 1. Further, since the disc supplier can record the layer specifying information for each optical disc 100, a recording layer intended by the disc supplier can be run first when the optical disc 100 is inserted into the optical disc device 1. This means that it is possible for the disc supplier to cause a function desired by the disc supplier to operate earlier.

In addition, for example, in a case where the layer specifying information in accordance with an instruction from the user is recorded, a recording layer which the user desires to run first can be specified. Namely, in this case, a recording layer intended by the user can be run first. This means that it is possible for the user to cause a function desired by the user to operate earlier.

In short, according to the optical disc 100, a recording layer intended by at least the disc supplier can be run first when the optical disc 100 is inserted into the optical disc device 1. This means that it is possible for at least the disc supplier to cause a function desired by at least the disc supplier to operate earlier.

### [Layer Type Information and Layer Specifying Information]

Next, the following description discusses, with reference to (a) of Fig. 19 through (c) of Fig. 19, (i) the layer type information and the layer specifying information each of which is recorded in the optical disc 100 and (ii) the recording layer-recording area correspondence table T1 which is recorded in the optical disc device 1. Fig. 19 shows various pieces of information which are stored in the optical disc device or the optical disc in accordance with the third embodiment of the present invention. Note that the optical disc 100 which has eight recording layers L0 through L7 is described here.
(a) of Fig. 19 shows an example of the layer type information recorded in each of the recording areas A1 through A8. The present embodiment describes the layer type information assuming that "01" indicates the ROM layer, "10" indicates the RE layer, and "11" indicates the R layer. Alternatively, it is possible to cause two-bit information and a layer type to freely correspond to each other. Note that "00" indicates no layer, i.e., that there exists no recording layer.
   In (a) of Fig. 19, the recording area A1 indicated by "10" shows that a recording type corresponding to the recording area A1 is the RE layer. Similarly, the recording areas A2 through A4 each indicated by "01" show that a recording type corresponding to each of the recording areas A2 through A4 is the ROM layer. The recording areas A5 through A8 each indicated by "00" show that there exists no recording layer that corresponds to each of the recording areas A5 through A8.
   In short, in a case where the optical disc device 1 accesses the recording areas A1 through A8 so as to read the layer type information, the optical disc device 1 finds that the number of recording layers of the optical disc 100 (see (a) of Fig. 19) is four.
(b) of Fig. 19 shows an example of the recording layer-recording area correspondence table T1 stored in the drive-side storage section 27.
   In (b) of Fig. 19, "Recording layer-Example 1" shows that the recording areas A1 through A8 correspond to the respective recording layers L0 through L7. "Recording layer-Example 2" shows that the recording areas A1 through A8 correspond to the respective recording layers L7 through L0. "Recording layer-Example 3" shows a case where the recording areas A1 through A8 and the recording layers L0 through L7 randomly correspond to each other.
   In short, when obtaining the layer type information from the optical disc 100, the optical disc device 1 can determine, with reference to the recording layer-recording area correspondence table T1, which recording layer is of which layer type (e.g., the ROM layer or the RE layer).
(c) of Fig. 19 shows an example of a structure of the layer specifying information (Default Volume specifying information). In a case where the layer specifying information is recorded in the optical disc 100, the recording areas B0 through B7 are provided in a region (the management region 101 or the read-in region 102) that is different from a region in which the recording areas A1 through A8 are provided. One-bit information is recorded in each of the recording areas B0 through B7.
   In each of the recording areas B0 and B1, information (a "layer type") for specifying a type of a recording layer (running layer) to be run first when the optical disc 100 is inserted into the optical disc device 1 is recorded. For example, in a case where the layer type of the ROM layer is specified, "1" is recorded in the recording area B0 and "0" is recorded in the recording area B1.

In each of the recording areas B2 through B4, information (a "layer number") for specifying the number of the running layer is recorded. The layer number indicates which number the running layer is from the substrate side (a side opposite from the reproduced light entrance side, a substrate is not illustrated). For example, in a case where the layer number of the recording layer L1 is specified, "1" is recorded in the recording area B2, "0" is recorded in the recording area B3, and "0" is recorded in the recording area B4.

In the recording area B6, information (a "volume selection") indicative of which of the information for specifying the layer type and the information for specifying the layer number to use to specify the running layer is recorded. For example, in a case where the information for specifying the layer type is used, "0" is recorded in the recording area B6.

In the recording area B7, information indicative of whether or not the layer specifying information is recorded in the specific region of the read-in region 102 ("existence or nonexistence of a default volume in the specific region") is recorded. For example, in a case where the layer specifying information is recorded in the specific region, "1" is recorded in the recording area B7. Note that "Reserved" is recorded in the recording area B5. This shows that the recording area B5 contains no bit information.

In short, the optical disc device 1 which has obtained the layer specifying information from the optical disc 100 can determine which layer of the optical disc 100 to run. Note that, since the layer specifying information recorded in the optical disc 100 is in conformity with the ATAPI command, the optical disc device 1 which has obtained the layer specifying information can read the "layer type", the "layer number" and the "volume selection" each of which is the layer specifying information. Namely, a structure in which the layer specifying information is exchanged as the ATAPI command between the drive unit 2 and the host unit 3 corresponds to the recording areas B0 through B7. Note that the ATAPI command is described later.

Namely, the layer specifying information is information for specifying the layer type of the running layer recognized by the running layer recognizing section 24 as a recording layer to be run first. In this case, the optical disc device 1 can access the running layer by use of the layer type. For example, in a case where the optical disc 100 has a two-layer structure of one (1) ROM layer and one (1) RE layer, it is possible to securely (uniquely) specify the running layer.

Assume here that the optical disc 100 has recording layers of identical types (e.g., a four-layer structure of two ROM layers and two RE layers) (i.e., has volumes of identical types). In a case where the layer specifying information indicates the ROM layer, the optical disc device 1 accesses the ROM layer which is close to the recording layer L0. In a case where the layer specifying information indicates the RE layer, the optical disc device 1 accesses the RE layer which (i) is close to the recording layer L0 and (ii) is a region which allows recording of information therein. Accordingly, the layer type also allows unique determination of a recording layer which is desired to be run first.

In contrast, in the case of the optical disc 100 described above (a multilayer medium having identical volumes), in order to make it possible to more securely (uniquely) specify a recording layer to be run first, the present embodiment may be arranged such that information for specifying the layer number of the running layer recognized by the running layer recognizing section 24 as a recording layer to be run first is specified as the layer specifying information. Especially in a case where each recording layer has a different application, it can be securely specified which application to be run first. Namely, it is unnecessary to reproduce applications in an order which is normally set in a recording/reproducing device (e.g., in an order from a recording layer which is close to the recording layer L0). This makes it possible to first run an application which the disc supplier or the user desires to run when the optical disc 100 is inserted into the optical disc device 1. Note that the layer specifying information to be rewritten by the layer information writing section 25 is also information for specifying the layer type of the running layer or information for specifying the layer number of the running layer.

### [How Running Process is Carried Out by the Optical Disc Device 1 (How Commands are Exchanged)]

The following description discusses, with reference to Figs. 22 through 26, an example of how commands are exchanged between the drive unit 2 and the host unit 3 from when the optical disc 100 is inserted into the optical disc device 1 to when information recorded in the optical disc 100 is run. Fig. 22 is a timing chart showing how the commands are exchanged between the drive unit 2 and the host unit 3 during a running process carried out in response to insertion of the optical disc 100 into the optical disc device 1. Fig. 26 is a flowchart illustrating how the optical disc device 1 carries out processes.

In the host unit 3, in order to determine whether or not an optical disc has been loaded in the optical disc device 1, the command control section 311 of the host-side control section 31 transmits a "TEST UNIT READY" command to the drive unit 2 at a given timing (S1) (see Fig. 22). In the drive unit 2, in a case where the disc loading determining section 22 of the drive-side control section 20 receives the detection signal from the disc loading recognizing section 6 when receiving the "TEST UNIT READY" command (S2), the disc loading determining section 22 determines that the optical disc has been loaded in the optical disc device 1 and returns a "READY" command to the host unit 3 (S3). In contrast, in a case where the disc loading determining section 22 does not determine that the optical disc has been loaded in the optical disc device 1, the disc loading determining section 22 returns a "NOT READY" command to the host unit 3. In this case, the host unit 3 transmits the "TEST UNIT READY" command until the "READY" command returns thereto.

Next, in the host unit 3, when the "READY" command returns from the drive unit 2 (S4), the command control section 311 of the host-side control section 31 transmits, to the drive unit 2, a "GET CONFIGURATION" command as a command for inquiring whether the optical disc has a feature of a hybrid disc (S5).

Namely, the optical disc device 1 determines, at the stage of S4, that the optical disc has been inserted thereinto (S21 in Fig. 26).

In the drive unit 2, when receiving the "GET CONFIGURATION" command (S6), the layer information obtaining section 23 of the drive-side control section 20 carries out a process for, for example, obtaining feature information of the "GET CONFIGURATION" command, so as to determine whether or not the optical disc is a hybrid disc. Specifically, the layer information obtaining section 23 notifies the recording/reproducing circuit group control section 26 to access the management region located on the most inner circumference of the recording layer L0. The recording/reproducing circuit group control section 26 which has received the notification drives the recording/reproducing circuit group 10 to access the management region, so as to obtain, from the reproducing circuit 15, information (disc information) read from the management region. Then, the recording/reproducing circuit group control section 26 transmits, to the layer information obtaining section 23, the disc information obtained from the reproducing circuit 15. Note that, in a case where there is no disc information in the management region, the layer information obtaining section 23 may notify the recording/reproducing circuit group control section 26 to access the non-rewritable region of the read-in region. Namely, in this case, the disc information is recorded in the non-rewritable region of the read-in region.

The layer information obtaining section 23 which has received the disc information analyzes the disc information, so as to determine whether or not the inserted optical disc is a hybrid disc and to return, to the host unit 3, a result of the determination as the feature information (S7).

In the host unit 3, when receiving, as the feature information, the result showing that the optical disc is a hybrid disc (i.e., the optical disc 100) (S8), the command control section 311 of the host-side control section 31 carries out a process for reading out the layer specifying information on the optical disc 100. First, in order to inquire whether or not the layer specifying information exists in the specific region of the read-in region 102, the command control section 311 transmits, to the drive unit 2, a "READ DEFAULT VOLUME" command for carrying out the inquiry (S9).

Namely, the optical disc device 1 recognizes, at the stage of S8, that the inserted optical disc is a hybrid disc (the optical disc 100) (S22 in Fig. 26).

In the drive unit 2, when receiving the "READ DEFAULT VOLUME" command (S 10), the layer information obtaining section 23 of the drive-side control section 20 carries out a process for, for example, obtaining Default Volume of the "READ DEFAULT VOLUME" command (a new Vendor unique command), so as to determine whether or not the layer specifying information exists in the specific region.

Specifically, the layer information obtaining section 23 notifies the recording/reproducing circuit group control section 26 to access the specific region. The recording/reproducing circuit group control section 26 which has received the notification drives the recording/reproducing circuit group 10 to access the specific region, so as to obtain, from the reproducing circuit 15, information read from the specific region. Then, the recording/reproducing circuit group control section 26 transmits, to the layer information obtaining section 23, the information obtained from the reproducing circuit 15.

The layer information obtaining section 23 determines whether or not the layer specifying information exists in the information received from the recording/reproducing circuit group control section 26 (i.e., whether or not the layer specifying information exists in the specific region of the read-in region 102), so as to return, to the host unit 3, a result of the determination as Default Volume information (S11). Note that Fig. 23 shows an example of the "READ DEFAULT VOLUME" command. (a) of Fig. 23 shows an example of the "READ DEFAULT VOLUME" command to be transmitted from the host unit 3. (b) of Fig. 23 illustrates the Default Volume information (response data) to be returned from the drive unit 2. A bit arrangement (see Fig. 23) is merely an example and can be appropriately modified.

In the host unit 3, when receiving the result as the Default Volume information (S12), the command control section 311 of the host-side control section 31 analyzes the result, so as to determine whether or not the layer specifying information which has been updated by the user is recorded in the optical disc 100. The command control section 311 which has determined that the updated layer specifying information is recorded in the optical disc 100 stores the updated layer specifying information in the host-side storage section 35.

Next, the command control section 311 transmits a "READ DISC STRUCTURE" command to the drive unit 2 (S13). Namely, the command control section 311 issues the "READ DISC STRUCTURE" command (S23 in Fig. 26). The "READ DISC STRUCTURE" command, which indicates an instruction to read information recorded in the management region 101 (an inner circumference management region), is a command for inquiring the number of volumes (information indicative of the number of layers), a volume type (the layer type information), and a default volume (the layer specifying information).

In the drive unit 2, when receiving the "READ DISC STRUCTURE" command (S14), the layer information obtaining section 23 of the drive-side control section 20 carries out a process for, for example, obtaining New Hybrid Disc Information of the "READ DISC STRUCTURE" command, so as to obtain, from the optical disc 100, the pieces of information described above. Note that Fig. 24 shows an example of the New Hybrid Disc Information to be returned by the "READ DISC STRUCTURE" command. A bit arrangement (see Fig. 24) is merely an example and can be appropriately modified.

Specifically, the layer information obtaining section 23 notifies the recording/reproducing circuit group control section 26 to access the management region 101. The recording/ reproducing circuit group control section 26 which has received the notification drives the recording/reproducing circuit group 10 to access the management region 101, so as to obtain, from the reproducing circuit 15, information (the layer type information and the layer specifying information) read from the management region 101. Then, the recording/reproducing circuit group control section 26 transmits, to the layer information obtaining section 23, the layer type information and the layer specifying information each obtained from the reproducing circuit 15.

The layer information obtaining section 23 returns, to the host unit 3, as the New Hybrid Disc Information, the layer type information and the layer specifying information each received from the recording/reproducing circuit group control section 26 (S15). Note that, in a case where no layer specifying information is recorded in the management region 101, the layer information obtaining section 23 obtains only the layer type information, so as to return to the host unit 3, as the New Hybrid Disc Information, the fact that no layer specifying information is recorded in the management region 101.

Namely, the drive unit 2 returns the number of volumes, a volume type, and a default volume to the host unit 3 at the stage of S 15 (S24 in Fig. 26).

In the host unit 3, when receiving the New Hybrid Disc Information (S16), the command control section 311 of the host-side control section 31 stores, in the host-side storage section 35, the received layer type information and the received layer specifying information. In this case, the command control section 311 transmits, to the display control section 312, an instruction to inquire of the user whether or not the received layer specifying information is desired layer specifying information. The display control section 312 which has received the instruction causes the display section 33 to display (i) layer types of recording layers of the optical disc 100 and (ii) an image representing information such as which recording layer is the running layer, whether or not to run the running layer, and which another recording layer to specify as the running layer in a case where that recording layer is not run. Note that the command control section 311 which has obtained the layer specifying information from the specific region inquires of the user whether or not to specify, as the running layer, a recording layer indicated by the layer specifying information obtained from the specific region.

In short, in a case where the layer information obtaining section 23 obtains the layer specifying information from each of the management region 101 and the specific region and receives no instruction from the user to change the layer specifying information, the command control section 311 carries out a process so that the running layer recognizing section 24 can recognize, as the running layer, the recording layer indicated by the layer specifying information obtained from the specific region. This is because it can be said that the layer specifying information recorded in the specific region has been rewritten in accordance with, for example, an instruction from the user while being used by the optical disc 100 in the optical disc device 1.

Namely, at the stage of S16, the optical disc device 1 makes an inquiry to the user so as to determine whether or not the default volume recorded in the optical disc 100 is a default volume desired by the user (S25 in Fig. 26).

The host-side control section 31 causes the operation section 32 to obtain an input from the user, so as to determine which recording layer is the running layer desired by the user. The host-side control section 31 which has determined that the user does not desire to run a recording layer indicated by the layer specifying information stored in the host-side storage section 35 (NO at S25 in Fig. 26) rewrites the layer specifying information stored in the host-side storage section 35 to the layer specifying information indicative of a recording layer which the user desires to run. Namely, the host-side control section 31 determines that a change has occurred in the layer specifying information recorded in the optical disc 100.

In response to the determination by the host-side control section 31 of the change in the layer specifying information, the command control section 311 reads out the layer specifying information (the changed layer specifying information) stored in the host-side storage section 35, so as to transmit the layer specifying information as a "SET DEFAULT VOLUME" command (a new Vender unique command) to the drive unit 2 (S 17). Note that Fig. 25 shows an example of the "SET DEFAULT VOLUME" command. A bit arrangement (see Fig. 25) is merely an example and can be appropriately modified.

Namely, in the host unit 3, the command control section 311 of the host-side control section 31 specifies a default volume desired by the user as the "SET DEFAULT VOLUME" command at the stage of S17 (S28 in Fig. 26), so as to issue the "SET DEFAULT VOLUME" command (S29 in Fig. 26).

In the drive unit 2, when receiving the "SET DEFAULT VOLUME" command (S18), the layer information writing section 25 of the drive-side control section 20 rewrites the layer specifying information stored in the specific region to the layer specifying information described in the "SET DEFAULT VOLUME" command. In contrast, in a case where no layer specifying information is stored in the specific region, the layer information writing section 25 newly writes the layer specifying information described in the "SET DEFAULT VOLUME" command. Therefore, the layer information writing section 25 instructs the recording/reproducing circuit group control section 26 to rewrite (write) the layer specifying information described in the "SET DEFAULT VOLUME" command. Note that in this case, the layer information writing section 25 stores, in the drive-side storage section 27, the layer specifying information to be rewritten (written).

Note that it is normally preferable for the layer information writing section 25 to write the layer specifying information in the specific region of the read-in region 102 of the recording layer L0. This is because, since the read-in region 102 is adjacent to the management region 101, it is unnecessary to cause the recording/reproducing circuit group 10 to carry out focus control during the movement between the management region 101 and the read-in region 102.

Next, in the host unit 3, for example, after a given time has passed from the process at S17, the command control section 311 of the host-side control section 31 transmits, to the drive unit 2, a "START STOP UNIT" command for instructing the running layer indicated by the layer specifying information to be subjected to focus control (S19). Namely, the command control section 311 issues the "START STOP UNIT" command (S30 in Fig. 26). Note that a new command which complies with the optical disc 100 of the present embodiment may be prepared as the "START STOP UNIT" command.

In the drive unit 2, when receiving the "START STOP UNIT" command (S20), the running layer recognizing section 24 of the drive-side control section 20 reads out the layer specifying information stored in the drive-side storage section 27, so as to recognize a recording layer indicated by the layer specifying information as the running layer. Then, the running layer recognizing section 24 instructs the recording/reproducing circuit group control section 26 to run information recorded in the running layer. This allows the drive unit 2 to carry out focus control with respect to the running layer indicated by the layer specifying information and run the information recorded in the running layer.

Namely, at the stage of S20, the drive unit 2 moves a focus position to a volume changed (specified) by the user (S31 in Fig. 26).

Note that, in a case where during the process at S16, the host-side control section 31 determines that the running layer desired by the user by the input from the user to the operation section 32 is the recording layer indicated by the layer specifying information (the layer specifying information recorded in the specific region) recorded in the optical disc 100 (YES at S25 in Fig. 26), it is only necessary that the host-side control section 31 carry out the process at S19 without carrying out the process at S17. Namely, the command control section 311 issues the "START STOP UNIT" command (S26 in Fig. 26). The drive unit 2 which has received the "START STOP UNIT" command moves the focus position to the default volume indicated by the layer specifying information recorded in the optical disc 100 (S27 in Fig. 26).

As described earlier, according to the optical disc device 1 (and a method for controlling the optical disc device 1), when the optical disc 100 is inserted into the optical disc device 1, the layer information obtaining section 23 (the obtaining step) obtains the layer specifying information and the running layer recognizing section 24 (the recognizing step) recognizes, as the running layer, a recording layer indicated by the obtained layer specifying information. According to this, a recording layer to be run first can be specified when the optical disc 100 is inserted into the optical disc device 1. Consequently, a recording layer which the disc supplier or the user desires to run can be run when the optical disc 100 is inserted into the optical disc device 1.

In a case where an application recorded in the ROM layer is an OS, it is possible to specify the layer specifying information so as to cause the ROM layer to be the running layer. Therefore, for example, also in a case where the optical disc device 1 is provided in a PC having no OS, it is possible to boot the OS.

### [Version Upgrade]

Next, the following description discusses a process to be carried out in a case where a version upgrade is carried out with respect to the application (OS) recorded in the ROM layer of the optical disc 100.

In the host unit 3, when receiving, via the transmitting/ receiving section 34, version upgrade information for carrying out the version upgrade, the communication control section 313 of the host-side control section 31 notifies the command control section 311 that the communication control section 313 has received the version upgrade information. The command control section 311 transmits the version upgrade information as the ATAPI command to the layer information writing section 25.

The layer information writing section 25 which has received the version upgrade information instructs the recording/reproducing circuit group control section 26 to write the version upgrade information in the RE layer (or the R layer) of the optical disc 100. In this case, a recording layer in which the layer information writing section 25 writes the version upgrade information is preliminarily set in the drive unit 2. For example, the recording layer may be set as a region of the recording layer L0 (RE layer) of the inserted optical disc 100 in which region the version upgrade information can be recorded (no information has been recorded).

The layer information writing section 25 which has given the instruction transmits, to the host unit 3, as the ATAPI command, the recording layer in which the version upgrade information has been written. In the host unit 3, in order to cause the recording layer to be run first next time the optical disc 100 is inserted into the optical disc device 1, the command control section 311 of the host-side control section 31 rewrites the layer specifying information stored in the host-side storage section 35. Then, in order to write the rewritten layer specifying information in the optical disc 100, the command control section 311 transmits the rewritten layer specifying information as the "SET DEFAULT VOLUME" command to the drive unit 2. As in the case of S 18 in Fig. 22, the drive unit 2 which has received the "SET DEFAULT VOLUME" command rewrites the layer specifying information recorded in the specific region to the received layer specifying information (newly writes the received layer specifying information).

According to this, the optical disc device 1 can cause the recording layer in which the version upgrade information has been recorded to be run first next time the optical disc 100 is inserted thereinto. This makes it possible to run an application which has been subjected to the version upgrade. Therefore, the optical disc device 1 can enhance convenience for the user, e.g., can reduce the running process time, can simplify the processes carried out by the optical disc device 1 to run the application, and can save the user time as compared to an arrangement such that the application which has been subjected to the version upgrade cannot be run first.

In a case where an application recorded in the ROM layer is an OS, it is possible to specify the layer specifying information so as to cause the RE layer (or R layer) in which the version upgrade information is recorded to be the running layer. Therefore, for example, also in a case where the optical disc device 1 is provided in a PC having no OS, it is possible to boot the OS which has been subjected to the version upgrade.

### [Effect Yielded by Specifying Recordable Layer as Running Layer]

As described above, in the optical disc 100, the layer specifying information for specifying a recording layer to be run first when the optical disc 100 is inserted into the optical disc device 1 is recorded in the management region 101 in which the identification information indicative of the structure of the optical disc 100 is recorded or in the rewritable recording layer (RE layer) or the read-only recording layer (ROM). Alternatively, for example, in a case where the layer specifying information in accordance with an instruction from the user is recorded, it is possible to specify a recording layer which the user desires to run first. Namely, in this case, a recording layer intended by the user can be run first. As described earlier with reference to (c) of Fig. 19, etc, the type of the recording layer to be run first may be any of the read-only ROM layer, the rewritable RE layer, and the additionally-recordable R layer.

However, in a case where the type of the recording layer to be run first is the recordable layer (RE layer, R layer), the following effect can be expected. This is specifically described below.

It is common to obtain updated (the latest) information so as to enhance security of an OS, an application, and the like, and/or upgrade the OS, the application, and the like to easier-to-use ones, e.g., cause the OS, the application, and the like to be contents which are suitable for occasions. The updated information is recorded in the recordable layer (RE layer and R layer). In view of this, in a case where the type of the recording layer to be run first is the recordable layer (RE layer, R layer) and the optical disc 100 is inserted into the optical disc device 1, the OS and the application can be run in a state in which their information has been updated to the latest information. The disc supplier desires the user to use, as much as possible, the updated information, which is obtained to, for example, enhance security of the OS, the application, and the like, and/or cause the OS, the application, and the like to be contents which are suitable for occasions. Accordingly, this means that the recording layer to be run first can be run in an updated state intended by the disc supplier. In this case, since the recordable layer (RE layer, R layer) and the read-only recording layer (ROM layer) are separate recording layers and the updated information is recorded only in the recordable layer (RE layer, R layer), it is unnecessary to dramatically change conventional file management of an RE disc.

In the case of an optical disc which has only the ROM layer and no RE layer, updated information is recorded in a storage device (e.g., a non-volatile storage device such as a flash memory or a hard disk annexed to the host side) provided in an optical disc device. Therefore, though a communication among a plurality of storage devices provided in the optical disc device is essential for use of the optical disc and updated information on the optical disc, it is difficult to realize the communication. Further, in using the optical disc in another new optical disc device, it is necessary to obtain updated information for each device, so as to record the updated information in a storage device provided in the each device. This is extremely inconvenient to the user and forces the user to bear an excess burden. In addition, an optical disc which has both the ROM layer and the RE layer also has a problem similar to the above in a case where updated information is recorded in a storage device provided in the optical disc 1.

In contrast, according to the optical disc 100 in accordance with the present invention, since updated information is recorded in the RE layer of the optical disc 100, the updated information recorded in the RE layer of the optical disc 100 can be used as it is. Namely, it is unnecessary to obtain updated information in another new optical disc device, so as to record the obtained updated information in a storage device provided in the another new optical disc device. In a case where the RE layer is run first, it is possible to provide the user with the latest updated information. Alternatively, for example, in a case where information recorded in the ROM layer is recorded or updated in the RE layer, it is unnecessary to read out unnecessary old information recorded in the ROM layer.

As an example, assume here that a content view menu such as a bookmark, a favorite scene, a digest reproduction, or a questionnaire survey is recorded in the recordable layer (RE layer, R layer). In this case, since the recordable layer (RE layer, R layer) is run first by inserting the optical disc 100 into the optical disc device 1, the latest version of the content view menu which is in response to a state of use can be displayed in the display section 33. This yields an effect of allowing the user to view the latest version of the content view menu.

In addition, as compared to a case where the content view menu is recorded in the ROM layer, updated information on the content view menu is recorded in the recordable layer (RE layer, R layer), and the latest version of the content view menu is displayed in a display section by reading out both the content view menu recorded in the ROM layer and the updated information recorded in the recordable layer (RE layer, R layer), according to the arrangement, it is possible to view the latest version of the content view menu by reading out the content view menu only from the recordable layer (RE layer, R layer) without the need of reading out the content view menu by changing the ROM layer and the recordable layer (RE layer, R layer). This yields an effect of realizing a shorter readout time.

Note that the recordable layer may be specified as the running layer by the following method. For example, it is only necessary for specification of the R layer as the running layer that "0" be recorded in the recording area B0 and "1" be recorded in the recording area B1, and it is only necessary for specification of the RE layer as the running layer that "1" be recorded in the recording area B0 and "1" be recorded in the recording area B1 (see (c) of Fig. 19). In contrast, in a case where the read-only recording layer (ROM layer) instead of the recordable layer (RE layer, R layer) is desired to be specified as the running layer, it is only necessary that setting of the running layer be released on the optical disc device 1 side so as to newly specify the ROM layer as the running layer. Setting of the running layer may be flexibly changed in accordance with a desire of the user.

Note here that the above [Schematic Arrangement of Optical Disc 100] discusses the layer specifying information indicated by the recording areas A1 through A8 and the recording areas B0 through B7 assuming that the layer specifying information is recorded in the management region 101 or the non-rewritable region of the read-in region 102. However, the layer specifying information may be recorded in the recordable layer (RE layer, R layer). In this case, since the layer specifying information is recorded in the recordable layer (RE layer, R layer), the layer specifying information can be additionally recorded or rewritten. This makes it possible to provide the user with a wide variety of options such as addition of the layer specifying information and free selection of the layer specifying information by the user and to flexibly meet a demand from the user.

However, in a case where the layer specifying information is recorded in the management region 101, it is possible to read out the layer specifying information preliminarily recorded in the management region 101. This allows the RE layer which the disc supplier desires to run to be run first. Further, since the management region 1010 is read out without fail in recognizing a medium, it is possible to obtain an effect of reducing time required for the layer specifying information to be read out.

In a case where the layer specifying information is recorded in the ROM layer, the layer specifying information is formed as, for example, a prepit of the ROM layer. Since it is easy to mass-produce the prepit, it is possible to obtain an effect of allowing easy production of an information recording medium in which layer setting information is recorded.

Further, a running program (a first running program) for running an OS for executing an application such as a content view menu may be recorded in the recordable layer (RE layer, R layer).

In a case where the recordable layer (RE layer, R layer) is the recording layer to be run first and the first running program is recorded therein, the recordable layer (RE layer, R layer) is run first, so that the first running program is automatically executed. This allows the application to be run promptly in accordance with an intention of the disc supplier.

Note that the application is exemplified by a content view menu in which content recorded in the optical disc 100 such as a route menu, a disc menu, and a title list is displayed in a menu. Specifically, according to the content view menu, a list of content recorded in the optical disc 100 (ROM layer or RE layer) is displayed in the display section 33, and of the content displayed in the list, content which the user desires to view is selected by the user and the content selected by the user is displayed in the display section 33.

Note that the application does not necessarily need to be a separate program from the first running program and may be integrated with the first running program. In other words, a function of the application may be incorporated in the first running program.

According to the arrangement, the user can check, in the display section 33, the content view menu which has been run by inserting the optical disc 100 into the optical disc device 1. Further, after selecting content which the user desires to view, the user can view the selected content in the display section 33. As described earlier, merely the insertion of the optical disc 100 into the optical disc device 1 allows the user to select content which the user desires to view and to cause the selected content to be displayed in the display section 33. This allows provision of the optical disc 100 which is highly convenient to the user.

The first running program may be preliminarily recorded in the recordable layer (RE layer, R layer) at the time of shipping of the optical disc 100. According to this, it is unnecessary to format the first running program or copy the first running program from the read-only recording layer (ROM layer) or the like to the recordable layer (RE layer, R layer) in using the optical disc 100 for the first time. This yields an effect of allowing the user to immediately use the content view menu and the like.

Information recorded in the read-only recording layer (ROM layer) may also be preliminarily recorded in the recordable layer (RE layer, R layer) at the time of shipping of the optical disc 100.

It follows that the information recorded in the read-only recording layer (ROM layer) is recorded in the recordable layer (RE layer, R layer) at the time of shipping of the optical disc 100. Accordingly, it is unnecessary to format the running program or copy the first running program and the content view menu to the recordable layer (RE layer, R layer) in using the optical disc 100 for the first time. This yields an effect of allowing the user to immediately use the content view menu and the like recorded in the recordable layer (RE layer, R layer).

In addition, merely reading of information recorded in the recordable layer (RE layer, R layer) allows the user to, for example, view content. Namely, since it is unnecessary to read information recorded in the read-only recording layer (ROM layer), a change between the recordable layer and the read-only recording layer, which change originally requires a comparatively long time, occurs less frequently. This allows access to data in a shorter time. Further, the information recorded in the read-only recording layer (ROM layer) can be treated as backup information for use in a case where the information recorded in the recordable layer (RE layer, R layer) is lost. Accordingly, in a case where the recordable layer (RE layer, R layer) stops operating for some reason, it is possible to restore the recordable layer (RE layer, R layer) to an original state by formatting the recordable layer (RE layer, R layer) and recording the backup information again to the recordable layer (RE layer, R layer) from the read-only recording layer (ROM layer), which is safer.

The first running program may be recorded in the recordable layer (RE layer, R layer) after the recordable layer (RE layer, R layer) is formatted. In this case, the first running program is recorded in the recordable layer (RE layer, R layer) as a series of operations after the recordable layer (RE layer, R layer) is formatted. Namely, a system transfer of the first running program (and the application) to the recordable layer (RE layer, R layer) is finished as a series of operations after the recordable layer (RE layer, R layer) is formatted. Then, each purchaser of the optical disc 100 can format the recordable layer (RE layer, R layer). Alternatively, the recordable layer (RE layer, R layer) can be set to be formatted at the time of the first-time introduction of the optical disc 100. According to this, it is unnecessary for the disc supplier to format the optical disc 100 one by one at the time of shipping of the optical disc 100. This allows a reduction in time for product shipping and in operation process.

The information recorded in the read-only recording layer (ROM layer) may be recorded in the recordable layer (RE layer, R layer) after the recordable layer (RE layer, R layer) is formatted. According to this, the information recorded in the read-only recording layer (ROM layer) is recorded in the recordable layer (RE layer, R layer) as a series of operations after the recordable layer (RE layer, R layer) is formatted. Namely, a system transfer of the information recorded in the read-only recording layer (ROM layer) to the recordable layer (RE layer, R layer) is finished as a series of operations after the recordable layer (RE layer, R layer) is formatted. Accordingly, it is unnecessary for the disc supplier to format the optical disc 100 at the time of shipping of the optical disc 100 so that the information recorded in the read-only recording layer (ROM layer) is recorded in the recordable layer (RE layer, R layer).

In addition, merely reading of the information recorded in the recordable layer (RE layer, R layer) allows the user to, for example, view content. Namely, since it is unnecessary to read the information recorded in the read-only recording layer (ROM layer), a change between the recordable layer and the read-only recording layer, which change originally requires a comparatively long time, occurs less frequently. This allows access to data in a shorter time. Further, the information recorded in the read-only recording layer (ROM layer) can be treated as backup information for use in a case where the information recorded in the recordable layer (RE layer, R layer) is lost.

The first running program recorded in the read-only recording layer (ROM layer) may be copied to the recordable layer (RE layer, R layer). In this case, the first running program is formed as a prepit of the read-only recording layer (ROM layer). The prepit can be easily mass-produced. This allows the disc supplier to easily produce the optical disc 100 in which the layer specifying information is recorded. Note that the first running program can be copied from the read-only recording layer (ROM layer) to the recordable layer (RE layer, R layer) as below, for example.

Specifically, in a case where no first running program is recorded in the recordable layer (RE layer, R layer) or in a case where the recordable layer (RE layer, R layer) is unformatted, a running program (a second running program) which is recorded in the read-only recording layer (ROM layer) so as to run the ROM layer is executed by running the second information recording layer. According to this, the recordable layer (RE layer, R layer) is formatted and then the first running program is recorded in the recordable layer (RE layer, R layer) as a series of operations. The first running program is thus copied from the read-only recording layer (ROM layer) to the recordable layer (RE layer, R layer).

The above method can be implemented in a case where in using the optical disc 100 for the first time, the recordable layer (RE layer, R layer) is formatted and a sequence in which the system transfer of the first running program is carried out is recorded in the read-only recording layer (ROM layer). Such an arrangement can reduce a burden on the drive side of the optical disc device 1 and constraints on designing of the optical disc device 1.

According to the optical disc 100, the information recorded in the ROM layer and the first running program may be copied to the RE layer by execution of the second running program which is recorded in ROM layer so as to run the ROM layer.

According to the arrangement, the information recorded in the ROM layer and the first running program are formed as a prepit of the ROM layer which is the read-only recording layer. The prepit can be easily mass-produced. This allows easy production of the optical disc 100 having the arrangement.

Note that the information recorded in the ROM layer and the first running program can be copied from the ROM layer to the RE layer by the following method.

Specifically, in a case where no first running program and the like is recorded in the RE layer or in a case where the RE layer is unformatted, the ROM layer is run and the second running program which is recorded in the ROM layer so as to run the ROM layer is executed. According to this, the RE layer is formatted and the information recorded in the ROM layer and the first running program are recorded in the RE layer. The information recorded in the ROM layer and the first running program are thus copied from the ROM layer to the RE layer.

The above method can be implemented in a case where in using the optical disc 100 for the first time, the RE layer is formatted and a sequence in which the system transfer of the information recorded in the ROM layer and the first running program is carried out is recorded in the ROM layer. Such an arrangement yields an effect of reducing a burden on the drive side of the optical disc device 1 and constraints on designing of the optical disc device 1.

According to the optical disc 100, the application or the first running program recorded in the optical disc 100 may be the latest version updated via an externally connected network. According to this, the disc management application or the first running program which serves as the user interface is updated as needed and its version is constantly maintained at the latest one in the recordable layer (RE layer, R layer) through network delivery. This allows the application or the first running program to be run in an updated state (the latest state) intended by the disc supplier. Note that the latest updated information is obtained by the transmitting/receiving section 34 controlled by the communication control section 313 from an external network and is finally recorded in the recordable layer (RE layer, R layer) of the optical disc 100.

According to the optical disc 100, the first running program for running the application and the second running program for running the ROM layer may be identical.

According to the arrangement, the first running program recorded in the ROM layer is formed as a prepit of the ROM layer which is the read-only recording layer. The prepit can be easily mass-produced. Therefore, in a case where the first running program and the second running program are identical, the prepit can be shared and the optical disc 100 can be produced more easily. Further, in a case where the first running program and the second running program are identical, it is possible to save the capacity of the recordable layer (RE layer, R layer) as compared to a case where the first running program and the second running program are different in recorded contents. Further, in a case where a running program is shared when used for the first time, the user feels comfortable with use of the running program.

### [Fourth Embodiment]

A fourth embodiment of the present invention is described below with reference to Figs. 27 through 34. Note that members which are similar to those of the respective members described in Third Embodiment are given respective identical reference numerals, and a description of those members is omitted here.

### [Volume Pack]

According to the present embodiment, the information for specifying a recording layer (running layer) to be run first when the optical disc 100 is inserted into the optical disc device 1 further includes a "volume pack number" in addition to the "layer type" and the "layer number".

In other words, information (the "volume pack number") for specifying a volume pack of the running layer is recorded in the optical disc 100 as the layer specifying information. The layer specifying information which is written by the layer information writing section 25 of the optical disc device 1 includes the information for specifying a volume pack of the running layer. Note here that the following description takes the volume pack number as an example of the information for specifying a volume pack. Alternatively, a sign which can specify each volume pack may be used as the information for specifying a volume pack.

According to the arrangement, it is possible to recognize the running layer by use of the volume pack number. That is, in a case where one (1) volume pack is specified by use of the volume pack number in the optical disc 100 having a plurality of volume packs which are logical management units, the optical disc device 1 can specify a recording layer group (in a case where one (1) volume pack is constituted by a single-layer recording layer, the single-layer recording layer is specified as the recording layer group) which is a management unit that can be controlled by the optical disc device 1. Therefore, for example, a function which the user desires to use can be run earlier.

Note here that the "volume pack", which is a logical management unit which can be recognized by the optical disc device 1, refers to one (1) management unit (one (1) recording region) including at least one recording layer. The volume pack includes at least one layer type which has logical sector numbers that are continuously arranged with respect to user data throughout the entire cluster and is constituted by a recording layer included in a separate volume.

In a case where the volume pack is used, the optical disc device 1 can handle, as one (1) management unit (like one (1) auxiliary storage device), each of volume packs to which respective volume pack numbers are assigned. According to the present embodiment, since a management unit which can be controlled (recognized) by the optical disc device 1 is the volume pack, the optical disc device 1 can control only one volume pack at one time and cannot control another volume pack. That is, the "volume pack" is a "management unit which can be controlled (recognized) by the optical disc device 1 at one time".

Normally, since a function (an application) loaded in each volume pack differs in many cases, specification of the function by the volume pack is effective in increasing a read-out speed for each function, i.e., enhancing convenience.

For example, in a case where the optical disc device 1 preliminarily determines which recording layer in a volume pack to recognize as the running layer, it is only necessary that the optical disc device 1 grasp recording layers as much as the volume pack for the recognition without the need of grasping all the plurality of recording layers of the optical disc 100. Note that the optical disc device 1 normally needs to clearly grasp a disc structure of the optical disc 100 so as to read out information from a recording layer.

Therefore, the optical disc device 1 can recognize the running layer more easily and faster as compared to an arrangement such that the running layer is specified for each recording layer. The optical disc device 1 is useful especially in a case where the optical disc 100 is further multilayered.

A plurality of recording layers which are different in layer type may be specified as one (1) volume pack, and a recording layer of an identical layer type may exist in another volume pack. This allows the disc supplier to set the layer specifying information more freely. In this respect, the volume pack can be said to be different from the layer type, which is simple.

In a case where the type of the recording layer to be run first is the recordable layer (RE layer, R layer), it is also possible to yield an effect which is described in [Effect Yielded by Specifying Recordable Layer as Running Layer] of First Embodiment. Note that the present embodiment is described assuming that the type of the layer to be run first may be any of the ROM layer, the RE layer, and the R layer.

Note that the present embodiment describes above the example such that the optical disc device 1 can control only one volume pack at one time. However, an actual arrangement of the optical disc device 1 is not limited to this. The optical disc device 1 may control a plurality of volume packs at one time. A technical idea of the present embodiment resides in that the optical disc device 1 can recognize the running layer more easily and faster by specifying the running layer by use of information for specifying a volume pack as compared to an arrangement such that the running layer is specified by use of the layer number. It does not matter to the technical idea of the present embodiment whether the optical disc device 1 can control one volume pack or a plurality of volume packs at one time.

### [Assignment of Volume Pack (Part 1)]

The following description more specifically discusses a volume pack with reference to the drawings. First, the following description discusses, with reference to Figs. 27 through 31, a case where recording layers of an identical layer type exist in a plurality of volume packs (each volume pack consists of recording layers of an identical layer type).

Fig. 27 shows an example of a layer structure of the optical disc 100. Fig. 27, which shows a case of a six-layer structure as an example of the layer structure, illustrates the optical disc 100 in which the recording layer L0 which is the farthest from the reproduced light entrance side through the recording layer L3 are the RE layers and the recording layers L4 and L5 are the ROM layers. For example, the RE layers which are the recording layers of an identical type are assigned a "volume pack #0" and a "volume pack #1".

Volume pack numbers are set in the optical disc 100 as follows: The "volume pack #0" is set for each of the recording layers L0 and L1, the "volume pack #1" is set for each of the recording layers L2 and L3, and a "volume pack #2" is set for each of the recording layers L4 and L5.

Note that in this example, "#0" is assigned from the recording layer L0 side. Alternatively, provided that each volume pack can be specified, the volume pack numbers may be set freely, e.g., "#0" may be set from the recording layer which is the closest to the reproduced light entrance side. Note also that the volume pack numbers are set by the disc supplier during production, for example.

Note here that the optical disc device 1 is arranged to recognize, as the running layer, a recording layer which is the farthest from the reproduced light entrance side in one (1) volume pack which is set as the layer specifying information. According to the optical disc 100 (see Fig. 27), in a case where the "volume pack #0" is specified as the layer specifying information, the optical disc device 1 recognizes the recording layer L0 as the running layer, so as to access the recording layer L0. In a case where the "volume pack #1" is specified as the layer specifying information, the optical disc device 1 recognizes the recording layer L2 as the running layer, so as to access the recording layer L0. Accordingly, the volume pack can also be used to determine a recording layer to be run first.

Next, Fig. 28 shows an example of the layer number and the volume pack number which are recorded in each layer of the optical disc 100. The layer type information of the each layer, the layer number, and the volume pack number are recorded in the read-in region 102 of the each layer of the optical disc 100 so that each of the layer number and the volume pack number corresponds to the layer type information. According to the present embodiment, the optical disc device 1 reads out the layer type information, the layer number, and the volume pack number from the read-in region 102 of the each layer, so as to determine which recording layer is of which layer type and which volume pack is specified for which recording layer.

For example, in the case of the optical disc 100 (see Fig. 27), the layer type information "011", the layer number "000", and the volume pack number "000" are recorded in the read-in region 102 of the recording layer L0. The layer type information "001", the layer number "100", and the volume pack number "010" are recorded in the recording layer L4.

The present embodiment describes the layer type information assuming that "001" indicates the ROM layer, "010" indicates the R layer, and "011" indicates the RE layer. Alternatively, it is possible to cause three-bit information and a layer type to freely correspond to each other. Note that "000" indicates no layer, i.e., that there exists no recording layer.

According to the present embodiment, the volume pack numbers are assigned as three-bit information as follows: The "volume pack #0" is assigned as "000", the "volume pack #1" is assigned as "001", and the "volume pack #2" is assigned as "010". Alternatively, it is only necessary that the volume pack numbers be assigned as bit information which can discriminate all the volume packs.

Note that according to the present embodiment, the layer type information, the layer number, and the volume pack number are recorded in each layer of the optical disc 100 and the optical disc device 1 accesses the read-in region 102 of the each layer, so as to determine the layer type, the layer number, and the volume pack number of the each layer. Alternatively, for example, as in the case of Third Embodiment, the present embodiment may be arranged such that the layer type information is recorded in each of the recording areas A1 through A8 (see (a) of Fig. 19) and the recording layer-recording area correspondence table T1 (see (b) of Fig. 19) is stored in the drive-side storage section 27 of the optical disc device 1.

In this case, three-bit information as the layer type information can be stored in each of the recording areas A1 through A8. Volume pack numbers (three-bit information) are stored in the management region 101 or the non-rewritable region of the read-in region 102 so as to correspond to the recording areas A1 through A8. Note that six-bit information indicative of the layer type information and the volume pack number may be stored in each of the recording areas A1 through A8. In this case, In this case, when the RE layer is "011" and the volume pack number is "001", "011001" is stored.

The optical disc device 1 reads out the layer type information, so as to determine, with reference to the recording layer-recording area correspondence table T1, which recording layer is of which layer type. Further, the optical disc device 1 reads out the volume pack number, so as to determine which volume pack is specified for which recording layer.

Next, the following description discusses, with reference to Fig. 29, an example of a structure of the recording areas B0 through B7 in accordance with the present embodiment (a structure of the layer specifying information). Fig. 29 illustrates the structure of the layer specifying information in accordance with the present embodiment. The structure of the layer specifying information makes it possible to use, as the layer specifying information, not only the layer type and the layer number but also the volume pack number.

In each of the recording areas B0 through B2, information (a "layer type") for specifying a type of a recording layer (running layer) to be run first when the optical disc 100 is inserted into the optical disc device 1, information (a "layer number") for specifying a layer number of the running layer, or information (a "volume pack number") for specifying a volume pack of the running layer is recorded in accordance with information to be recorded in each of the recording areas B5 and B6 (described later). Note that the information to be recorded in each of the recording areas B0 through B2 may be described as "volume information".

In each of the recording areas B5 and B6, information (a "volume selection") indicative of which of the information for specifying the layer type, the information for specifying the layer number, and the information for specifying the volume pack to use to specify the running layer is recorded.

In the recording area B7, information indicative of whether or not the layer specifying information is recorded in the specific region of the read-in region 102 ("existence or nonexistence of a default volume in the specific region") is recorded. For example, in a case where the layer specifying information is recorded in the specific region of the read-in region 102, "1" is recorded in the recording area B7.

For example, assume that the "volume pack #1" is specified in the optical disc 100 (see Fig. 27). "0" is recorded in the recording area B5 and "1" is recorded in the recording area B6. "1" is recorded in the recording area B0, "0" is recorded in the recording area B1, and "0" is recorded in the recording area B2.

In short, the optical disc device 1 which has obtained the layer specifying information from the optical disc 100 can determine a recording layer of the optical disc 100 in which volume pack to run. Note that, since the layer specifying information recorded in the optical disc 100 is in conformity with the ATAPI command, the optical disc device 1 which has obtained the layer specifying information can read the "volume information" in accordance with the "volume selection". Namely, a structure in which the layer specifying information is exchanged as the ATAPI command between the drive unit 2 and the host unit 3 corresponds to the recording areas B0 through B7.

Next, the following description discusses, with reference to Figs. 30 and 31, an example of how commands are exchanged between the drive unit 2 and the host unit 3 in the present embodiment from when the optical disc 100 is inserted into the optical disc device 1 to when information recorded in the optical disc 100 is run. Since the commands are exchanged in accordance with the timing chart (see Fig. 22) (in which it is assumed that the "volume pack number" as well as the "layer number" and the "layer type" is used as the layer specifying information), a description of how the commands are exchanged is omitted here.
(a) of Fig. 30 shows an example of the "READ DEFAULT VOLUME" command to be transmitted from the host unit 3 in the process at S10 illustrated in Fig. 22. (b) of Fig. 30 illustrates the Default Volume information (response data) to be returned from the drive unit 2. A bit arrangement (see Fig. 30) is merely an example and can be appropriately modified.

The "READ DEFAULT VOLUME" command (see (a) of Fig. 30) is identical to the "READ DEFAULT VOLUME" command (see (a) of Fig. 23) used in Third Embodiment, whereas the Default Volume information (see (b) of Fig. 30) is different from the Default Volume information used in Third Embodiment and is arranged to correspond to the recording areas B0 through B7 of the present embodiment.

Fig. 31 shows an example of the "SET DEFAULT VOLUME" command to be transmitted from the host unit 3 in the process at S17 illustrated in Fig. 22. The "SET DEFAULT VOLUME" command (see Fig. 31) is also different from the "SET DEFAULT VOLUME" used in Third Embodiment and is arranged to correspond to the recording areas B0 through B7 of the present embodiment.

### [Assignment of Volume Pack (Part 2)]

As another example of the optical disc 100 in accordance with the present embodiment, the following description discusses, with reference to Figs. 32 through 34, a case where each of different layer types is assigned one (1) volume pack.

Fig. 32 illustrates a modification of a layer structure of the optical disc 100 (see Fig. 27). Fig. 32, which shows a case of a four-layer structure as an example of the modification, illustrates the optical disc 100 in which the recording layer L0 which is the farthest from the reproduced light entrance side is the RE layer, the recording layer L1 is the R layer and the recording layers L2 and L3 are the ROM layers. In Fig. 32, each of the RE layer and the R layer which are different in layer type is assigned one (1) volume pack for which the "volume pack #0" is set.

Fig. 33 shows an example of the layer number and the volume pack number which are recorded in each layer of the optical disc 100 (see Fig. 32). As in the case of Fig. 28, the layer type information of the each layer, the layer number, and the volume pack number are recorded in the read-in region 102 of the each layer of the optical disc 100 so that each of the layer number and the volume pack number corresponds to the layer type information. According to this, also for the optical disc 100 (see Fig. 32), the optical disc device 1 can determine which volume pack is which type of layer and is specified for which recording layer. Note that the recording layer-recording area correspondence table T1 may be used to carry out the determination as described above.

For example, a function which the user desires to use can be run earlier as described above in a case where the information for specifying a volume pack of the running layer is recorded as the layer specifying information in the optical disc 100 (see Fig. 27 or Fig. 32) as described earlier. Further, since a volume pack which has a combination of various recording layers can be set in the optical disc 100 (see Fig. 27 or Fig. 32), the disc supplier can set the layer specifying information more freely.

Note that according to the present embodiment, the optical disc device 1 is arranged to recognize, as the running layer, a recording layer which is the farthest from the reproduced light entrance side in one (1) volume pack set as the layer specifying information. Therefore, in a case where the optical disc 100 (see Fig. 32) is inserted into the optical disc device 1 and the "volume pack #0" is set as the layer specifying information, the optical disc device 1 recognizes the recording layer L0 (RE layer) as the running layer and cannot recognize the recording layer L1 (R layer) as the running layer.

Not to mention, the optical disc device 1 which is arranged to recognize, as the running layer, a recording layer which is the closest to the reproduced light entrance side in one (1) volume pack set as the layer specifying information can recognize the recording layer L1 as the running layer. As described earlier, in a case where the optical disc device 1 preliminarily determines which recording layer in a volume pack to recognize as the running layer, the optical disc device 1 can run the running layer merely by recognizing the volume pack. This allows a quick access to the running layer. That is, it is possible for the disc supplier or the user to cause a function desired by the disc supplier or the user to operate earlier. Further, the optical disc device 1 allows simpler specification of the running layer without the need for the disc supplier or the user to be aware of a structure of all the recording layers as compared to an arrangement such that the layer number is used to recognize the running layer.

In order to recognize not only a volume pack but also the running layer without considering such an access speed, it is possible to use the layer specifying information (see Fig. 34), for example. Fig. 34 shows an example of a structure of the recording areas B0 through B7 of the optical disc 100 (see Fig. 32) (a structure of the layer specifying information).

Namely, the structure of the layer specifying information (see Fig. 34) is obtained by allowing the information ("layer type") for specifying the layer type of the running layer to be recorded in the recoding areas B3 and B4 in each of which "Reserved" is recorded in the structure of the layer specifying information (see Fig. 29). Note that, in a case where the volume pack number is selected as the layer specifying information ("10" is recorded for the "volume selection"), the layer specifying information can be recorded in the recording areas B3 and B4 of Fig. 34.

### [Determination of Running Layer]

The above description of the present embodiment discusses a case where the optical disc device 1 preliminarily determines which recording layer (e.g., a recording layer which is the farthest from the reproduced light entrance side) in a volume pack the optical disc device 1 to recognize as the running layer. However, how the optical disc device 1 determines the running layer is not limited to this. Alternatively, provided that a volume pack is specified, the running layer may be logically selected by a file system stored in the host-side storage section 35. Namely, the optical disc device 1 may recognize, as the running layer, a recording layer logically selected by the file system in one (1) volume pack set as the layer specifying information.

According to the file system, in a case where the ROM layer, for example is selected, reproduction is carried out from the top of logical addresses (a corresponding layer number is recognized by the optical disc device 1). In a case where the RE layer is selected, recording is carried out from the top of free logical addresses (as described above, a corresponding layer number is recognized by the optical disc device 1). Use of operation of the file system allows the optical disc device 1 to determine the running layer without the need of preliminarily determining which recording layer in a volume pack to recognize as the running layer.

In a case where the optical disc device 1 determines the running layer by use of the file system, the optical disc device 1 does not need to grasp all the plurality of recording layers of the optical disc 100 and can run the running layer merely by recognizing a volume pack. This allows a quick access to the running layer. That is, it is possible for the disc supplier or the user to cause a function desired by the disc supplier or the user to operate earlier. Further, the optical disc device 1 allows simpler specification of the running layer without the need for the disc supplier or the user to be aware of a structure of all the recording layers as compared to an arrangement such that the layer number is used to recognize the running layer.

### [Another Expression of the Present Invention]

Note that the present invention can also be expressed as below.

A shared optical system is used for recording/reproduction of both the read-only recording layer (ROM layer) and the recordable layer (RE layer, R layer) is used to copy, to the recordable layer (RE layer, R layer), any or all of the running program, the application, and the other information which are recorded in the read-only recording layer (ROM layer). In view of this, it is difficult to simultaneously carry out reproduction of the read-only recording layer (ROM layer) and recording to the recordable layer (RE layer, R layer). This requires an additional change between the read-only recording layer (ROM layer) and the recordable layer (RE layer, R layer). A more frequent change between the read-only recording layer (ROM layer) and the recordable layer (RE layer, R layer) requires more time to copy the information recorded in the read-only recording layer (ROM layer). The following method may reduce time required to copy the information recorded in the read-only recording layer (ROM layer).

For example, the information recorded in the read-only recording layer (ROM layer) may be temporarily stored in a non-volatile storage device such as a flash memory or a hard disk or a volatile storage device such as a RAM (random access memory) typified by a semiconductor memory, the non-volatile storage device or the volatile storage device being annexed to a recording/ reproducing device separate from an optical disc, e.g., the host side. The information recorded in the read-only recording layer (ROM layer) may be copied from the non-volatile storage device or the volatile storage device to the recordable layer (RE layer, R layer). According to this method, the information recoding medium of the present invention can carry out a change between the read-only recording layer (ROM layer) and the recordable layer (RE layer, R layer) less frequently, so that the information recorded in the read-only recording layer (ROM layer) can be copied in a shorter time. Note that the information recorded in the read-only recording layer (ROM layer) may be temporarily stored sequentially during the copying or preliminarily in advance of the copying.

An information recording medium in accordance with the present invention which is an optical information recording medium, the information recording medium may be arranged to have: at least one read-only layer; and at least one recordable layer, file management being carried out separately with respect to the at least one read-only layer and the at least one recordable layer, addition/update/deletion of information being carried out with respect to the at least one recordable layer via a network, the at least one recordable layer being preferentially run in accordance with specific information recorded in the information recording medium.

The information recording medium in accordance with the present invention may be arranged such that the specific information is recorded in a management region in which medium information is recorded.

The information recording medium in accordance with the present invention may be arranged such that the management region is a bar-code region which is located on the most inner circumference of the optical information recording medium.

The information recording medium in accordance with the present invention may be arranged such that the specific information is recorded in the at least one read-only layer.

The information recording medium in accordance with the present invention may be arranged such that the specific information is recorded in the at least one recordable layer.

The information recording medium in accordance with the present invention may be arranged such that: a running program is recorded in the at least one recordable layer; and the running program is executed when the at least one recordable layer is preferentially run.

The information recording medium in accordance with the present invention may be arranged such that: the running program includes: list display means for displaying, to a user, a list of contents recorded in the at least one read-only layer; selecting means for selecting, a content which the user desires to view of the contents recorded in the at least one read-only layer; and content display means for displaying the content selected by the selecting means and recorded in the at least one read-only layer.

The information recording medium in accordance with the present invention may be arranged such that the running program is an operating system which controls a host.

The information recording medium in accordance with the present invention may be arranged such that the running program is updated by a recording/ reproducing device via a network.

The information recording medium in accordance with the present invention may be arranged such that the running program is preliminarily recorded in the at least one recordable layer.

The information recording medium in accordance with the present invention may be arranged such that the running program is recorded in the at least one recordable layer when the at least one recordable layer is formatted.

The information recording medium in accordance with the present invention may be arranged such that, in a case where no running program is recorded in the at least one recordable layer or in a case where the at least one recordable layer is unformatted, the at least one read-only layer is run first and a first-time running program recorded in the at least one read-only layer is executed, so that the at least one recordable layer is formatted and the running program is recorded in the at least one recordable layer.

The information recording medium in accordance with the present invention may be arranged such that the running program is recorded from the at least one read-only layer to the at least one recordable layer.

The information recording medium in accordance with the present invention may be arranged such that the running program is recorded in the at least one recordable layer by the recording/reproducing device via a network.

The information recording medium in accordance with the present invention may be arranged such that the running program and the contents recorded in the at least one read-only layer are preliminarily recorded in the at least one recordable layer.

The information recording medium in accordance with the present invention may be arranged such that the running program and the contents recorded in the at least one read-only layer are recorded in the at least one recordable layer when the at least one recordable layer is formatted.

The information recording medium in accordance with the present invention may be arranged such that, in a case where no running program is recorded in the at least one recordable layer or in a case where the at least one recordable layer is unformatted, the at least one read-only layer is run first and a first-time running program recorded in the at least one read-only layer is executed, so that the at least one recordable layer is formatted and the running program and the contents recorded in the at least one read-only layer are recorded from the at least one read-only layer to the at least one recordable layer.

An information recording medium in accordance with the present invention which is an optical information recording medium, the information recording medium may be arranged to have: at least one read-only layer; and at least one recordable layer, file management being carried out separately with respect to the at least one read-only layer and the at least one recordable layer, addition/update/deletion of information being carried out with respect to the at least one recordable layer via a network, the at least one read-only layer being preferentially run in accordance with specific information recorded in the information recording medium.

The information recording medium in accordance with the present invention may be arranged such that: the running program is recorded in the at least one recordable layer; and the running program recorded in the at least one recordable layer is called and executed when the at least one read-only layer is preferentially run.

A recording/reproducing device in accordance with the present invention which carries out recording or reproduction of information with respect to each information recording medium mentioned above, the recording/ reproducing device may be arranged such that, when the each information recording medium is inserted into the recording/reproducing device, a recordable layer of the each information recording medium may be preferentially run in accordance with specific information recorded in the each information recording medium.

### [Another Arrangement]

The present embodiment is described assuming that in priority to the read-only recording layer (ROM layer), the recordable layer (RE layer, R layer) is specified as the recording layer to be run first.

However, it is also assumed that the recordable layer (RE layer, R layer), which has no identifier of a running menu, cannot be run when the optical disc 100 is inserted into the optical disc device 1. In such a case, the read-only recording layer (ROM layer) is run first and the running menu (including an identifier) of the recordable layer (RE layer, R layer) is copied or downloaded to the recordable layer (RE layer, R layer) in accordance with a sequence preliminarily recorded in the read-only recording layer (ROM layer). Then, when the optical disc 100 is used for the first time, the optical disc device 1 may finish using the optical disc 100 while the read-only recording layer (ROM layer) is being run. This allows the optical disc device 1 to specify, as the recording layer to be run first, the recordable layer (RE layer, R layer) in priority to the read-only recording layer (ROM layer).

Alternatively, it is also assumed that the recordable layer (RE layer, R layer) is unformatted when the optical disc 100 is inserted into the optical disc device 1 for the first time. In this case, it is possible that the recordable layer (RE layer, R layer) is formatted first and a running menu of the recordable layer (RE layer, R layer) is prepared (or copied from the read-only recording layer (ROM layer)) simultaneously with the formatting, so as to record the running menu in the recordable layer (RE layer, R layer). Similarly to the above case, such an arrangement allows the optical disc device 1 to specify, as the recording layer to be run first, the recordable layer (RE layer, R layer) in priority to the read-only recording layer (ROM layer).

It is also possible that when the optical disc 100 is inserted into the optical disc device 1, an OS is booted from the read-only recording layer (ROM layer)) and then a running menu recorded in a specified region of the recordable layer (RE layer, R layer) is run.

### [Supplementation]

Finally, each block of the optical disc device 1, especially the drive-side control section 20 (the disc loading determining section 22, the layer information obtaining section 23, the running layer recognizing section 24, the layer information writing section 25, and the recording/ reproducing circuit group control section 26) of the drive unit 2 and the host-side control section 31 (the command control section 311, the display control section 312, the communication control section 313, the reproduction control section 314, and the recording control section 315) of the host unit 3 can be implemented by a hardware logic or by software by use of a CPU as below.

Namely, the optical disc device 1 includes (i) a CPU which executes a command of a control program that implements each function of the optical disc device 1, (ii) a ROM (read only memory) in which the control program is stored, (iii) a RAM (random access memory) which extracts the control program, (iv) a storage device (a recording medium) such as a memory in which the control program and various sets of data are stored, and (v) the like. The object of the present invention is attainable by supplying, to the optical disc device 1, a recording medium in which program codes (an executable program, an intermediate code program, and a source program) of a control program of the optical disc device 1 which control program is software that implements the each function are computer-readably recorded and causing a computer (or a CPU or an MPU) of the optical disc device 1 to read and carry out the program codes recorded in the recording medium.

Examples of the recording medium include (i) tapes such as a magnetic tape and a cassette tape, (ii) disks including magnetic disks such as a floppy (Registered Trademark) disk and a hard disk, and optical disks such as a compact disc-ROM, an MO, an MD, a digital video disc, and a compact disc-R, (iii) cards such as an IC card (including a memory card) and an optical card, and (iv) semiconductor memories realized by a mask ROM, EPROM, EEPROM, a flash ROM, and the like.

The optical disc device 1 can be connected to a communication network, via which the program codes can be supplied to the optical disc device 1. Such a communication network is not particularly limited. Examples of the communication network includes the Internet, an intranet, an extranet, a LAN, ISDN, VAN, a CATV communications network, a virtual private network, a telephone network, a mobile telecommunications network, and a satellite communication network. A transmission medium of which a communication network is composed is not particularly limited. Examples of the transmission medium includes wired transmission media such as IEEE1394, a USB, a power-line carrier, a cable TV circuit, a telephone line, and ADSL and wireless transmission media such as infrared communication systems such as IrDA and a remote controller, Bluetooth (Registered Trademark), 802.11 wireless communication system, HDR, a mobile phone network, a satellite circuit, and a digital terrestrial network. Note that the present invention can also be realized in a form of a computer data signal in which the program codes are embodied by an electronic transmission and which is embedded in carrier waves.

The present invention is not limited to the description of the embodiments above, but may be altered by a skilled person within the scope of the claims. An embodiment based on a proper combination of technical means disclosed in different embodiments is encompassed in the technical scope of the present invention.

### [Another Arrangement of the Present Invention and its Advantage]

The present invention can also be expressed as below.

The information recording medium in accordance with the present invention is preferably arranged such that the layer specifying information is recorded in (i) a management region in which identification information indicative of a structure of the information recording medium is recorded or (ii) a recordable information recording layer so as to specify, as a running layer, the information recording layer to be run first when the information recording medium is inserted into the recording/reproducing device which carries out recording or reproduction of information with respect to the information recording medium.

The arrangement makes it possible to preliminarily record, in the management region or the recordable information recording layer of the information recording medium, information for specifying which of the plurality of information recording layers of the information recording medium is the running layer when the information recording medium is inserted into the recording/ reproducing device. Further, since the disc supplier can record the layer specifying information for each information recording medium, an information recording layer intended by the disc supplier can be run first when the information recording medium is inserted into the recording/reproducing device. This means that it is possible for the disc supplier to cause a function desired by the disc supplier to operate earlier.

In addition, for example, in a case where the layer specifying information in accordance with an instruction from the user is recorded, an information recording layer which the user desires to run first can be specified. Namely, in this case, an information recording layer intended by the user can be run first. This means that it is possible for the user to cause a function desired by the user to operate earlier.

According to this, when the information recording medium is inserted into the recording/reproducing device, the information recording medium allows specification of the information recording layer to be run first. Therefore, the information recording layer that the disc supplier or the user desires to run can be run when the information recording medium is inserted into the recording/ reproducing device.

Since the identification information is recorded in the management region, the recording/ reproducing device is normally designed to first read information recorded in the management region. Therefore, in a case where the layer specifying information is preliminarily recorded in the management region, the recording/reproducing device can first read out the layer specifying information recorded in the management region of the information recording medium inserted thereinto. Namely, the information recording layer that the disc supplier desires to run can be run first.

For example, in a case where the layer specifying information has been written to the information recording medium in accordance with an instruction from the user before the information recording medium is inserted into the recording/ reproducing device, the layer specifying information is recorded in the recordable information recording layer. Accordingly, in a case where the layer specifying information is recorded in the recordable information recording layer, the recording/ reproducing device can run an information recording layer indicated by the layer specifying information which has been read out from the recordable information recording layer. Therefore, it is possible to preferentially run an information recording layer which was desired by the user when the information recording medium was inserted into the recording/reproducing device last time.

Note that the "recordable information recording layer" refers to each of the rewritable information recording layer (RE layer) and the additionally-recordable information recording layer (R layer).

The information recording medium in accordance with the present invention is preferably arranged such that the layer specifying information is information for specifying a volume pack of the running layer.

According to the arrangement, it is possible to recognize the running layer by use of the information for specifying a volume pack. That is, in a case where in the information recording medium having a plurality of volume packs which are logical management units, one (1) volume pack is specified by use of the information for specifying a volume pack, the recording/ reproducing device can specify an information recording layer group (in a case where one (1) volume pack is constituted by a single-layer information recording layer, the single-layer information recording layer is specified as the information recording layer group) which is a management unit that can be controlled by the recording/reproducing device. Therefore, for example, a function which the user desires to use can be run earlier.

The information recording medium in accordance with the present invention is preferably arranged such that the layer specifying information is information for specifying a layer type of the running layer.

According to the arrangement, the recording/reproducing device can recognize the running layer by use of the layer type. Namely, the recording/reproducing device can access the running layer in accordance with the layer type. For example, in a case where the information recording medium has a two-layer structure of one (1) read-only information recording layer (ROM layer) and one (1) rewritable information recording layer (RE layer), it is possible to securely (uniquely) specify the running layer.

Assume here that the information recording medium has information recording layers of identical types (e.g., a four-layer structure of two ROM layers and two RE layers). In a case where the layer specifying information indicates the ROM layer, the recording/reproducing device accesses the ROM layer which is close to the information recording layer that is the farthest from the reproduced light entrance side. In a case where the layer specifying information indicates the RE layer, the recording/reproducing device accesses the RE layer which (i) is close to the information recording layer and (ii) is a region which allows recording of information therein. Accordingly, the layer type also allows unique determination of an information recording layer which is desired to be run first.

The information recording medium in accordance with the present invention is preferably arranged such that the layer specifying information is information for specifying a layer number of the running layer.

According to the arrangement, for example, in a case where the information recording medium has a four-layer structure as described above (i.e., has a plurality of information recording layers of identical types), it is possible to more securely (uniquely) specify the information recording layer to be run first. Especially in a case where each information recording layer has a different application, it can be securely specified which application to be run first.

The information recording medium in accordance with the present invention is preferably arranged such that the layer specifying information is recorded in the management region in which identification information indicative of a structure of the information recording medium is recorded.

According to the arrangement, since the recording/reproducing device can read out the layer specifying information which is preliminarily recorded in the management region, the information recording layer which the disc supplier desires to run can be run first.

The information recording medium in accordance with the present invention is preferably arranged such that the layer specifying information is recorded in the recordable information recording layer.

According to the arrangement, for example, the recording/reproducing device which has obtained, from the information recording medium, the layer specifying information which was written before in accordance with an instruction from the user can run an information recording layer indicated by the layer specifying information. Therefore, it is possible to preferentially run an information recording layer which was desired by the user when the information recording medium was inserted into the recording/reproducing device last time.

The information recording medium in accordance with the present invention is preferably arranged such that the layer specifying information is information for specifying a volume pack of the first information recording layer.

According to the arrangement, it is possible to recognize, by use of the information for specifying a volume pack, the information recording layer (running layer) to be run first. That is, in a case where in the information recording medium having a plurality of volume packs which are logical management units, one (1) volume pack is specified by use of the information for specifying a volume pack, the recording/reproducing device can specify an information recording layer group (in a case where one (1) volume pack is constituted by a single-layer information recording layer, the single-layer information recording layer is specified as the information recording layer group) which is a management unit that can be controlled by the recording/reproducing device. Therefore, for example, a function which the user desires to use can be run earlier.

The information recording medium in accordance with the present invention is preferably arranged such that the layer specifying information is information for specifying a layer type of the first information recording layer.

According to the arrangement, the first information recording layer is specified, by use of the layer type, as the information recording layer to be run first. Namely, the recording/reproducing device can access the first information recording layer in accordance with the layer type. For example, in a case where the information recording medium has a two-layer structure of one (1) read-only information recording layer (ROM layer) and one (1) RE layer, it is possible to securely (uniquely) specify the RE layer as the running layer.

In a case where the information recording medium has a plurality of information recording layers of identical types (e.g., a four-layer structure of two ROM layers and two RE layers), it is only necessary that the recording/ reproducing device access, by use of the layer specifying information indicative of the RE layer, the RE layer which (i) is close to the information recording layer that is the farthest from the reproduced light entrance side and (ii) is a region which allows recording of information therein. As described earlier, the information recording medium which has a plurality of information recording layers of identical types can uniquely determine, by use of the layer type, the first information recording layer as the information recording layer which is desired to be run first.

The information recording medium in accordance with the present invention is preferably arranged such that the layer specifying information is information for specifying a layer number of the first information recording layer.

According to the arrangement, for example, in a case where the information recording medium has a four-layer structure as described above (i.e., has a plurality of information recording layers of identical types), it is possible to more securely (uniquely) specify, as the running layer, the first information recording layer to be run first. Especially in a case where each information recording layer has a different application, it can be securely specified in which information recording layer an application to be run first is recorded.

The information recording medium in accordance with the present invention is preferably arranged such that the layer specifying information is recorded in a management region in which identification information indicative of a structure of the information recording medium is recorded.

According to the arrangement, since the recording/reproducing device can read out the layer specifying information which is preliminarily recorded in the management region, the first information recording layer which the disc supplier desires to run can be run first.

Further, since the management region is read out without fail in recognizing a medium, it is possible to reduce time required for the layer specifying information to be read out.

The information recording medium in accordance with the present invention is preferably arranged such that the layer specifying information is recorded in the second information recording layer.

According to the arrangement, the layer specifying information is formed as, for example, a prepit of the second information recording layer which is the read-only recording layer. The prepit can be easily mass-produced. Therefore, the arrangement allows easy production of the information recording medium in which the layer setting information is recorded.

The information recording medium in accordance with the present invention is preferably arranged such that the layer specifying information is recorded in the first information recording layer.

According to the arrangement, since the layer specifying information is recorded in the first information recording layer which is the recordable information recording layer, the layer specifying information can be additionally recorded or rewritten. Accordingly, the arrangement makes it possible to provide the user with a wide variety of options such as addition of the layer specifying information and free selection of the layer specifying information by the user.

The information recording medium in accordance with the present invention is preferably arranged such that: a first running program for running an application is recorded in the first information recording layer; and the first running program is executed by running the first information recording layer.

According to the arrangement, in a case where the first information recording layer is run, the first running program for running an application is automatically executed. This allows the application to be run promptly in accordance with an intention of the disc supplier.

Note that the first running program may be recorded in the first information recording layer at any timing before the user uses the information recording medium.

The information recording medium in accordance with the present invention is preferably arranged such that the application is a content view menu in which content recorded in the information recording medium is displayed in a menu.

The information recording medium in accordance with the present invention is preferably arranged such that the application is an application for causing an external display device to display a list of the content recorded in the information recording medium, causing a user to select content which the user desires to view of the content thus displayed, and causing the display device to display the selected content.

As described earlier, according to the present invention, in a case where the information recording medium is inserted into the recording/reproducing device, the first information recording layer is run first. Then, in a case where the first information recording layer is run, the first running program for running an application is executed, so that the content view menu is run in which content recorded in the information recording medium (first or second information recording layer) is displayed in a menu.

Accordingly, the user can check, in an external display device, the content view menu which has been run by inserting the information recording medium into the recording/reproducing device. Further, after selecting content which the user desires to view, the user can view the selected content.

Note that the content view menu is exemplified by a route menu, a disc menu, a title list, a bookmark, a favorite scene, a digest reproduction, and a questionnaire survey.

As described earlier, according to the arrangement, it is possible to provide the user with a more convenient information recording medium.

The information recording medium in accordance with the present invention is preferably arranged such that the first running program is an operating system for controlling the recording/reproducing device.

The first running program may be an operating system for controlling the recording/reproducing device. According to this, for example, also in a case where the recording/reproducing device is provided in a PC (Personal Computer) having no OS, it is possible to boot an OS which has been subjected to a version upgrade.

The information recording medium in accordance with the present invention is preferably arranged such that the first running program is recorded in the first information recording layer at the time of shipping of the information recording medium.

According to the arrangement, the first running program is recorded in the first information recording layer at the time of shipping of the information recording medium. Accordingly, it is unnecessary to format the first running program or copy the first running program to the first information recording layer in using the information recording medium for the first time. This allows the user to immediately use the content view menu and the like. Therefore, it is possible to provide the user with a more convenient information recording medium.

The information recording medium in accordance with the present invention is preferably arranged such that the first running program is recorded in the first information recording layer after the first information recording layer is formatted.

According to the arrangement, the first running program is recorded in the first information recording layer after the first information recording layer is formatted.

According to the arrangement, at the time of shipping of the information recording medium, it is unnecessary to format the information recording medium so that the first running program is recorded in the first information recording layer. This allows the disc supplier to save labor required to ship the information recording medium. Further, in a case where the first running program is set to be automatically transferred to the first information recording layer, the user does not need to format the first running program or copy the first running program to the first information recording layer in using the information recording medium for the first time. This allows the user to be provided with a more convenient information recording medium.

The information recording medium in accordance with the present invention is preferably arranged such that the first running program is copied from the second information recording layer to the first information recording layer.

The information recording medium in accordance with the present invention is preferably arranged such that the first running program recorded in the second information recording layer is copied to the first information recording layer by execution of a second running program for running the second information recording layer, the second running program being recorded in the second information recording layer.

According to the arrangement, the first running program is formed as a prepit of the second information recording layer which is the read-only recording layer. The prepit can be easily mass-produced. Therefore, the arrangement allows easy production of the information recording medium in which the first running program is recorded.

Note that the first running program can be copied from the second information recording layer to the first information recording layer by the following method.

Specifically, in a case where no first running program is recorded in the first information recording layer or in a case where the first information recording layer is unformatted, the second information recording layer is run and the second running program which is recorded in the second information recording layer is executed. According to this, the first information recording layer is formatted and the first running program is recorded in the first information recording layer. The first running program is thus copied from the second information recording layer to the first information recording layer.

The above method can be implemented in a case where in using the information recording medium for the first time, the first information recording layer is formatted and a sequence in which a system transfer of the first running program is carried out is recorded in the second information recording layer. Such an arrangement yields an effect of reducing a burden on the drive side of the recording/reproducing device and constraints on designing of the recording/reproducing device.

The information recording medium in accordance with the present invention is preferably arranged such that the application or the first running program is updated to the latest version via an externally connected network.

According to the arrangement, a version of the application recorded in the first information recording layer or the first running program can be maintained at the latest one. This allows the application or the first running program to be run in an updated state (the latest state) intended by the disc supplier.

The application or the first running program, which can be updated so as to enhance security and/or to be contents which are suitable for occasions, is more convenient to both the disc supplier and the user.

The information recording medium in accordance with the present invention is preferably arranged such that information recorded in the second information recording layer is recorded in the first information recording layer at the time of shipping of the information recording medium.

According to the arrangement, it is unnecessary to format the information recorded in the second information recording layer or copy the information recorded in the second information recording layer to the first information recording layer in using the information recording medium for the first time. This allows the user to immediately use the information (e.g., the content view menu) recorded in the first information recording layer.

Merely reading, from the first information recording layer, of the information recorded in common in the first information recording layer and the second information recording layer allows the user to, for example, view content. Namely, since it is unnecessary to read the information recorded in the second information recording layer, a change between the first information recording layer and the second information recording layer, which change originally requires a comparatively long time, occurs less frequently. This allows access to data in a shorter time. Further, an effect is yielded such that the information recorded in the second information recording layer can be treated as backup information for use in a case where the information recorded in the first information recording layer is lost.

The information recording medium in accordance with the present invention is preferably arranged such that information recorded in the second information recording layer is recorded in the first information recording layer after the first information recording layer is formatted.

According to the arrangement, at the time of shipping of the information recording medium, it is unnecessary to format the information recording medium so that the information recorded in the second information recording layer is recorded in the first information recording layer. This allows the disc supplier to save labor required to ship the information recording medium. Further, in a case where the information recorded in the second information recording layer is set to be automatically transferred to the first information recording layer, the user does not need to format the information recorded in the second information recording layer or copy the information recorded in the second information recording layer to the first information recording layer in using the information recording medium for the first time. This allows the user to be provided with a more convenient information recording medium.

Merely reading, from the first information recording layer, of the information recorded in common in the first information recording layer and the second information recording layer allows the user to, for example, view content. Namely, since it is unnecessary to read the information recorded in the second information recording layer, a change between the first information recording layer and the second information recording layer, which change originally requires a comparatively long time, occurs less frequently. This allows access to data in a shorter time. Further, an effect is yielded such that the information recorded in the second information recording layer can be treated as backup information for use in a case where the information recorded in the first information recording layer is lost.

The information recording medium in accordance with the present invention is preferably arranged such that the information and the first running program each of which is recorded in the second information recording layer is copied to the first information recording layer by execution of the second running program for running the second information recording layer, the second running program being recorded in the second information recording layer.

According to the arrangement, the information recorded in the second information recording layer and the first running program are formed as a prepit of the second information recording layer which is the read-only recording layer. The prepit can be easily mass-produced. Therefore, it is possible to easily produce the information recording medium having the arrangement.

Note that the information recorded in the second information recording layer and the first running program can be copied from the second information recording layer to the first information recording layer by the following method.

Specifically, in a case where no first running program and the like is recorded in the first information recording layer or in a case where the first information recording layer is unformatted, the second information recording layer is run and the second running program which is recorded in the second information recording layer so as to run the second information recording layer is executed. According to this, the first information recording layer is formatted and the information recorded in the second information recording layer and the first running program are recorded in the first information recording layer. The information recorded in the second information recording layer and the first running program are thus copied from the second information recording layer to the first information recording layer.

The above method can be implemented in a case where in using the information recording medium for the first time, the first information recording layer is formatted and a sequence in which a system transfer of the information recorded in the second information recording layer and the first running program is carried out is recorded in the second information recording layer. Such an arrangement yields an effect of reducing a burden on the drive side of the recording/reproducing device and constraints on designing of the recording/reproducing device.

The information recording medium in accordance with the present invention is preferably arranged such that the first running program and the second running program are identical.

According to the arrangement, the first running program recorded in the second information recording layer is formed as a prepit of the second information recording layer which is the read-only recording layer. The prepit can be easily mass-produced. Therefore, in a case where the first running program and the second running program are identical, the prepit can be shared and the information recording medium can be produced more easily. Further, in a case where the first running program and the second running program are identical, it is possible to save the capacity of the first information recording layer as compared to a case where the first running program and the second running program are different in recorded contents. Further, in a case where a running program is shared when used for the first time, the user feels comfortable with use of the running program.

The recording/ reproducing device in accordance with the present invention is preferably arranged such that the obtaining means obtains the layer specifying information from a management region in which identification information indicative of a structure of the information recording medium is recorded.

According to the arrangement, since the recording/reproducing device can read out the layer specifying information which is preliminarily recorded in the management region, the information recording layer which the disc supplier desires to run can be run first.

The recording/ reproducing device in accordance with the present invention is preferably arranged such that the obtaining means obtains the layer specifying information from a recordable information recording layer.

According to the arrangement, for example, the recording/reproducing device which has obtained, from the information recording medium, the layer specifying information which was written before in accordance with an instruction from the user can run an information recording layer indicated by the layer specifying information. Therefore, it is possible to preferentially run an information recording layer which was desired by the user when the information recording medium was inserted into the recording/reproducing device last time.

The recording/reproducing device in accordance with the present invention is preferably arranged to further include: writing means for writing, to the recordable information recording layer, the layer specifying information which is set in accordance with an instruction from a user.

According to the arrangement, for example, in a case where the writing means writes the layer specifying information in accordance with an instruction from the user, it is possible to specify an information recording layer which the user desires to run first. Namely, in this case, the layer specifying information recorded in the information recording medium can be changed in accordance with an intention of the user.

Alternatively, for example, also in a case where no layer specifying information is preliminarily recorded in the information recording medium, an information recording layer specified by the recording/ reproducing device can be run first next time the information recording medium is inserted into the recording/reproducing device.

The recording/reproducing device in accordance with the present invention is preferably arranged such that the layer specifying information which is written by the writing means is information for specifying a volume pack of the running layer, information for specifying a layer type of the running layer, or information for specifying a layer number of the running layer.

According to the arrangement, it is possible to recognize the running layer by use of the information for specifying a volume pack. That is, in a case where in the information recording medium having a plurality of volume packs which are logical management units, one (1) volume pack is specified by use of the information for specifying a volume pack, the recording/reproducing device can specify an information recording layer group which is a management unit that can be controlled by the recording/reproducing device. Therefore, for example, a function which the user desires to use can be run earlier.

The recording/reproducing device can recognize the running layer by use of the layer type. Namely, the recording/ reproducing device can access the running layer in accordance with the layer type. For example, in a case where the information recording medium has a two-layer structure of one (1) read-only information recording layer (ROM layer) and one (1) rewritable information recording layer (RE layer), it is possible to securely (uniquely) specify the running layer.

Assume here that the information recording medium has information recording layers of identical types (e.g., a four-layer structure of two ROM layers and two RE layers). In a case where the layer specifying information indicates the ROM layer, the recording/reproducing device accesses the ROM layer which is close to the information recording layer that is the farthest from the reproduced light entrance side. In a case where the layer specifying information indicates the RE layer, the recording/reproducing device accesses the RE layer which (i) is close to the information recording layer and (ii) is a region which allows recording of information therein. Accordingly, the layer type also allows unique determination of an information recording layer which is desired to be run first.

In a case where recording/reproducing device accesses the running layer by use of the layer number, it is possible to more securely (uniquely) carry out specification of the information recording layer to be run first with respect to the information recording medium having a four-layer structure as described above. Especially in a case where each information recording layer has a different application, it can be securely specified which application to be run first. The recording/ reproducing device in accordance with the present invention is preferably arranged such that the obtaining means obtains the layer specifying information from a storage section of the recording/reproducing device.

According to the arrangement, for example, also in a case where no layer specifying information is preliminarily recorded in the information recording medium, it is possible to specify the running layer by use of the layer specifying information stored in the storage section of the recording/reproducing device. Further, in a case where the layer specifying information stored in the storage section of the recording/reproducing device is recorded in the information recording medium, it is possible to specify an information recording layer to be run first next time the information recording medium is inserted into the recording/reproducing device.

The recording/reproducing device in accordance with the present invention is preferably arranged such that the storage section stores the layer specifying information so that the layer specifying information corresponds to each information recording medium.

According to the arrangement, in a case where disc information obtained when the information recording medium is inserted into the recording/reproducing device and the layer specifying information are managed so that the disc information and the layer specifying information correspond to each other, an information recording layer indicated by the layer specifying information stored in the storage section can be run, for example, at the time of readout of the disc information next time the same information recording medium as the currently inserted information recording medium is inserted into the recording/ reproducing device. Note that the disc information may be managed in the recording/reproducing device for each unique information recording medium or every information recording mediums of identical layer types.

The recording/ reproducing device in accordance with the present invention is preferably arranged to further include: rewriting means for rewriting the layer specifying information stored in the storage section.

According to the arrangement, for example, in a case where the rewriting means rewrites, in accordance with an instruction from the user, the layer specifying information stored in the storage section, it is possible to cause the rewritten layer specifying information to specify, as the running layer, an information recording layer indicated by the layer specifying information desired by the user. Therefore, next time the information recording medium is inserted into the recording/reproducing device, the recording/reproducing device can specify an information recording layer desired by the user as the running layer by referring to the rewritten layer specifying information without the need of obtaining the layer specifying information from the information recording medium (even if the recording/reproducing device fails to obtain the layer specifying information from the information recording medium) .

Note that it is possible to cause a computer to realize a recording/reproducing device mentioned above. In this case, (i) a control program of the recording/reproducing device for causing a computer to realize the recording/reproducing device by causing the computer to operate as each means mentioned above and (ii) a computer-readable recording medium in which the control program is recorded are both encompassed in the scope of the present invention.

The recording/reproducing device in accordance with the present invention is preferably arranged to further include: writing means for writing, to the first information recording layer, the layer specifying information which is set in accordance with an instruction from a user.

According to the arrangement, for example, in a case where the writing means writes the layer specifying information in accordance with an instruction from the user, it is possible to specify the first information recording layer which is an information recording layer that the user desires to run first. Namely, in this case, the layer specifying information recorded in the information recording medium can be changed in accordance with an intention of the user.

Alternatively, also in a case where no layer specifying information is preliminarily recorded in the information recording medium, the first information recording layer specified by the recording/ reproducing device can be run first next time the information recording medium is inserted into the recording/reproducing device.

The recording/ reproducing device in accordance with the present invention is preferably arranged such that the layer specifying information which is written by the writing means is information for specifying a volume pack of the first information recording layer which is the running layer, information for specifying a layer type of the first information recording layer, or information for specifying a layer number of the first information recording layer.

According to the arrangement, it is possible to recognize the running layer by use of the information for specifying a volume pack. That is, in a case where the information recording layer has a plurality of volume packs which are logical management units and one (1) volume pack is specified by use of the information for specifying a volume pack, the recording/reproducing device can specify an information recording layer group which is a management unit that can be controlled by the recording/reproducing device. Therefore, for example, a function which the user desires to use can be run earlier.

The recording/reproducing device can recognize the running layer by use of the layer type. Namely, the recording/reproducing device can access the running layer in accordance with the layer type. For example, in a case where the information recording medium has a two-layer structure of one (1) read-only information recording layer (ROM layer) and one (1) rewritable information recording layer (RE layer), it is possible to securely (uniquely) specify the RE layer which is the running layer.

In a case where the information recording medium has a plurality of information recording layers of identical types (e.g., a four-layer structure of two ROM layers and two RE layers), the recording/reproducing device accesses, by use of the layer specifying information indicative of the RE layer, the RE layer which (i) is close to the information recording layer that is the farthest from the reproduced light entrance side and (ii) is a region which allows recording of information therein. Accordingly, the information recording medium which has a plurality of information recording layers of identical types can also uniquely determine, by use of the layer type, the first information recording layer as the information recording layer which is desired to be run first. In a case where recording/reproducing device accesses the running layer by use of the layer number, it is possible to more securely (uniquely) carry out, with respect to the information recording medium having a four-layer structure as described above, specification, as the running layer, of the first information recording layer to be run first. Especially in a case where each information recording layer has a different application, it can be securely specified which application to be run first.

The recording/reproducing device in accordance with the present invention is preferably arranged such that the obtaining means obtains the layer specifying information from a storage section of the recording/reproducing device.

According to the arrangement, for example, also in a case where no layer specifying information is preliminarily recorded in the information recording medium, it is possible to specify the running layer by use of the layer specifying information stored in the storage section of the recording/ reproducing device. Further, in a case where the layer specifying information stored in the storage section of the recording/reproducing device is recorded in the information recording medium, it is possible to specify the first information recording layer to be run first next time the information recording medium is inserted into the recording/reproducing device.

The recording/reproducing device in accordance with the present invention is preferably arranged such that the storage section stores the layer specifying information so that the layer specifying information corresponds to each information recording medium.

According to the arrangement, in a case where disc information obtained when the information recording medium is inserted into the recording/reproducing device and the layer specifying information are managed so that the disc information and the layer specifying information correspond to each other, an information recording layer indicated by the layer specifying information stored in the storage section can be run, for example, at the time of readout of the disc information next time the same information recording medium as the currently inserted information recording medium is inserted into the recording/reproducing device. Note that the disc information may be managed in the recording/reproducing device for each unique information recording medium or every information recording mediums of identical layer types.

The recording/reproducing device in accordance with the present invention is preferably arranged to further include: rewriting means for rewriting the layer specifying information stored in the storage section.

According to the arrangement, for example, in a case where the rewriting means rewrites, in accordance with an instruction from the user, the layer specifying information stored in the storage section, it is possible to cause the rewritten layer specifying information to specify, as the running layer, the first information recording layer indicated by the layer specifying information desired by the user. Therefore, next time the information recording medium is inserted into the recording/ reproducing device, the recording/reproducing device can specify the first information recording layer desired by the user as the running layer by referring to the rewritten layer specifying information without the need of obtaining the layer specifying information from the information recording medium (even if the recording/reproducing device fails to obtain the layer specifying information from the information recording medium).

Note that it is possible to cause a computer to realize a recording/reproducing device mentioned above. In this case, (i) a control program of the recording/reproducing device for causing a computer to realize the recording/reproducing device by causing the computer to operate as each means mentioned above and (ii) a computer-readable recording medium in which the control program is recorded are both encompassed in the scope of the present invention.

### Industrial Applicability

The present invention is extensively applicable to (i) an optical information recording medium having a multilayer structure in which an ROM layer, an RE layer, and an R layer are mixed, (ii) an optical information recording/reproducing device for carrying out recording/ reproducing of information with respect to the optical information recording medium, and (iii) the like.

### Reference Signs List

- 1: Optical disc device (Recording/Reproducing device)
- 23: Layer information obtaining section (Obtaining means)
- 24: Running layer recognizing section (Recognizing means)
- 25: Layer information writing section (Writing means)
- 27: Drive-side storage section (Storage section)
- 31: Host-side control section (Rewriting means)
- 33: Display section (Display device)
- 35: Host-side storage section (Storage section)
- 100: Optical disc (Information recording medium)
- 101: Management region
- L0: (First information recording layer)
- L1: (Second information recording layer)

Support for the claims and further embodiments are defined in the following itemized list:
Item 1
   An information recording medium having a plurality of information recording layers,
   layer specifying information being recorded in the information recording medium, the layer specifying information being information for specifying an information recording layer to be run first when the information recording medium is inserted into a recording/reproducing device which carries out recording or reproduction of information with respect to the information recording medium.
Item 2
   The information recording medium as set forth in item 1, wherein the layer specifying information is recorded in (i) a management region in which identification information indicative of a structure of the information recording medium is recorded or (ii) a recordable information recording layer so as to specify, as a running layer, the information recording layer to be run first when the information recording medium is inserted into the recording/reproducing device which carries out recording or reproduction of information with respect to the information recording medium.
Item 3
   The information recording medium as set forth in item 2, wherein the layer specifying information is information for specifying a volume pack of the running layer.
Item 4
   The information recording medium as set forth in item 2, wherein the layer specifying information is information for specifying a layer type of the running layer.
Item 5
   The information recording medium as set forth in item 2, wherein the layer specifying information is information for specifying a layer number of the running layer.
Item 6
   The information recording medium as set forth in any one of items 2 through 5, wherein the layer specifying information is recorded in the management region in which identification information indicative of a structure of the information recording medium is recorded.
Item 7
   The information recording medium as set forth in any one of items 2 through 5, wherein the layer specifying information is recorded in the recordable information recording layer.
Item 8
   The information recording medium as set forth in item 1, wherein:
   the plurality of information recording layers include (i) a first information recording layer which allows additional recording of information therein or rewriting of information thereto and (ii) a second information recording layer which allows only readout of information therefrom; and
   layer specifying information is recorded for specifying the first information recording layer in priority to the second information recording layer as the information recording layer to be run first when the information recording medium is inserted into the recording/reproducing device which carries out recording or reproduction of information with respect to the information recording medium.
Item 9
   The information recording medium as set forth in item 8, wherein the layer specifying information is information for specifying a volume pack of the first information recording layer.
Item 10
   The information recording medium as set forth in item 8, wherein the layer specifying information is information for specifying a layer type of the first information recording layer.
Item 11
   The information recording medium as set forth in item 8, wherein the layer specifying information is information for specifying a layer number of the first information recording layer.
Item 12
   The information recording medium as set forth in any one of items 8 through 11, wherein the layer specifying information is recorded in a management region in which identification information indicative of a structure of the information recording medium is recorded.
Item 13
   The information recording medium as set forth in any one of items 8 through 11, wherein the layer specifying information is recorded in the second information recording layer.
Item 14
   The information recording medium as set forth in any one of items 8 through 11, wherein the layer specifying information is recorded in the first information recording layer.
Item 15
   The information recording medium as set forth in any one of items 3 through 14, wherein:
   a first running program for running an application is recorded in the first information recording layer; and
   the first running program is executed by running the first information recording layer.
Item 16
   The information recording medium as set forth in item 15, wherein the application is a content view menu in which content recorded in the information recording medium is displayed in a menu.
Item 17
   The information recording medium as set forth in item 16, wherein the application is an application for causing an external display device to display a list of the content recorded in the information recording medium, causing a user to select content which the user desires to view of the content thus displayed, and causing the display device to display the selected content.
Item 18
   The information recording medium as set forth in item 15, wherein the first running program is an operating system for controlling the recording/reproducing device.
Item 19
   The information recording medium as set forth in any one of items 15 through 18, wherein the first running program is recorded in the first information recording layer at the time of shipping of the information recording medium.
Item 20
   The information recording medium as set forth in any one of items 15 through 18, wherein the first running program is recorded in the first information recording layer after the first information recording layer is formatted.
Item 21
   The information recording medium as set forth in any one of items 15 through 20, wherein the first running program is copied from the second information recording layer to the first information recording layer.
Item 22
   The information recording medium as set forth in item 21, wherein the first running program recorded in the second information recording layer is copied to the first information recording layer by execution of a second running program for running the second information recording layer, the second running program being recorded in the second information recording layer.
Item 23
   The information recording medium as set forth in any one of items 15 through 22, wherein the application or the first running program is updated to the latest version via an externally connected network.
Item 24
   The information recording medium as set forth in item 19, wherein information recorded in the second information recording layer is recorded in the first information recording layer at the time of shipping of the information recording medium.
Item 25
   The information recording medium as set forth in item 20, wherein information recorded in the second information recording layer is recorded in the first information recording layer after the first information recording layer is formatted.
Item 26
   The information recording medium as set forth in item 21 or 22, wherein the information and the first running program each of which is recorded in the second information recording layer is copied to the first information recording layer by execution of the second running program for running the second information recording layer, the second running program being recorded in the second information recording layer.
Item 2 7
   The information recording medium as set forth in item 22 or 26, wherein the first running program and the second running program are identical.
Item 28
   A recording/reproducing device which carries out recording or reproduction of information with respect to an information recording medium having a plurality of information recording layers,
   said recording/ reproducing device comprising:
   obtaining means for obtaining layer specifying information when the information recording medium is inserted into the recording/reproducing device, the layer specifying information being information for specifying an information recording layer to be run first; and
   recognizing means for recognizing, as a running layer, the information recording layer indicated by the layer specifying information obtained by the obtaining means.
Item 29
   The recording/ reproducing device as set forth in item 28, wherein the obtaining means obtains the layer specifying information from a management region in which identification information indicative of a structure of the information recording medium is recorded.
Item 30
   The recording/reproducing device as set forth in item 28, wherein the obtaining means obtains the layer specifying information from a recordable information recording layer.
Item 31
   The recording/reproducing device as set forth in item 30, further comprising:
   writing means for writing, to the recordable information recording layer, the layer specifying information which is set in accordance with an instruction from a user.
Item 32
   The recording/reproducing device as set forth in item 31, wherein the layer specifying information which is written by the writing means is information for specifying a volume pack of the running layer, information for specifying a layer type of the running layer, or information for specifying a layer number of the running layer.
Item 33
   The recording/reproducing device as set forth in item 28, wherein the obtaining means obtains the layer specifying information from a storage section of the recording/ reproducing device.
Item 34
   The recording/reproducing device as set forth in item 33, wherein the storage section stores the layer specifying information so that the layer specifying information corresponds to each information recording medium.
Item 35
   The recording/reproducing device as set forth in item 33 or 34, further comprising:
   rewriting means for rewriting the layer specifying information stored in the storage section.
Item 36
   A method for controlling a recording/ reproducing device which carries out recording or reproduction of information with respect to an information recording medium having a plurality of information recording layers,
   said method comprising the steps of:
   (a) obtaining layer specifying information when the information recording medium is inserted into the recording/reproducing device, the layer specifying information being information for specifying an information recording layer to be run first; and
   (b) recognizing, as a running layer, the information recording layer indicated by the layer specifying information obtained in the step (a).
Item 37
   A recording/reproducing device control program which is a control program of a recording/reproducing device which carries out recording or reproduction of information with respect to an information recording medium having a plurality of information recording layers,
   said recording/reproducing device control program causing a computer to carry out the steps of:
   (a) obtaining layer specifying information when the information recording medium is inserted into the recording/ reproducing device, the layer specifying information being information for specifying an information recording layer to be run first; and
   (b) recognizing, as a running layer, the information recording layer indicated by the layer specifying information obtained in the step (a).
Item 38
   A computer-readable recording medium in which the recording/reproducing device control program recited in item 37 is recorded.
Item 39
   A recording/reproducing device which carries out recording or reproduction of information with respect to an information recording medium including (i) a first information recording layer which allows additional recording of information therein or rewriting of information thereto and (ii) a second information recording layer which allows only readout of information therefrom,
   said recording/reproducing device comprising:
   obtaining means for obtaining layer specifying information when the information recording medium is inserted into the recording/reproducing device, the layer specifying information being information for specifying the first information recording layer in priority to the second information recording layer as an information recording layer to be run first; and
   recognizing means for recognizing, as a running layer, the first information recording layer indicated by the layer specifying information obtained by the obtaining means.
Item 40
   The recording/reproducing device as set forth in item 39, further comprising:
   writing means for writing, to the first information recording layer, the layer specifying information which is set in accordance with an instruction from a user.
Item 41
   The recording/reproducing device as set forth in item 40, wherein the layer specifying information which is written by the writing means is information for specifying a volume pack of the first information recording layer which is the running layer, information for specifying a layer type of the first information recording layer, or information for specifying a layer number of the first information recording layer.
Item 42
   The recording/reproducing device as set forth in any one of items 39 through 41, wherein the obtaining means obtains the layer specifying information from a storage section of the recording/reproducing device.
Item 43
   The recording/reproducing device as set forth in item 42, wherein the storage section stores the layer specifying information so that the layer specifying information corresponds to each information recording medium.
Item 44
   The recording/reproducing device as set forth in item 42 or 43, further comprising:
   rewriting means for rewriting the layer specifying information stored in the storage section.
Item 45
   A method for controlling a recording/reproducing device which carries out recording or reproduction of information with respect to an information recording medium including (i) a first information recording layer which allows additional recording of information therein or rewriting of information thereto and (ii) a second information recording layer which allows only readout of information therefrom,
   said method comprising the steps of:
   (a) obtaining layer specifying information when the information recording medium is inserted into the recording/reproducing device, the layer specifying information being information for specifying the first information recording layer in priority to the second information recording layer as an information recording layer to be run first; and
   (b) recognizing, as a running layer, the first information recording layer indicated by the layer specifying information obtained in the step (a).
Item 46
   A recording/ reproducing device control program which is a control program of a recording/reproducing device which carries out recording or reproduction of information with respect to an information recording medium including (i) a first information recording layer which allows additional recording of information therein or rewriting of information thereto and (ii) a second information recording layer which allows only readout of information therefrom,
   said recording/reproducing device control program causing a computer to carry out the steps of:
   (a) obtaining layer specifying information when the information recording medium is inserted into the recording/reproducing device, the layer specifying information being information for specifying the first information recording layer in priority to the second information recording layer as an information recording layer to be run first; and
   (b) recognizing, as a running layer, the first information recording layer indicated by the layer specifying information obtained in the step (a).
Item 47
   A computer-readable recording medium in which the recording/reproducing device control program recited in item 46 is recorded.

## Claims

1. An information recording medium having a plurality of information recording layers,
layer specifying information being recorded in the information recording medium, the layer specifying information being information for specifying an information recording layer to be run first when the information recording medium is inserted into a recording/ reproducing device which carries out recording or reproduction of information with respect to the information recording medium, wherein
the plurality of information recording layers include (i) a first information recording layer which allows additional recording of information therein or rewriting of information thereto and (ii) a second information recording layer which allows only readout of information therefrom; and
layer specifying information is recorded for specifying the first information recording layer in priority to the second information recording layer as the information recording layer to be run first when the information recording medium is inserted into the recording/reproducing device which carries out recording or reproduction of information with respect to the information recording medium.

2. The information recording medium as set forth in claim 1, wherein the layer specifying information is information for specifying a volume pack of the first information recording layer.

3. The information recording medium as set forth in claim 1, wherein the layer specifying information is information for specifying a layer type of the first information recording layer.

4. The information recording medium as set forth in claim 1, wherein the layer specifying information is information for specifying a layer number of the first information recording layer.

5. The information recording medium as set forth in any one of claims 1 through 4, wherein the layer specifying information is recorded in a management region in which identification information indicative of a structure of the information recording medium is recorded.

6. The information recording medium as set forth in any one of claims 1 through 4, wherein the layer specifying information is recorded in the second information recording layer.

7. The information recording medium as set forth in any one of claims 1 through 4, wherein the layer specifying information is recorded in the first information recording layer.

8. The information recording medium as set forth in any one of claims 1 through 7, wherein:
a first running program for running an application is recorded in the first information recording layer; and
the first running program is executed by running the first information recording layer.

9. The information recording medium as set forth in claim 8, wherein the application is a content view menu in which content recorded in the information recording medium is displayed in a menu.

10. The information recording medium as set forth in claim 9, wherein the application is an application for causing an external display device to display a list of the content recorded in the information recording medium, causing a user to select content which the user desires to view of the content thus displayed, and causing the display device to display the selected content.

11. The information recording medium as set forth in claim 8, wherein the first running program is an operating system for controlling the recording/reproducing device.

12. The information recording medium as set forth in any one of claims 8 through 11, wherein the first running program is recorded in the first information recording layer at the time of shipping of the information recording medium.

13. The information recording medium as set forth in any one of claims 8 through 11, wherein the first running program is recorded in the first information recording layer after the first information recording layer is formatted.

14. The information recording medium as set forth in any one of claims 8 through 13, wherein the first running program is copied from the second information recording layer to the first information recording layer.

15. The information recording medium as set forth in claim 14, wherein the first running program recorded in the second information recording layer is copied to the first information recording layer by execution of a second running program for running the second information recording layer, the second running program being recorded in the second information recording layer.

16. The information recording medium as set forth in any one of claims 8 through 15, wherein the application or the first running program is updated to the latest version via an externally connected network.

17. The information recording medium as set forth in claim 12, wherein information recorded in the second information recording layer is recorded in the first information recording layer at the time of shipping of the information recording medium.

18. The information recording medium as set forth in claim 13, wherein information recorded in the second information recording layer is recorded in the first information recording layer after the first information recording layer is formatted.

19. The information recording medium as set forth in claim 14 or 15, wherein the information and the first running program each of which is recorded in the second information recording layer is copied to the first information recording layer by execution of the second running program for running the second information recording layer, the second running program being recorded in the second information recording layer.

20. The information recording medium as set forth in claim 15 or 19, wherein the first running program and the second running program are identical.

21. A recording/reproducing device which carries out recording or reproduction of information with respect to an information recording medium including (i) a first information recording layer which allows additional recording of information therein or rewriting of information thereto and (ii) a second information recording layer which allows only readout of information therefrom,
said recording/reproducing device comprising:
obtaining means for obtaining layer specifying information when the information recording medium is inserted into the recording/reproducing device, the layer specifying information being information for specifying the first information recording layer in priority to the second information recording layer as an information recording layer to be run first; and
recognizing means for recognizing, as a running layer, the first information recording layer indicated by the layer specifying information obtained by the obtaining means.

22. The recording/ reproducing device as set forth in claim 21, further comprising:
writing means for writing, to the first information recording layer, the layer specifying information which is set in accordance with an instruction from a user.

23. The recording/ reproducing device as set forth in claim 22, wherein the layer specifying information which is written by the writing means is information for specifying a volume pack of the first information recording layer which is the running layer, information for specifying a layer type of the first information recording layer, or information for specifying a layer number of the first information recording layer.

24. The recording/ reproducing device as set forth in any one of claims 21 through 23, wherein the obtaining means obtains the layer specifying information from a storage section of the recording/reproducing device.

25. The recording/ reproducing device as set forth in claim 24, wherein the storage section stores the layer specifying information so that the layer specifying information corresponds to each information recording medium.

26. The recording/ reproducing device as set forth in claim 24 or 25, further comprising:
rewriting means for rewriting the layer specifying information stored in the storage section.

27. A method for controlling a recording/ reproducing device which carries out recording or reproduction of information with respect to an information recording medium including (i) a first information recording layer which allows additional recording of information therein or rewriting of information thereto and (ii) a second information recording layer which allows only readout of information therefrom,
said method comprising the steps of:
(a) obtaining layer specifying information when the information recording medium is inserted into the recording/reproducing device, the layer specifying information being information for specifying the first information recording layer in priority to the second information recording layer as an information recording layer to be run first; and
(b) recognizing, as a running layer, the first information recording layer indicated by the layer specifying information obtained in the step (a).

28. A recording/reproducing device control program which is a control program of a recording/ reproducing device which carries out recording or reproduction of information with respect to an information recording medium including (i) a first information recording layer which allows additional recording of information therein or rewriting of information thereto and (ii) a second information recording layer which allows only readout of information therefrom,
said recording/reproducing device control program causing a computer to carry out the steps of:
(a) obtaining layer specifying information when the information recording medium is inserted into the recording/ reproducing device, the layer specifying information being information for specifying the first information recording layer in priority to the second information recording layer as an information recording layer to be run first; and
(b) recognizing, as a running layer, the first information recording layer indicated by the layer specifying information obtained in the step (a).

29. A computer-readable recording medium in which the recording/reproducing device control program recited in claim 28 is recorded.
